(19)

Europäisches Patentamt

European Patent Office

Office européen des brevets

(11) **EP 4 543 119 A1**

(12) **EUROPEAN PATENT APPLICATION**
published in accordance with Art. 153(4) EPC

(43) Date of publication:
**23.04.2025 Bulletin 2025/17**

(21) Application number: **23838866.4**

(22) Date of filing: **07.07.2023**

(51) International Patent Classification (IPC):
*H04W 72/0446* (2023.01)

(52) Cooperative Patent Classification (CPC):
**H04W 72/0446**

(86) International application number:
**PCT/CN2023/106363**

(87) International publication number:
**WO 2024/012374 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2022 CN 202210824434
11.08.2022 CN 202210963173**

(71) Applicant: **Huawei Technologies Co., Ltd.
Shenzhen, Guangdong 518129 (CN)**

(72) Inventors:
• LIU, Yun
  **Shenzhen, Guangdong 518129 (CN)**
• LI, Chao
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **RESOURCE CONFIGURATION METHOD AND DEVICE**

(57) Embodiments of this application provide a resource configuration method and a device. According to this method, a first terminal device may reserve N resources based on listen before talk LBT durations corresponding to N transmission requirements. Because the LBT durations are considered, cases in which an LBT duration of a transmission requirement has not ended when a resource corresponding to the transmission requirement arrives can be reduced, so that a probability that the first terminal device can transmit data on the resource corresponding to the transmission requirement can be increased, thereby ensuring communication efficiency of the terminal device.

First terminal device

S301: Obtain LBT durations corresponding to N transmission requirements

S302: Determine N resources based on the LBT durations corresponding to the N transmission requirements

Transmit data on the N resources

Second terminal device

FIG. 3

**Description**

**CROSS-REFERENCE TO RELATED APPLICATIONS**

This application claims priorities to Chinese Patent Application No. 202210824434.8, filed with the China National Intellectual Property Administration on July 13, 2022 and entitled "SIDELINK TRANSMISSION METHOD", and to Chinese Patent Application No. 202210963173.8, filed with the China National Intellectual Property Administration on August 11, 2022 and entitled "RESOURCE CONFIGURATION METHOD AND DEVICE", both of which are incorporated herein by reference in their entireties.

**TECHNICAL FIELD**

This application relates to the field of communication technologies, and in particular, to a resource configuration method and a device.

**BACKGROUND**

With development and evolution of communication technologies, a 4th generation (4th generation, 4G) communication system (namely, a long term evolution Long Term Evolution, LTE) system) can support communication between devices since 3rd generation partnership project (3rd Generation Partnership Project, 3GPP) release (release) 12. This communication mode may be referred to as device-to-device (Device-to-Device, D2D) communication or sidelink (sidelink, SL) communication.

For example, during Release 14 and Release 15, 3GPP introduces support for vehicle-to-vehicle (vehicle-to-vehicle, V2V) and vehicle-to-everything (vehicle-to-everything, V2X) services into the LTE system, to extend a 3GPP platform to the automobile industry. During Release 16, related design of new radio (new radio, NR) V2X is studied.

In a sidelink system, a terminal device may reserve, in one transmission, a plurality of inconsecutive resources for subsequent transmission, and perform transmission on the resources. For example, when the terminal device needs to transmit data, the terminal device reserves a plurality of inconsecutive resources for retransmission of to-be-transmitted data. A specific gap is required between resources, and a minimum value of a gap between any two resources is referred to as a minimum gap (minimum gap). The terminal device may receive, within the gap, an acknowledgment response corresponding to a preceding transmission and a processing delay for the acknowledgment response. Therefore, the minimum gap needs to be greater than or equal to a delay of transmitting the corresponding acknowledgment response and a delay of processing the acknowledgment response by the terminal device.

For example, after the terminal device transmits the data on a first resource, if the terminal device receives a success acknowledgment within a gap between the first resource and an adjacent second resource, the terminal device may not retransmit the data on the second resource after the first resource, or transmit other data on the second resource, to avoid a resource waste.

However, a channel status is not considered in the foregoing resource configuration solution. Therefore, when data is transmitted by using the foregoing resource configuration solution, communication efficiency of the terminal device may be affected.

**SUMMARY**

This application provides a resource configuration method and a device, to ensure communication efficiency of a terminal device.

According to a first aspect, an embodiment of this application provides a resource configuration method. The method may be applied to a first terminal device in an SL-U system. The method includes the following steps: obtaining listen before talk LBT durations corresponding to N transmission requirements, where N is an integer greater than or equal to 1; and determining N resources based on the LBT durations corresponding to the N transmission requirements, where the N resources are in one-to-one correspondence with the N transmission requirements, and when N is an integer greater than 1, a gap between any two resources is greater than or equal to a minimum gap.

According to this method, the first terminal device may reserve the resources based on the LBT durations corresponding to the N transmission requirements. Because the LBT durations are considered, cases in which an LBT duration of a transmission requirement has not ended when a resource corresponding to the transmission requirement arrives can be reduced, so that a probability that the first terminal device can transmit data on the resource corresponding to the transmission requirement can be increased, thereby ensuring communication efficiency of the terminal device.

In a possible design, the first terminal device may perform the following steps to determine the N resources based on the LBT durations corresponding to the N transmission requirements:

determining an $n^{th}$ start time based on an LBT duration corresponding to an $n^{th}$ transmission requirement, where n is a positive integer, $1 \leq n \leq N$, and the $n^{th}$ start time is a start time of a resource selection range of the $n^{th}$ transmission requirement; and determining, based on the $n^{th}$ start time, a resource corresponding to the $n^{th}$ transmission requirement.

According to this design, the first terminal device may determine a start time of a resource selection range of each transmission requirement based on an LBT duration corresponding to each transmission requirement, and then may determine, based on the start time of the resource selection range of each transmission requirement, a resource corresponding to each transmission requirement. Certainly, a resource corresponding to any transmission requirement is not earlier than a start time of a resource selection range of the transmission requirement. Because the start time of the resource selection range of each transmission requirement is determined based on the LBT duration corresponding to the transmission requirement, this design can reduce cases in which an LBT duration of a transmission requirement has not ended when a resource corresponding to the transmission requirement arrives.

In a possible design, the first terminal device includes a physical PHY layer and a medium access control MAC layer.

In a possible design, the PHY layer may determine the $n^{th}$ start time based on the LBT duration corresponding to the $n^{th}$ transmission requirement.

In a possible design, the first terminal device may perform the following steps to determine the resource corresponding to the $n^{th}$ transmission requirement:

Manner 1: The PHY layer sends the $n^{th}$ start time to the MAC layer. The MAC layer determines the resource selection range of the $n^{th}$ transmission requirement based on the $n^{th}$ start time. The MAC layer determines, within the resource selection range of the $n^{th}$ transmission requirement, the resource corresponding to the $n^{th}$ transmission requirement.

Manner 2: The PHY layer determines the resource selection range of the $n^{th}$ transmission requirement based on the $n$th start time. The PHY layer sends the resource selection range of the $n^{th}$ transmission requirement to the MAC layer. The MAC layer determines, within the resource selection range of the $n^{th}$ transmission requirement, the resource corresponding to the $n^{th}$ transmission requirement.

Manner 3: The PHY layer determines a start time unit of the resource selection range of the $n^{th}$ transmission requirement based on the $n^{th}$ start time. The PHY layer sends the start time unit of the resource selection range of the $n^{th}$ transmission requirement and a candidate resource set to the MAC layer. The MAC layer determines, in the candidate resource set based on the start time unit of the resource selection range of the $n^{th}$ transmission requirement, the resource corresponding to the $n^{th}$ transmission requirement.

Manner 4: The PHY layer determines a candidate resource set of the $n^{th}$ transmission requirement based on the $n^{th}$ start time. The PHY layer sends the candidate resource set of the $n^{th}$ transmission requirement to the MAC layer. The MAC layer determines, in the candidate resource set of the $n^{th}$ transmission requirement, the resource corresponding to the $n^{th}$ transmission requirement.

Any candidate resource set includes at least one candidate resource.

According to this design, the first terminal device may determine, in a plurality of manners, the resource corresponding to the $n^{th}$ transmission requirement.

In a possible design, when determining, in parallel, the resource corresponding to each of the N transmission requirements, the first terminal device needs to ensure that a gap between any two determined resources is greater than or equal to the minimum gap.

In a possible design, the first terminal device/MAC layer may first determine, in a reverse chronological order of time domain locations, a resource corresponding to an $N^{th}$ transmission requirement, and then determine, by meeting a requirement of the minimum gap, a resource corresponding to an $(N-1)^{th}$ transmission requirement, until a resource corresponding to the first transmission requirement is determined.

In a possible design, the first terminal device/MAC layer may first determine, in ascending order of sizes of resource selection ranges, a resource corresponding to a transmission requirement with a smallest resource selection range, and then determine, by meeting a requirement of the minimum gap, a resource corresponding to a transmission requirement with a second smallest resource selection range, until a resource corresponding to a transmission requirement with a largest resource selection range is determined.

In a possible design, the first terminal device/MAC layer may first select, in ascending order of sizes of time domain ranges of candidate resource sets, a resource from a candidate resource set with a smallest time domain range, and then select, by meeting a requirement of the minimum gap, a next resource from a candidate resource set with a second smallest time domain range, until a resource is selected from a candidate resource set with a largest time domain range.

According to the foregoing several designs, it can be ensured that a gap between any two of the N resources determined by the first terminal device is greater than or equal to the minimum gap.

In a possible design, the $n^{th}$ start time meets $t_0 + T_n$, and $T_n$ meets the following formula:

$$T_n = max \left\{ \left\lceil \frac{t_{n,LBT}}{t_s} \right\rceil \times t_s, T_{offset} \right\};$$

or

$$T_n = max \left\{ \left\lceil \frac{t_{n,LBT}+t_{cpe}}{t_s} \right\rceil \times t_s, T_{offset} \right\},$$

where

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; and $t_{cpe}$ is a duration of a cyclic prefix extension.

According to this design, sufficient time is reserved for the first terminal device to perform LBT before the $n^{th}$ start time. Therefore, this design can reduce a probability that the LBT duration of the $n^{th}$ transmission requirement has not ended when the resource corresponding to the $n^{th}$ transmission requirement arrives, thereby increasing a probability that the first terminal device can transmit data on the resource corresponding to the $n^{th}$ transmission requirement.

In a possible design, the first terminal device may perform the following step to determine the $n^{th}$ start time based on the LBT duration corresponding to the $n^{th}$ transmission requirement:

determining the $n^{th}$ start time based on the LBT duration corresponding to the $n^{th}$ transmission requirement and a resource corresponding to a preceding transmission requirement of the $n^{th}$ transmission requirement, where the preceding transmission requirement of the $n^{th}$ transmission requirement is a transmission requirement whose resource is located before the resource of the $n^{th}$ transmission requirement in the N transmission requirements.

In a process in which the first terminal device performs LBT for the $n^{th}$ transmission requirement, before the resource corresponding to the $n^{th}$ transmission requirement arrives, the first terminal device transmits data on the resource corresponding to the preceding transmission requirement of the $n^{th}$ transmission requirement. Therefore, a channel is occupied at a location of the resource corresponding to the preceding transmission requirement. As a result, an actual duration within which the first terminal device performs LBT for the $n^{th}$ transmission requirement may be longer. Based on this, when determining the start time of the resource selection range of the $n^{th}$ transmission requirement, the first terminal device needs to consider both the LBT duration corresponding to the $n^{th}$ transmission requirement and the resource corresponding to the preceding transmission requirement of the $n^{th}$ transmission requirement. According to this design, sufficient time is reserved for the first terminal device to perform LBT before the $n^{th}$ start time. Therefore, this design can reduce a probability that the LBT duration of the $n^{th}$ transmission requirement has not ended when the resource corresponding to the $n^{th}$ transmission requirement arrives, thereby increasing a probability that the first terminal device can transmit data on the resource corresponding to the $n^{th}$ transmission requirement.

In a possible design, the $n^{th}$ start time meets $t_0 + T_n$, and $T_n$ meets the following formula:

$$T_n = max \left\{ \left\lceil \frac{t_{n,LBT}}{t_s} \right\rceil \times t_s + \sum_{i=1}^{n-1} t_{i,R}, T_{offset} \right\};$$

or

$$T_n = max \left\{ \left\lceil \frac{t_{n,LBT}}{t_s} + \sum_{i=1}^{n-1} S_{i,R} \right\rceil \times t_s, T_{offset} \right\};$$

or

$$T_n = max \left\{ \left\lceil \frac{t_{n,LBT}+t_{cpe}}{t_s} \right\rceil \times t_s + \sum_{i=1}^{n-1} t_{i,R}, T_{offset} \right\};$$

or

$$T_n = max \left\{ \left\lceil \frac{t_{n,LBT}+t_{cpe}}{t_s} + \sum_{i=1}^{n-1} S_{i,R} \right\rceil \times t_s, T_{offset} \right\},$$

where

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an

$i^{th}$ preceding transmission requirement of the $n^{th}$ transmission requirement; $\sum_{i=1}^{n-1} t_{i,R}$ is a sum of durations of resources corresponding to n - 1 preceding transmission requirements of the $n^{th}$ transmission requirement; $S_{i,R}$ is a quantity of time units occupied by the resource corresponding to the $i^{th}$ preceding transmission requirement of the $n^{th}$ transmission requirement; and $\sum_{i=1}^{n-1} S_{i,R}$ is a sum of quantities of time units occupied by the resources corresponding to the n - 1 preceding transmission requirements of the $n^{th}$ transmission requirement.

According to this design, sufficient time is reserved for the first terminal device to perform LBT before the $n^{th}$ start time. Therefore, this design can reduce a probability that the LBT duration of the $n^{th}$ transmission requirement has not ended when the resource corresponding to the $n^{th}$ transmission requirement arrives, thereby increasing a probability that the first terminal device can transmit data on the resource corresponding to the $n^{th}$ transmission requirement.

In a possible design, the first terminal device may perform the following step to determine the $n^{th}$ start time based on the LBT duration corresponding to the $n^{th}$ transmission requirement:

determining the $n^{th}$ start time based on the LBT duration corresponding to the $n^{th}$ transmission requirement, a resource corresponding to a preceding transmission requirement of the $n^{th}$ transmission requirement, and a resource corresponding to a preceding acknowledgment response of the $n^{th}$ transmission requirement, where the preceding transmission requirement of the $n^{th}$ transmission requirement is a transmission requirement whose resource is located before the resource of the $n^{th}$ transmission requirement in the N transmission requirements, and the preceding acknowledgment response of the $n^{th}$ transmission requirement includes an acknowledgment response that is to be received by the first terminal device or another terminal device before the resource corresponding to the $n^{th}$ transmission requirement.

In a process in which the first terminal device performs LBT for the $n^{th}$ transmission requirement, before the resource corresponding to the $n^{th}$ transmission requirement arrives, the first terminal device transmits data on the resource corresponding to the preceding transmission requirement of the $n^{th}$ transmission requirement, and the first terminal device or another terminal device receives an acknowledgment response on the resource corresponding to the preceding acknowledgment response. Therefore, a channel is occupied at a location of the resource corresponding to the preceding transmission requirement and the resource corresponding to the preceding acknowledgment response. As a result, an actual duration within which the first terminal device performs LBT for the $n^{th}$ transmission requirement may be longer. Based on this, when determining the start time of the resource selection range of the $n^{th}$ transmission requirement, the first terminal device needs to consider the LBT duration corresponding to the $n^{th}$ transmission requirement, the resource corresponding to the preceding transmission requirement of the $n^{th}$ transmission requirement, and the resource corresponding to the preceding acknowledgment response. According to this design, sufficient time is reserved for the first terminal device to perform LBT before the $n^{th}$ start time. Therefore, this design can reduce a probability that the LBT duration of the $n^{th}$ transmission requirement has not ended when the resource corresponding to the $n^{th}$ transmission requirement arrives, thereby increasing a probability that the first terminal device can transmit data on the resource corresponding to the $n^{th}$ transmission requirement.

In a possible design, the preceding acknowledgment response of the $n^{th}$ transmission requirement includes an acknowledgment response of the preceding transmission requirement of the $n^{th}$ transmission requirement; or the preceding acknowledgment response of the $n^{th}$ transmission requirement includes the acknowledgment response of the preceding transmission requirement of the $n^{th}$ transmission requirement and an acknowledgment response of at least one first transmission, where the first transmission is a transmission that is detected by the first terminal device and for which no acknowledgment response is received.

In a possible design, the $n^{th}$ start time meets $t_0 + T_n$, and $T_n$ meets the following formula:

$$T_n = max\left\{\left\lceil \frac{t_{n,LBT}}{t_s} \right\rceil \times t_s + \sum_{i=1}^{n-1} t_{i,R} + t_{n,HARQ}, T_{offset}\right\};$$

or

$$T_n = max\left\{\left\lceil \frac{t_{n,LBT}}{t_s} + \sum_{i=1}^{n-1} S_{i,R} + S_{n,HARQ} \right\rceil \times t_s, T_{offset}\right\};$$

or

$$T_n = max\left\{\left\lceil \frac{t_{n,LBT}+t_{cpe}}{t_s} \right\rceil \times t_s + \sum_{i=1}^{n-1} t_{i,R} + t_{n,HARQ}, T_{offset}\right\};$$

or

$$T_n = max\left\{\left\lceil\frac{t_{n,LBT}+t_{cpe}}{t_s} + \sum_{i=1}^{n-1} S_{i,R} + S_{n,HARQ}\right\rceil \times t_s, T_{offset}\right\},$$

where

$t_0$ is a time at which the transmission requirements occur on the first terminal device; $t_{n,LBT}$ is the LBT duration corresponding to the $n$th transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an $i$th preceding transmission requirement of the $n$th transmission requirement; $\sum_{i=1}^{n-1} t_{i,R}$ is a sum of durations of resources corresponding to $n$ - 1 preceding transmission requirements of the $n$th transmission requirement; $t_{n,HARQ}$ is a total duration of the resource corresponding to the preceding acknowledgment response of the $n$th transmission requirement; $S_{i,R}$ is a quantity of time units occupied by the resource corresponding to the $i$th preceding transmission requirement of the $n$th transmission requirement; $\sum_{i=1}^{n-1} S_{i,R}$ is a sum of quantities of time units occupied by the resources corresponding to the $n$ - 1 preceding transmission requirements of the $n$th transmission requirement; and $S_{n,HARQ}$ is a total quantity of time units occupied by the resource corresponding to the preceding acknowledgment response of the $n$th transmission requirement.

According to this design, sufficient time is reserved for the first terminal device to perform LBT before the $n$th start time. Therefore, this design can reduce a probability that the LBT duration of the $n$th transmission requirement has not ended when the resource corresponding to the $n$th transmission requirement arrives, thereby increasing a probability that the first terminal device can transmit data on the resource corresponding to the $n$th transmission requirement.

In a possible design, the first terminal device may further perform the following steps:
in a process of transmitting data on the N resources, determining that the LBT duration corresponding to the $n$th transmission requirement has not ended; re-determining an $n$th start time based on a remaining LBT duration corresponding to the $n$th transmission requirement; and re-determining, based on the re-determined $n$th start time, a resource corresponding to the $n$th transmission requirement.

In a process in which the first terminal device transmits the data on the N resources, when a resource corresponding to a transmission requirement arrives, LBT performed for the transmission requirement may have not ended (in other words, an LBT duration corresponding to the transmission requirement has not ended). In this case, the first terminal device may further reselect a resource for the transmission requirement, to ensure data transmission reliability.

In a possible design, the determining that the LBT duration corresponding to the $n$th transmission requirement has not ended includes at least one of the following: determining, at a first time, that the LBT duration corresponding to the $n$th transmission requirement has not ended; or determining that a first duration is less than the remaining LBT duration corresponding to the $n$th transmission requirement. The first time is located before a start time of the resource corresponding to the $n$th transmission requirement, or the first time is the start time of the resource corresponding to the $n$th transmission requirement; and the first duration is a duration between the first time and the start time of the resource corresponding to the $n$th transmission requirement.

In a possible design, before transmitting the data on the N resources, the first terminal device may further determine a $k$th start time based on an LBT duration corresponding to a $k$th transmission requirement, where the $k$th transmission requirement is a subsequent transmission requirement of the $n$th transmission requirement, k is a positive integer, $n < k \leq$ N, and the $k$th start time is a start time of a resource selection range of the $k$th transmission requirement; and determine, based on the $k$th start time, a resource corresponding to the $k$th transmission requirement. After determining that the LBT duration corresponding to the $n$th transmission requirement has not ended, the first terminal device may further re-determine a $k$th start time based on a remaining LBT duration corresponding to the $k$th transmission requirement, or re-determine a $k$th start time based on the remaining LBT duration corresponding to the $n$th transmission requirement and the minimum gap; and re-determine, based on the re-determined $k$th start time, a resource corresponding to the $k$th transmission requirement, where a gap between any two re-determined resources is greater than or equal to the minimum gap.

When there is a subsequent transmission requirement of the $n$th transmission requirement in the N transmission requirements, the change of the resource corresponding to the $n$th transmission requirement may result in that a gap between any two resources does not meet a condition of the minimum gap or an LBT duration corresponding to the subsequent transmission requirement has not ended when a start time of the subsequent transmission requirement arrives. Therefore, to ensure availability of a resource corresponding to the subsequent transmission requirement, the first terminal device may further re-determine the resource corresponding to the subsequent transmission requirement.

In a possible design, before transmitting the data on the N resources, the first terminal device may further determine a $k$th start time based on an LBT duration corresponding to a $k$th transmission requirement, where the $k$th transmission requirement is a subsequent transmission requirement of the $n$th transmission requirement, k is a positive integer, $n < k \leq$ N, and the $k$th start time is a start time of a resource selection range of the $k$th transmission requirement; and determine, based on the $k$th start time, a resource corresponding to the $k$th transmission requirement. After determining that the LBT duration corresponding to the $n^{th}$ transmission requirement has not ended, the first terminal device determines that a second duration is less than a remaining LBT duration corresponding to the $k^{th}$ transmission requirement, or determines that a second time after the second duration elapses since the first time is later than the start time of the resource corresponding to the $k^{th}$ transmission requirement, where the second duration is a sum of the remaining LBT duration corresponding to the $n^{th}$ transmission requirement and $(k - n)$ minimum gaps, and the first time is a time at which it is determined that the LBT duration corresponding to the $n^{th}$ transmission requirement has not ended; re-determines a $k^{th}$ start time based on the remaining LBT duration corresponding to the $k^{th}$ transmission requirement, or re-determines a $k^{th}$ start time based on the remaining LBT duration corresponding to the $n^{th}$ transmission requirement and the minimum gap; and re-determines, based on the re-determined $k^{th}$ start time, a resource corresponding to the $k^{th}$ transmission requirement, where a gap between any two re-determined resources is greater than or equal to the minimum gap.

When there is a subsequent transmission requirement of the $n^{th}$ transmission requirement in the N transmission requirements, the change of the resource corresponding to the $n^{th}$ transmission requirement may result in that a gap between any two resources does not meet a condition of the minimum gap or an LBT duration corresponding to the subsequent transmission requirement has not ended when a start time of the subsequent transmission requirement arrives. Therefore, to ensure availability of a resource corresponding to the subsequent transmission requirement, the first terminal device may further determine whether the resource corresponding to the subsequent transmission requirement needs to be re-determined, and perform re-determining only when the resource corresponding to the subsequent transmission requirement has an unavailability risk.

In a possible design, the first terminal device may determine N start times based on the LBT durations corresponding to the N transmission requirements, where a $j^{th}$ start time in the N start times is a start time of a resource selection range of a $j^{th}$ transmission requirement in the N transmission requirements; and when none of the N start times exceeds a third time, determine, based on the $n^{th}$ start time, the resource corresponding to the $n^{th}$ transmission requirement. The third time is a time after a third duration elapses since the time at which the transmission requirements occur on the first terminal device, and a value of the third duration is determined based on a data transmission delay of the first terminal device.

According to this design, because the start time of the resource selection range of each transmission requirement does not exceed the third time, when the first terminal device transmits the data on the N determined resources, it can be ensured that a data delay falls within a data transmission delay range of the first terminal device.

In a possible design, when a $g^{th}$ start time exceeds the third time (where g is a positive integer, and $1 \leq g \leq N$), the first terminal device may further implement resource configuration in the following manners:

manner 1: sending a first resource request to a second terminal device; and receiving first resource configuration information from the second terminal device, where the first resource configuration information indicates a resource allocated by the second terminal device to the first terminal device, the second terminal device is a receive end of the N transmission requirements, and a transmission resource occupied by the first resource request is pre-negotiated between the first terminal device and the second terminal device or agreed on in a protocol;

manner 2: sending a second resource request to a network device; and receiving second resource configuration information from the network device, where the second resource configuration information indicates a resource allocated by the network device to the first terminal device; or

manner 3: sending the data on a resource on which a remaining channel occupancy time COT of the second terminal device is located, where the second terminal device is the receive end of the N transmission requirements.

When a start time of a resource selection range of a transmission requirement exceeds the third time, even if the first terminal device determines the N resources corresponding to the N transmission requirements, it may not be ensured that a data delay falls within the data transmission delay range of the first terminal device. Based on this, the first terminal device may continue to send the data on the resource on which the remaining COT of the second terminal device or the network device is located, to ensure a data transmission delay.

In a possible design, the first terminal device may obtain LBT durations corresponding to M transmission requirements, where the M transmission requirements include the N transmission requirements, and M is an integer greater than N; and determine M start times based on the LBT durations corresponding to the M transmission requirements, where an $m^{th}$ start time in the M start times is a start time of a resource selection range of an $m^{th}$ transmission requirement in the M transmission requirements, m is a positive integer, and $1 \leq m \leq M$. In the M transmission requirements, start times of resource selection ranges of the N transmission requirements do not exceed a third time, and a start time of a resource selection range of a transmission requirement other than the N transmission requirements exceeds the third time, where the third time is a time after a third duration elapses since a time at which the transmission requirements occur on the first terminal device, and a value of the third duration is determined based on a data transmission delay of the first terminal device. The first terminal device determines the resources corresponding to the N transmission requirements, and does not determine a resource corresponding to the transmission requirement other than the N transmission requirements in the M transmission requirements. In the foregoing case, after transmitting the data on the N resources, the first terminal device may determine, based on transmission results indicated by acknowledgment responses of the N resources, whether to continue to send the data on a resource on which a remaining COT of a second terminal device or a network device is located, where the second terminal device is a receive end of the N transmission requirements.

When only a part (that is, the N transmission requirements) of the M transmission requirements have start times of resource selection ranges exceeding the third time, the first terminal device may determine only resources corresponding to this part of transmission requirements. In this way, after transmitting the data on the resources corresponding to the N transmission requirements, the first terminal device determines, based on transmission results indicated by acknowledgment responses of the N transmission requirements, whether to continue to send the data on the resource on which the remaining COT of the second terminal device or the network device is located. When the transmission results indicated by the acknowledgment responses of the N transmission requirements indicate a data transmission success, the first terminal device does not need to seek another resource configuration manner. When the transmission results indicated by the acknowledgment responses of the N transmission requirements indicate a data transmission failure, the first terminal device may continue to transmit the data in the resource configuration manner in the foregoing design.

Optionally, when the transmission requirements occur on the first terminal device, LBT starts to be performed; or in a process of determining the N resources, LBT starts to be performed; or after the N resources are determined, LBT starts to be performed.

Optionally, when the PHY layer sends the $n^{th}$ start time to the MAC layer, LBT starts to be performed; or when the PHY layer sends the resource selection range of the $n^{th}$ transmission requirement to the MAC layer, LBT starts to be performed; or when the PHY layer sends the start time unit of the resource selection range of the $n^{th}$ transmission requirement and the candidate resource set to the MAC layer, LBT starts to be performed; or when the PHY layer sends the candidate resource set of the $n^{th}$ transmission requirement to the MAC layer, LBT starts to be performed; or when the MAC layer notifies the PHY layer of the resource corresponding to the $n^{th}$ transmission requirement, LBT starts to be performed.

According to a second aspect, an embodiment of this application provides a communication method. The method may be applied to a terminal device in an SL-U system. The method includes:

selecting a first resource from a first frequency band; and transmitting target data on a second resource in a second frequency band. A bandwidth of the first frequency band is greater than a bandwidth of the second frequency band, or the bandwidth of the first frequency band is less than the bandwidth of the second frequency band. There is a resource mapping relationship between a frequency domain location of the first resource and a frequency domain location of the second resource, and the resource mapping relationship is used to map the first resource to the second resource.

According to this method, the terminal device can implement resource mapping between two frequency bands with different bandwidths. For example, if the terminal device reserves the first resource in the first frequency band to transmit the target data, and subsequently preempts a channel of the second frequency band through LBT, the terminal device may map the first resource into the second frequency band by using the foregoing method, to obtain the second resource, so that the target data can be transmitted on the preempted channel.

In a possible design, the terminal device may select the second resource from the second frequency band based on the resource mapping relationship and the frequency domain location of the first resource. The first resource includes a first resource block RB, the second resource includes a second RB, the frequency domain location of the first resource includes an RB number of the first RB in the first frequency band, the frequency domain location of the second resource includes an RB number of the second RB in the second frequency band, and the resource mapping relationship indicates a mapping relationship between a number of an RB in the first frequency band and a number of an RB in the second frequency band.

According to this design, the terminal device can implement resource mapping between two frequency bands with different bandwidths by using the resource mapping relationship.

In a possible design, the first frequency band includes L1 RBs, L1 is a positive integer, the bandwidth of the first frequency band is B1, the bandwidth of the second frequency band is B2, B2=X*B 1, and X>1. The second frequency band includes X subbands, a bandwidth of each subband is B1, the first frequency band is located in a $y^{th}$ subband in the X subbands, $1 \leq y \leq X$, and y is an integer. In the resource mapping relationship, a number a of an RB in the first frequency band corresponds to a number $(y-1)*L1+C+a$ of an RB in the second frequency band, where a is an integer, $0 \leq a < L1$, and C is a constant. Alternatively, in the resource mapping relationship, a number L1-b of an RB in the first frequency band corresponds to a number $y*L 1+D-b$ of an RB in the second frequency band, where b is an integer, $0 < b \leq L1$, and D is a constant.

In a possible design, the second frequency band includes L2 RBs, L2 is a positive integer, the bandwidth of the first frequency band is B1, the bandwidth of the second frequency band is B2, B 1 = X*B 2, and X>1. The first frequency band includes X subbands, a bandwidth of each subband is B2, the second frequency band is located in a $y^{th}$ subband in the X subbands, $1 \leq y \leq X$, and y is an integer. In the resource mapping relationship, a number a of an RB in the second frequency band corresponds to a number $(y-1)*L2+C+a$ of an RB in the first frequency band, where a is an integer, $0 \leq a < L2$,

and C is a constant. Alternatively, in the resource mapping relationship, a number L2-b of an RB in the second frequency band corresponds to a number y*L2+D-b of an RB in the first frequency band, where b is an integer, 0<b≤L2, and D is a constant.

In a possible design, the terminal device may further determine, based on the frequency domain location of the first resource, a first target subchannel from a plurality of first subchannels corresponding to the first frequency band; determine, based on the frequency domain location of the second resource, a second target subchannel from a plurality of second subchannels corresponding to the second frequency band; and when a quantity of RBs occupied by the second target subchannel is greater than a quantity of RBs occupied by the first target subchannel, perform rate matching on an encoded signal based on the quantity of RBs occupied by the second target subchannel, to obtain a target signal; or when the quantity of RBs occupied by the second target subchannel is less than the quantity of RBs occupied by the first target subchannel, puncture the encoded signal based on the quantity of RBs occupied by the second target subchannel, to obtain a target signal. The encoded signal is obtained by encoding the target data based on the quantity of RBs occupied by the first target subchannel. In this way, the terminal device may send the target signal on the second target subchannel.

According to this design, the terminal device can further implement mapping between subchannels corresponding to different frequency bands.

According to a third aspect, an embodiment of this application provides a communication apparatus, including units configured to perform steps in the first aspect to the seventh aspect.

According to a fourth aspect, an embodiment of this application provides a terminal device, including a processor, a memory, and a processor. The transceiver is configured to receive and send signals. The memory is configured to store program instructions and data. The processor is configured to read the program instructions and the data in the memory, to implement the method provided in the first aspect or the second aspect.

According to a fifth aspect, an embodiment of this application provides a terminal device, including at least one processing element and at least one storage element. The at least one storage element is configured to store a program and data. The at least one processing element is configured to perform the method provided in the first aspect or the second aspect of this application.

According to a sixth aspect, an embodiment of this application further provides a computer program. When the computer program is run on a computer, the computer is enabled to perform the method provided in any one of the foregoing aspects. Optionally, the computer may be a terminal device.

According to a seventh aspect, an embodiment of this application further provides a computer-readable storage medium. The computer-readable storage medium stores a computer program. When the computer program is executed by a computer, the computer is enabled to perform the method provided in any one of the foregoing aspects. Optionally, the computer may be a terminal device.

According to an eighth aspect, an embodiment of this application further provides a chip. The chip is configured to read a computer program stored in a memory, to perform the method provided in any one of the foregoing aspects. Optionally, the chip may include a processor and a memory. The processor is coupled to the memory, and configured to read the computer program stored in the memory, to implement the method provided in the foregoing embodiments.

According to a ninth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

**BRIEF DESCRIPTION OF DRAWINGS**

FIG. 1 is a diagram of resource reservation in a sidelink scenario according to an embodiment of this application;

FIG. 2 is a diagram of a communication scenario according to an embodiment of this application;

FIG. 3 is a flowchart of a resource configuration method according to an embodiment of this application;

FIG. 4 is a diagram of a resource configuration example according to an embodiment of this application;

FIG. 5 is a diagram of a resource configuration example according to an embodiment of this application;

FIG. 6 is a diagram of a resource configuration example according to an embodiment of this application;

FIG. 7 is a diagram of a resource configuration example according to an embodiment of this application;

FIG. 8 is a diagram of a resource configuration example according to an embodiment of this application;

FIG. 9 is a diagram of a resource configuration example according to an embodiment of this application;

FIG. 10 is a diagram of a resource configuration example according to an embodiment of this application;

FIG. 11 is a diagram of a resource configuration example according to an embodiment of this application;

FIG. 12 is a diagram of a resource configuration example according to an embodiment of this application;

FIG. 13 is a diagram of a resource configuration example according to an embodiment of this application;

FIG. 14 is a diagram of a resource configuration example according to an embodiment of this application;

FIG. 15 is a diagram of a resource configuration scenario according to an embodiment of this application;

FIG. 16 is a diagram of a resource configuration scenario according to an embodiment of this application;

FIG. 17 is a flowchart of a communication method according to an embodiment of this application;

FIG. 18 is a diagram of distribution between frequency bands with different bandwidths according to an embodiment of this application;

FIG. 19 is a diagram of a structure of a communication apparatus according to an embodiment of this application; and

FIG. 20 is a diagram of a structure of a terminal device according to an embodiment of this application.

## DESCRIPTION OF EMBODIMENTS

This application provides a resource configuration method and a device, to ensure communication efficiency of a terminal device. The method and the device are based on a same technical concept. Because problem resolving principles of the method and the device are similar, mutual reference may be made between implementation of the device and the method, and repeated descriptions are omitted.

The following explains a part of terms in this application to facilitate understanding of a person skilled in the art.

(1) A network device is a device that is in a communication system and that connects a terminal device to a wireless network. The network device is a node in a radio access network, and may also be referred to as a base station or a radio access network (radio access network, RAN) node (or device).

Currently, some examples of the network device are a gNB, a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), and a base band unit (base band unit, BBU).

In addition, in a network structure, the network device may include a central unit (central unit, CU) node and a distributed unit (distributed unit, DU) node. In this structure, a protocol layer of an eNB in a long term evolution (long term evolution, LTE) system is split, a part of functions of the protocol layer are assigned to the CU for centralized control, a part or all of remaining functions of the protocol layer are distributed to DUs, and the DUs are all controlled by the CU.

(2) The terminal device is a device that provides voice and/or data connectivity for a user. The terminal device may also be referred to as user equipment (user equipment, UE), a mobile station (mobile station, MS), a mobile terminal (mobile terminal, MT), or the like.

For example, the terminal device may be a handheld device, a vehicle-mounted device, or a road side unit that has a wireless connection function. Currently, some examples of the terminal device are a mobile phone (mobile phone), a tablet computer, a notebook computer, a palmtop computer, a mobile internet device (mobile internet device, MID), an intelligent point of sale (point of sale, POS), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electricity meter, and a smart gas meter), eLTE-DSA UE, a device having an integrated access and backhaul (integrated access and backhaul, IAB) capability, a vehicle-mounted electronic control unit (electronic control unit, ECU), a vehicle-mounted computer, a vehicle-mounted cruise system, and a telematics box (telematics box, T-BOX).

(3) A communication device is a device that supports a wireless communication technology and that can communicate with another device. In embodiments of this application, a specific representation form of the communication device is not limited. For example, the communication device may be a terminal device, a network device, or the like.

(4) A frequency band is a continuous frequency resource, and is used as a carrier in a data transmission process of the communication device. In embodiments of this application, the frequency band has two characteristics: a frequency point and a bandwidth. The frequency point and the bandwidth may determine a frequency range of the frequency band, including a minimum frequency boundary (which may also be referred to as a start frequency) and a maximum frequency boundary (which may also be referred to as an end frequency) of the frequency point.

The frequency band may be divided into a plurality of subcarriers based on a subcarrier spacing (subcarrier space, SCS) and the bandwidth of the frequency band. For example, a value of the SCS may be 15 kHz, 30 kHz, 60 kHz, or the like.

In frequency domain, one resource block (resource block, RB) may include a fixed quantity of subcarriers. Therefore, one frequency band may include a plurality of RBs. For example, 12 subcarriers in frequency domain may form one RB.

(5) The resource is a time-frequency resource for data transmission of the communication device, and is also referred to as a physical resource. The resource is a concept in two dimensions, including a time domain and a frequency domain.

(6) Time in embodiments of this application may be counted in a conventional time unit such as second, millisecond, or microsecond, or may be counted in a time unit defined for a time domain resource in the communication field. For example, the time unit in the communication field may include but is not limited to a subframe (subframe), a slot (slot), a symbol (symbol), or the like. This is not limited in this application.

(7) The time unit is a unit or a time granularity for scheduling a time domain resource. For example, a time unit for scheduling a data transmission resource may be one slot, a half slot, several symbols, or the like. This is not limited in this application.

(8) An acknowledgment response indicates whether data is successfully sent, and is sent by a receive end of the data based on a transmission status of the data, to notify a transmit end of the transmission status of the data, so that the transmit end determines, based on a data transmission result indicated by the acknowledgment response, whether the data needs to be retransmitted.

In an implementation, in a communication system that supports a hybrid automatic repeat request (Hybrid Automatic Repeat reQuest, HARQ) technology, after a transmit end performs one transmission, a receive end may feed back an acknowledgment response to the transmit end based on a transmission status of the transmission. The acknowledgment response may also be referred to as a hybrid automatic repeat request acknowledgment (HARQ-acknowledgment, HARQ-ACK), or a HARQ reply, or a HARQ response, which is referred to as a HARQ for short.

Generally, the acknowledgment response includes two types: an acknowledgment (Acknowledgement, ACK) and a negative acknowledgment (Negative Acknowledgement, NACK). The ACK indicates a data transmission success, and the NACK indicates a data transmission failure.

(9) The term "and/or" describes an association relationship between associated objects, and represents that three relationships may exist. For example, A and/or B may represent the following three cases: Only A exists, both A and B exist, and only B exists. The character "/" generally indicates an "or" relationship between the associated objects.

It should be noted that, "a plurality of" in this application means two or more than two, and "at least one" means one or more.

In addition, it should be understood that in descriptions of this application, terms such as "first" and "second" are merely used for distinguishing and description, but should not be understood as indicating or implying relative importance, nor understood as indicating or implying a sequence.

Before embodiments of this application are described, some technologies in embodiments of this application are first described.

1. Resource configuration manner in a sidelink scenario

In the sidelink scenario, when a terminal device needs to transmit target data, the terminal device reserves a plurality of inconsecutive resources for transmissions (for example, an initial transmission and a retransmission) of the target data. Subsequently, the terminal device may transmit the target data on the reserved resources. In embodiments of this application, a quantity N of reserved resources is not limited, and may be a positive integer greater than or equal to 1, such as 4, 5, 10, 20, 24, or 36. Optionally, the terminal device may determine, based on a threshold of the quantity of reserved resources, a quantity N of resources that need to be reserved this time.

For example, the terminal device may determine, based on a reliability requirement of the target data, a quantity N of reserved resources required for repeatedly transmitting the target data. A higher reliability requirement of the target data indicates a larger quantity of repeated transmissions, and a larger quantity N of resources that need to be reserved. A lower reliability requirement of the target data indicates a smaller quantity of repeated transmissions, and a smaller quantity N of resources that need to be reserved.

In an implementation, when a medium access control (medium access control, MAC) layer of the terminal device determines that a transmission requirement occurs (that is, at $t_0$), a physical (Physical, PHY) layer may be notified. In this case, the PHY layer may select some candidate resources (which may be referred to as a candidate resource set subsequently) from a resource selection range $[t_0 + T_{offset}, t_0 + T_{PDB}]$, and report the candidate resource set to the MAC layer. The MAC layer may select N resources in the candidate resource set. One resource corresponds to one transmission requirement, and each transmission requirement is used for one transmission (one retransmission of the target data). The resource selection range may also be referred to as a resource selection window.

$T_{offset}$ is an offset between a start time of the resource selection range and the time $t_0$ at which the transmission requirement occurs on the terminal device. $T_{PDB}$ is determined based on a data transmission delay (for example, a packet delay budget (packet delay budget, PDB)) of the terminal device. Optionally, $T_{PDB}$ may be equal to the data transmission delay, or may be less than the data transmission delay. Specific values of $T_{offset}$ and $T_{PDB}$ are set by the terminal device, and the terminal device may determine a value of $T_{offset}$ based on a value range of $T_{offset}$. For example, as defined in the standard TS 38.214, the value range of $T_{offset}$ is $0 \leq T_{offset} \leq T_{proc,1}^{SL}$. $T_{proc,1}^{SL}$ is related to an SCS. For details, refer to related definition descriptions in a communication standard. Details are not described herein.

It should be noted that a gap between any two of the N resources reserved by the terminal device is less than or equal to a minimum gap (minimum gap). The minimum gap is configured by a network device by using radio resource control (radio resource control, RRC) signaling, or is specified in a communication standard. In this way, the terminal device may receive, within the gap, an acknowledgment response corresponding to a preceding resource and a processing delay for the acknowledgment response. Therefore, the minimum gap needs to be greater than or equal to a sum of a delay of the acknowledgment response corresponding to the preceding resource, a duration of a resource corresponding to the acknowledgment response, and a delay of processing the acknowledgment response by the terminal device.

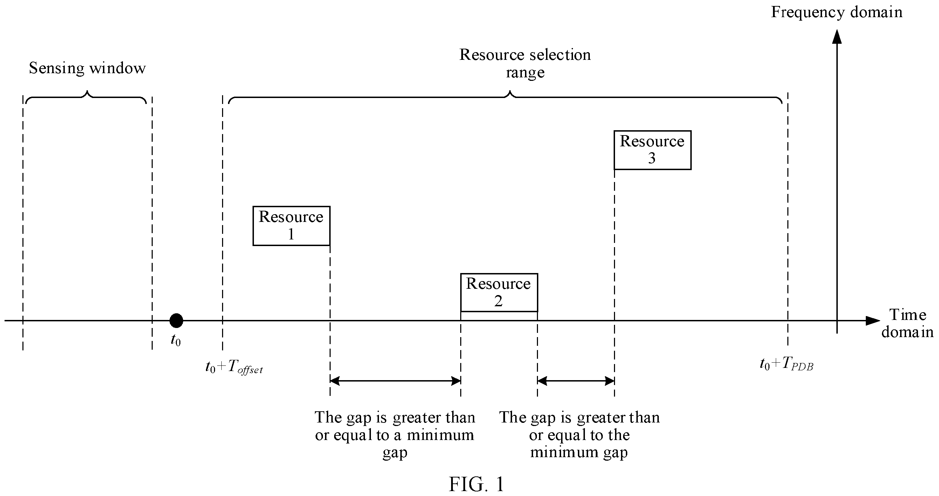

For example, with reference to FIG. 1, the physical (Physical, PHY) layer of the terminal device may sense a channel status in a sensing window. At $t_0$, the MAC layer of the terminal device notifies the PHY layer of occurrence of transmission requirements. The PHY layer selects a candidate resource set from a resource selection range $[t_0 + T_{offset}, t_0 + T_{PDB}]$ based on a sensing result in the sensing window, and reports the candidate resource set to the MAC layer. The MAC layer selects three resources shown in FIG. 1 in the candidate resource set based on the minimum gap, and notifies the PHY layer of the three resources, so that the PHY layer can send data on the three resources. For example, in this application, resources and transmission requirements are sorted in a chronological order.

The sensing window is a period of time before $t_0$ at which the transmission requirements occur on the terminal device, used for sensing by the terminal device, and may be represented as $[t_0 - T_p, t_0 - T_{proc,0}^{SL}]$. $T_{proc,0}^{SL}$ is a processing delay of the terminal device, and $T_p$ is related to slot data in the sensing window. For the sensing window and $T_{proc,0}^{SL}$, refer to related definition descriptions in a communication standard. Details are not described herein.

As shown in the three resources reserved by the terminal device in FIG. 1, a gap between any two resources is greater than or equal to the minimum gap. In this way, after the terminal device transmits the data on a resource 1, if a received acknowledgment response of the resource 1 is an ACK, the terminal device may not transmit the data on a resource 2 or a resource 3, or transmit other data on the resource 2 and the resource 3, to avoid a resource waste.

2. Resource configuration in the sidelink scenario

In new radio (new radio, NR), a sidelink transmission resource is based on a resource pool. The resource pool is a logical concept. One resource pool includes a plurality of resources. Any resource is used to transmit data. During each data transmission, the terminal device needs to select a resource from the resource pool for transmission. The resource selection process of the terminal device includes two cases:

Case 1: A resource to be used by the terminal device is configured by the network device. The terminal device may select, based on indication information of the network device, a resource from the resource pool for data transmission. Such a resource configuration manner is also referred to as a mode 1 (Mode 1).

Case 2: The terminal device autonomously selects a resource from the resource pool for data transmission. Such a resource configuration manner is referred to as a mode 2 (Mode 2).

Optionally, a frequency domain resource occupied by each resource pool includes at least one subchannel (subchannel). According to a current progress, in one resource pool, frequency domain resources (quantities of RBs) occupied by subchannels are the same, and frequency domain resources occupied by subchannels that belong to different resource pools may be different.

3. Sidelink-unlicensed spectrum (sidelink-unlicense, SL-U) access mechanism

SL-U is an important topic discussed in a current communication standard, and main content is to perform sidelink transmission in an unlicensed spectrum (unlicense). Because a used frequency domain resource is an unlicensed spectrum, two access mechanisms are introduced in a communication standard: Type 1 and Type 2.

Type 1 is applicable to a scenario in which a terminal device preempts a channel, where the terminal device needs to perform listen before talk (listen before talk, LBT). To be specific, the terminal device needs to listen to the channel before transmission, and after detecting that the channel is idle, preempts the channel and uses the channel for transmission.

Type 2 is applicable to sharing of a resource that is preempted by another terminal device by using Type 1. For example, a terminal device 1 preempts a transmission opportunity (referred to as a channel occupancy time (channel occupancy time, COT) in a standard) within a period of time by using Type 1. In addition to performing data transmission in the COT, the terminal device may further indicate another terminal device to occupy and access a remaining COT of the terminal device 1 by using Type 2. Such behavior of sharing a COT with another terminal device (a terminal device 2 is used as an example for description) is referred to as COT-sharing (COT-sharing). Optionally, in some cases, terminal devices that perform COT-sharing need to be associated with each other, for example, in a receiving-sending relationship or located in a same terminal device group.

In some embodiments, Type 2 may be further classified into several cases. The following uses Type 2A and Type 2B as examples for description. Type 2A is that the terminal device 2 detects, within 25 μs after another terminal device ends transmission, that a channel is idle, and then occupies the channel. In other words, if the terminal device 2 senses that the channel is not occupied within 25 μs after the another terminal device ends transmission, the terminal device 2 occupies the channel. Type 2B is that the terminal device 2 detects, within 16 μs after another terminal device ends transmission, that a channel is idle, and then occupies the channel. Type 2B is different from Type 2A in that a duration of a COT is increased by 9 μs, that is, a duration of one sensing slot.

The sensing slot (sensing slot) is a time unit used in an unlicensed spectrum by the terminal device to sense whether a channel is busy. A duration corresponding to one sensing slot may be 9 μs. In some embodiments of this application, the sensing slot is unrelated to the sensing window.

In some embodiments of this application, a duration of a COT of a terminal device may be related to a channel access priority class (channel access priority class, CAPC) of the terminal device. For example, when the CAPC of the terminal device is 1, a maximum duration of the COT is 2 ms. When the CAPC of the terminal device is 2, a maximum duration of the COT is 4 ms. When the CAPC of the terminal device is 3 or 4, a maximum duration of the COT is 6 ms or 10 ms.

4. LBT mechanism

As an unlicensed spectrum resource is shared, a same resource is easily used simultaneously by different communication devices (terminal devices are used as an example for description subsequently). Therefore, a proper resource contention mechanism is required to ensure that different communication devices on a same unlicensed frequency band fairly coexist and perform resource contention. The resource contention mechanism is an LBT mechanism.

The LBT mechanism requires a terminal device to listen to a channel and perform clear channel assessment (clear channel assessment, CCA) detection (referred to as channel detection subsequently) before sending data on an unlicensed spectrum resource, and perform data transmission only when it is ensured that the channel is idle.

A main idea of LBT is as follows: Before the terminal device needs to send data, the terminal device may generate a random number R. The random number R indicates a quantity of times that a channel needs to be detected to be idle before the data is sent. The terminal device may maintain the random number R by using a counter. For example, an initial value of the counter is the random number R. The terminal device performs channel detection in each sensing slot after the random number R is generated. When detecting that the channel is idle in a sensing slot, the terminal device updates the counter by subtracting a count value by 1. If the terminal device detects that the channel is busy in a sensing slot, the terminal device does not update the counter, but continues to perform channel detection in each subsequent sensing slot until the terminal device detects that the channel is idle and starts counting of the counter. The terminal device continuously performs channel detection and updates the counter in the foregoing manner, until the counter has a count value of 0, and then starts to occupy the channel and transmit the data.

It should be noted that random numbers generated by the terminal device when the terminal device performs LBT for different times may be different. The terminal device may generate the random number within a random number value range. The random number value range may be related to the CAPC of the terminal device. For example, when the CAPC of the terminal device is 1, the random number value range is [3, 7]. When the CAPC of the terminal device is 2, the random number value range is [7, 15]. When the CAPC of the terminal device is 3 or 4, the random number value range is [15, 1023].

In the LBT mechanism, the random number R generated by the terminal device indicates a quantity of times that the channel needs to be detected to be idle before the data is sent. In other words, the random number $R$ is used to determine a quantity of sensing slots for channel detection.

Therefore, an LBT duration of the terminal device may be determined based on the random number $R$. For example, the LBT duration is equal to $t_{sensing} * R$ or $t_{sensing} * R + defer$. In an LBT process, the terminal device determines a remaining LBT duration of the terminal device based on a remaining random number $R_{left}$. For example, the remaining LBT duration may be equal to $t_{sensing} * R_{left}$ or $t_{sensing} * R_{left} + defer$. $t_{sensing}$ is a duration of the sensing slot, and $defer = 16\mu s + m_p * 9\mu s$. $m_p$ is related to the CAPC of the terminal device. For details, refer to related definition descriptions in a communication standard. Details are not described herein.

The LBT duration may also be referred to as a contention window (contention window, CW), and the random number R may also be referred to as a contention random number.

5. Cyclic prefix extension (cyclic prefix extension, CPE)

Different from a wireless fidelity (wireless fidelity, Wi-Fi) system, the SL-U is a synchronization system, and can be accessed only at a specified time domain location. Therefore, to better occupy a channel, before accessing the channel, the terminal device may further send a CPE to preempt the channel. For example, a specific time length for preempting the channel by the terminal device may be related to the CAPC of the terminal device, or may be specified in a standard, or may be set inside the terminal device.

A duration of the CPE sent by the terminal device may be denoted as $t_{cpe}$. For example, $t_{cpe}$ generally does not exceed a time of one symbol.

6. New radio-unlicensed spectrum (new radio-unlicense, NR-U) resource configuration manner

In an NR-U scenario, a network device and a terminal device communicate with each other on an unlicensed spectrum. The network device may schedule a plurality of terminal devices to send data to the network device in one slot. Because transmission of each terminal device is carried either in one slot or in a plurality of consecutive slots, the terminal device may send data in a COT of the network device, or perform LBT at a location scheduled by the network device, to preempt a channel, so that a transmission requirement can be met.

Embodiments of this application are described in detail below with reference to accompanying drawings.

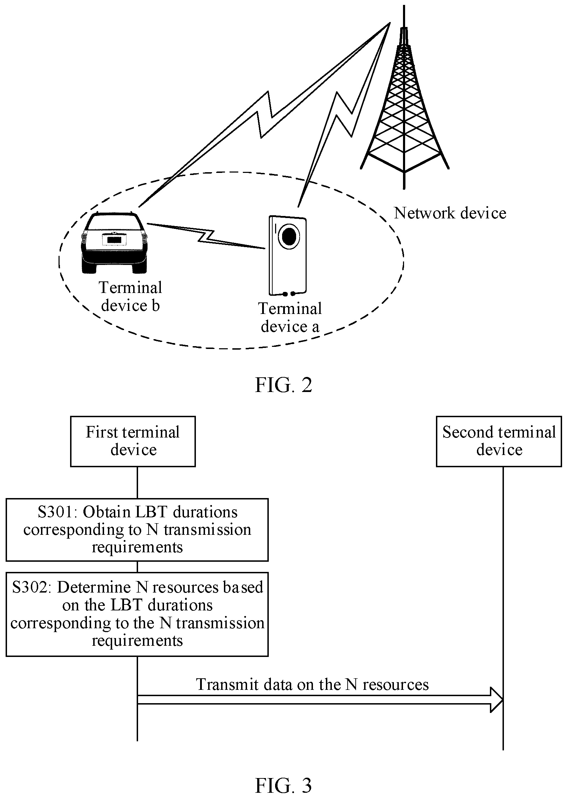

FIG. 2 shows a communication scenario to which a method provided in embodiments of this application is applicable. With reference to FIG. 2, the communication scenario may include a network device and a plurality of terminal devices (for example, a terminal device a and a terminal device b in FIG. 2).

The network device is a network side entity that can receive and transmit radio signals, and is responsible for providing a radio access related service for a terminal device in a cell managed by the network device, and implementing a physical layer function and resource scheduling and radio resource management, quality of service (Quality of Service, QoS) management, radio access control, and mobility management functions.

The terminal device is a user side entity that can receive and transmit radio signals, and needs to access a network through the network device.

In the communication scenario shown in FIG. 2, the terminal devices support sidelink communication. The sidelink communication technology is a near field communication technology in which terminal devices can be directly connected to each other, also referred to as a proximity service (proximity service, ProSe) communication technology or a D2D communication technology. Based on this, a plurality of terminal devices that are close in geographical location and that support sidelink communication may form a sidelink system, as shown in a sidelink system including the terminal device a and the terminal device b in FIG. 2. In the sidelink system, sidelink communication may be performed between the terminal devices.

Based on the communication scenario shown in FIG. 2, the network device and the terminal device may be connected through an air interface (namely, a Uu interface), to implement communication between the terminal device and the network device (such communication may be referred to as Uu communication or cellular network communication for short). A sidelink connection may be established between close terminal devices through a Pc5 interface for communication.

In the communication scenario shown in FIG. 2, the terminal devices in the sidelink system may perform data transmission on an unlicensed spectrum. Therefore, the sidelink system is also referred to as an SL-U system.

It should be further noted that, the communication scenario shown in FIG. 2 is used as an example, and constitutes no limitation on the communication scenario to which the method provided in embodiments of this application is applicable. For example, communication technologies of various standards may be used between the network device and the terminal device, for example, a 5th generation (5th Generation, 5G) communication technology (namely, an NR technology), a 4G communication technology, a 6th generation (6th Generation, 6G) communication technology, and a communication technology evolved based on the foregoing technologies. In addition, the sidelink-U system may be used in V2X, long term evolution-vehicle (LTE-vehicle, LTE-V), V2V, internet of vehicles, machine type communication (Machine Type communication, MTC), internet of things (internet of things, IoT), long term evolution-machine to machine (LTE-machine to machine, LTE-M), machine to machine (machine to machine, M2M), and other specific scenarios. This is not limited in this application.

It can be learned from the foregoing related descriptions of the resource reservation technology in the sidelink scenario in the first point that, the SL-U system and the NR-U system have different resource configuration manners. To be specific, in the SL-U system, a terminal device may reserve at least one resource for transmitting target data, to ensure transmission reliability of the target data. However, in the resource reservation solution provided in the first point, a channel status is not considered. In the SL-U system, an unlicensed spectrum is used. If the channel status is not considered, a plurality of terminal devices are very likely to use a same resource for transmission, affecting communication efficiency of the terminal devices.

Further, it can be learned from the foregoing descriptions of the SL-U access mechanism in the third point and the LBT mechanism in the fourth point that, when preempting a channel in the unlicensed spectrum, the terminal device needs to listen to the channel through LBT. An LBT duration is not considered in the resource reservation solution provided in the first point. Therefore, when the solution is used in the SL-U, the following case may occur: A start time of a reserved resource arrives in time domain, but the LBT of the terminal device has not ended. As a result, the reserved resource is unavailable, and communication efficiency of the terminal device is affected.

To resolve the foregoing problems and ensure communication efficiency of terminal devices in the SL-U system, an embodiment of this application provides a resource configuration method. The method is applicable to the communication scenario shown in FIG. 2. With reference to a flowchart shown in FIG. 3, the following describes, in detail by using a first terminal device and a second terminal device as an example, the method provided in this embodiment of this application.

S301: The first terminal device obtains listen before talk LBT durations corresponding to N transmission requirements. N is an integer greater than or equal to 1.

Optionally, each transmission requirement is a requirement for transmitting target data by the first terminal device, the first transmission requirement is used to initially transmit the target data, and a subsequent transmission requirement is used to retransmit the target data. Optionally, when (denoted as $t_0$) a transmission requirement occurs on the first terminal device, a MAC layer of the first terminal device may notify a PHY layer of the first terminal device, and the PHY layer performs S301. In an implementation, the PHY layer of the first terminal device may determine a quantity N of transmission requirements (that is, a maximum quantity N of times of retransmitting the target data).

Optionally, that a transmission requirement occurs on the first terminal device may include but is not limited to as follows: The first terminal device generates or receives the target data that needs to be transmitted. Because the MAC layer notifies the PHY layer of occurrence of the transmission requirement when the transmission requirement occurs on the first terminal device, a time at which the transmission requirement occurs on the first terminal device may be defined to be a time at which the MAC layer notifies the PHY layer of occurrence of the transmission requirement.

In an implementation, the PHY layer of the first terminal device may generate a random number $R$ for the N transmission requirements. Then, the PHY layer may determine, based on the random number $R$, the LBT durations corresponding to the N transmission requirements. For example, the LBT durations corresponding to the N transmission requirements are equal to $t_{sensing} * R$ or $t_{sensing} * R + defer$. In this implementation, the LBT durations corresponding to the N transmission requirements are the same.

In another implementation, the PHY layer of the first terminal device may generate a corresponding random number for each transmission requirement, and then the PHY layer may determine, based on the random number corresponding to each transmission requirement, an LBT duration corresponding to each transmission requirement. An $n$th transmission requirement is used as an example. A random number that is generated by the PHY layer and that corresponds to the $n$th transmission requirement is denoted as $R_n$. In this case, the PHY layer may determine, based on the random number $R_n$ corresponding to the $n$th transmission requirement, an LBT duration corresponding to the $n$th transmission requirement. For example, the LBT duration corresponding to the $n$th transmission requirement is equal to $t_{sensing} * R_n$ or $t_{sensing} * R_n + defer$. $n$ is a positive integer, and $1 \leq n \leq N$. In this implementation, LBT durations corresponding to different transmission requirements may be different.

$t_{sensing}$ is a duration of a sensing slot.

S302: The first terminal device determines N resources based on the LBT durations corresponding to the N transmission requirements. The N resources are in one-to-one correspondence with the N transmission requirements, and when N is an integer greater than 1, a gap between any two resources is greater than or equal to a minimum gap.

Through this step, the first terminal device may reserve the resources based on the LBT durations corresponding to the N transmission requirements. Because the LBT durations are considered, cases in which an LBT duration of a transmission requirement has not ended when a resource corresponding to the transmission requirement arrives can be reduced, so that a probability that the first terminal device can transmit the data on the resource corresponding to the transmission requirement can be increased, thereby ensuring communication efficiency of the terminal device.

In addition, when there are a plurality of transmission requirements, the first terminal device further needs to consider that a gap between any two resources is greater than or equal to the minimum gap, to ensure that the first terminal device can perform the following operations within the gap: receiving an acknowledgment response corresponding to a preceding resource, and performing subsequent processing based on a result indicated by the acknowledgment response.

Optionally, in S302, the first terminal device may determine, based on the LBT duration corresponding to each transmission requirement, a resource corresponding to each transmission requirement. The following uses the $n^{th}$ transmission requirement as an example for description. The first terminal device may perform the following steps to determine a resource corresponding to the $n^{th}$ transmission requirement:

A1: The first terminal device determines an $n^{th}$ start time based on the LBT duration corresponding to the $n^{th}$ transmission requirement. $n$ is a positive integer, $1 \leq n \leq N$, and the $n^{th}$ start time is a start time of a resource selection range of the $n^{th}$ transmission requirement.

A2: The first terminal device determines, based on the $n^{th}$ start time, the resource corresponding to the $n^{th}$ transmission requirement.

It should be noted that the first terminal device may first perform A1 to determine start times of resource selection ranges of the N transmission requirements, and then perform A2, so that when determining the N resources, the first terminal device can ensure that a gap between any two resources is greater than or equal to the minimum gap.

Optionally, in this embodiment of this application, the first terminal device may perform step A1 in, but not limited to, any one of the following manners 1 to 3, to determine the $n^{th}$ start time.

Manner 1: The first terminal device determines the $n^{th}$ start time based on the LBT duration corresponding to the $n^{th}$ transmission requirement, without considering another factor.

Based on the manner 1, the $n^{th}$ start time meets $t_0 + T_n$. $T_n$ meets the following formula:

$$T_n = max \left\{ \left\lceil \frac{t_{n,LBT}}{t_s} \right\rceil \times t_s, T_{offset} \right\};$$

or

$$T_n = max \left\{ \left\lceil \frac{t_{n,LBT} + t_{cpe}}{t_s} \right\rceil \times t_s, T_{offset} \right\},$$

where

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; and $t_{cpe}$ is a duration of a cyclic prefix extension.

For example, the time $t_0$ at which the transmission requirements occur on the first terminal device may be the time at which the MAC layer of the first terminal device notifies the PHY layer of occurrence of the transmission requirements. Optionally, the time unit for scheduling the data transmission resource may be a slot, a half slot, or a smaller time granularity. This is not limited in this application. A value of $t_s$ may be specifically set based on setting of the time unit. A value of $T_{offset}$ may be the same as a value of the parameter ($T_{offset}$) in the technical descriptions of the first point. For example, $t_{cpe}$ generally does not exceed a time of one symbol.

In the manner 1, it can be ensured that a location of the $n^{th}$ start time determined by the first terminal device is not earlier than a location after the LBT duration corresponding to the $n^{th}$ transmission requirement elapses since $t_0$, that is, ($t_0 + T_n) \geq (t_0 + t_{n,LBT})$. In this way, the first terminal device may perform LBT between $t_0$ and the $n^{th}$ start time (that is, $t_0 + T_n$). In the manner 1, sufficient time is reserved for the first terminal device to perform LBT before the $n^{th}$ start time. Therefore, this manner can reduce a probability that the LBT duration of the $n^{th}$ transmission requirement has not ended when the resource corresponding to the $n^{th}$ transmission requirement arrives, thereby increasing a probability that the first terminal device can transmit the data on the resource corresponding to the $n^{th}$ transmission requirement.

Further, in a scenario in which the first terminal device sends the CPE before accessing a channel, in addition to the LBT duration corresponding to the $n^{th}$ transmission requirement, the first terminal device further considers the duration

$t_{cpe}$ for sending the CPE by the first terminal device, to ensure that a location of the $n^{th}$ start time determined by the first terminal device is not earlier than a location obtained after the LBT duration corresponding to the $n^{th}$ transmission requirement passes since $t_0$ and the CPE is sent, that is, $(t_0 + T_n) \geq (t_0 + t_{n,LBT} + t_{cpe})$. In this way, the first terminal device may perform LBT and send the CPE between $t_0$ and the $n^{th}$ start time (that is, $t_0 + T_n$). In the manner 1, sufficient time is reserved for the first terminal device to perform LBT and send the CPE before the $n^{th}$ start time. Therefore, this manner can reduce a probability that the LBT duration of the $n^{th}$ transmission requirement has not ended or sending of the CPE has not ended when the resource corresponding to the $n^{th}$ transmission requirement arrives, thereby increasing a probability that the first terminal device can transmit the data on the resource corresponding to the $n^{th}$ transmission requirement.

Manner 2: When determining the $n^{th}$ start time, the first terminal device may consider both the LBT duration corresponding to the $n^{th}$ transmission requirement and a resource corresponding to a preceding transmission requirement of the $n^{th}$ transmission requirement (that is, a time domain resource occupied by the resource corresponding to the preceding transmission requirement).

Therefore, in the manner 2, the first terminal device may perform step A1 by performing the following step:

The first terminal device determines the $n^{th}$ start time based on the LBT duration corresponding to the $n^{th}$ transmission requirement and the resource corresponding to the preceding transmission requirement of the $n^{th}$ transmission requirement. The preceding transmission requirement of the $n^{th}$ transmission requirement is a transmission requirement whose resource is located before the resource of the $n^{th}$ transmission requirement in the N transmission requirements. It should be noted that the $n^{th}$ transmission requirement has a preceding transmission requirement only when $n$ is greater than 1. The first transmission requirement does not have a preceding transmission requirement. Therefore, a start time of a resource selection range of the first transmission requirement may be determined in the foregoing manner 1.

For example, in this embodiment of this application, the N transmission requirements are sorted in a chronological order of time domain locations of the resources corresponding to the transmission requirements. Therefore, the preceding transmission requirement of the $n^{th}$ transmission requirement is the first transmission requirement to an $(n-1)^{th}$ transmission requirement.

Based on the manner 2, the $n^{th}$ start time meets $t_0 + T_n$. $T_n$ meets the following formula:

$$T_n = max\left\{\left\lceil\frac{t_{n,LBT}}{t_s}\right\rceil \times t_s + \sum_{i=1}^{n-1} t_{i,R}, T_{offset}\right\};$$

or

$$T_n = max\left\{\left\lceil\frac{t_{n,LBT}}{t_s} + \sum_{i=1}^{n-1} S_{i,R}\right\rceil \times t_s, T_{offset}\right\};$$

or

$$T_n = max\left\{\left\lceil\frac{t_{n,LBT}+t_{cpe}}{t_s}\right\rceil \times t_s + \sum_{i=1}^{n-1} t_{i,R}, T_{offset}\right\};$$

or

$$T_n = max\left\{\left\lceil\frac{t_{n,LBT}+t_{cpe}}{t_s} + \sum_{i=1}^{n-1} S_{i,R}\right\rceil \times t_s, T_{offset}\right\},$$

where

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an $i^{th}$ preceding transmission requirement of the $n^{th}$ transmission requirement; $\sum_{i=1}^{n-1} t_{i,R}$ is a sum of durations of resources corresponding to $n-1$ preceding transmission requirements of the $n^{th}$ transmission requirement; $S_{i,R}$ is a quantity of time units occupied by the resource corresponding to the $i^{th}$ preceding transmission requirement of the $n^{th}$ transmission requirement; and $\sum_{i=1}^{n-1} S_{i,R}$ is a sum of quantities of time units occupied by the resources corresponding to the $n-1$ preceding transmission requirements of the $n^{th}$ transmission requirement.

For descriptions of $t_0$, the time unit, $t_s$, $T_{offset}$, and $t_{cpe}$, refer to descriptions in the foregoing manner 1. Details are not described herein again.

If the first terminal device transmits the data on the resource corresponding to the preceding transmission requirement of the $n^{th}$ transmission requirement, because a channel is occupied, it can be learned from the foregoing descriptions of the LBT mechanism in the technical descriptions of the fourth point that, in a process in which the first terminal device performs LBT for the $n^{th}$ transmission requirement, an actual LBT duration of the $n^{th}$ transmission requirement may be longer. In addition, compared with the LBT duration that is determined in S301 and that corresponds to the $n^{th}$ transmission requirement, the actual LBT duration of the $n^{th}$ transmission requirement may be a first delay duration longer. The first delay duration is related to a total duration occupied by the resources corresponding to the $n$ - 1 preceding transmission requirements.

In the manner 2, it can be ensured that a location of the $n^{th}$ start time determined by the first terminal device meets

$$(t_0 + T_n) \geq (t_0 + t_{n,LBT} + \sum_{i=1}^{n-1} t_{i,R})$$ . In this way, the first terminal device may perform LBT between $t_0$ and the $n^{th}$ start time (that is, $t_0 + T_n$). In the manner 2, sufficient time is reserved for the first terminal device to perform LBT before the $n^{th}$ start time. Therefore, this manner can reduce a probability that the LBT duration of the $n^{th}$ transmission requirement has not ended when the resource corresponding to the $n^{th}$ transmission requirement arrives, thereby increasing a probability that the first terminal device can transmit the data on the resource corresponding to the $n^{th}$ transmission requirement.

Further, in the manner 2, in addition to the LBT duration corresponding to the $n^{th}$ transmission requirement, the first terminal device further considers the duration $t_{cpe}$ for sending the CPE by the first terminal device, to ensure that a location of the $n^{th}$ start time determined by the first terminal device meets $(t_0 + T_n) \geq (t_0 + t_{n,LBT} + t_{cpe} + \sum_{i=1}^{n-1} t_{i,R})$ . In this way, the first terminal device may perform LBT and send the CPE between $t_0$ and the $n^{th}$ start time (that is, $t_0 + T_n$). In the manner 2, sufficient time is reserved for the first terminal device to perform LBT and send the CPE before the $n^{th}$ start time. Therefore, this manner can reduce a probability that the LBT duration of the $n^{th}$ transmission requirement has not ended or sending of the CPE has not ended when the resource corresponding to the $n^{th}$ transmission requirement arrives, thereby increasing a probability that the first terminal device can transmit the data on the resource corresponding to the $n^{th}$ transmission requirement.

Compared with the manner 1, the manner 2 further considers the time domain resource occupied by the resource corresponding to the preceding transmission requirement of the $n^{th}$ transmission requirement. Therefore, the $n^{th}$ start time obtained through calculation in the manner 2 additionally includes the first delay duration, as compared with that in the manner 1. The first delay duration is greater than or equal to the total duration occupied by the resource corresponding to the preceding transmission requirement of the $n^{th}$ transmission requirement. Based on this, compared with the manner 1, the manner 2 can further reduce the probability that the LBT duration of the $n^{th}$ transmission requirement has not ended when the resource corresponding to the $n^{th}$ transmission requirement arrives.

Manner 3: When determining the $n^{th}$ start time, the first terminal device may consider the LBT duration corresponding to the $n^{th}$ transmission requirement, a resource corresponding to a preceding transmission requirement of the $n^{th}$ transmission requirement (that is, a time domain resource occupied by the resource corresponding to the preceding transmission requirement), and a resource corresponding to a preceding acknowledgment response of the $n^{th}$ transmission requirement (that is, a time domain resource occupied by the resource corresponding to the preceding acknowledgment response).

Therefore, in the manner 3, the first terminal device may perform step A1 by performing the following step:

The first terminal device determines the $n^{th}$ start time based on the LBT duration corresponding to the $n^{th}$ transmission requirement, the resource corresponding to the preceding transmission requirement of the $n^{th}$ transmission requirement, and the resource corresponding to the preceding acknowledgment response of the $n^{th}$ transmission requirement.

The preceding transmission requirement of the $n^{th}$ transmission requirement is a transmission requirement whose resource is located before the resource of the $n^{th}$ transmission requirement in the N transmission requirements, and the preceding acknowledgment response of the $n^{th}$ transmission requirement includes an acknowledgment response that is to be received by the first terminal device or another terminal device before the resource corresponding to the $n^{th}$ transmission requirement. It should be noted that the $n^{th}$ transmission requirement has a preceding transmission requirement only when $n$ is greater than 1. The first transmission requirement does not have a preceding transmission requirement, and it may be considered that a time domain resource occupied by a preceding transmission requirement of the first transmission requirement is 0.

It should be further noted that the acknowledgment response that is to be received by the another terminal device in the preceding acknowledgment response of the $n^{th}$ transmission requirement may be determined in the following step: After detecting a transmission of the another terminal device, if the first terminal device anticipates that a time at which the another terminal device receives an acknowledgment response of the transmission is located after $t_0$ and before the resource corresponding to the $n^{th}$ transmission requirement, the first terminal device may determine the acknowledgment response of the transmission as a preceding acknowledgment response of the $n^{th}$ transmission requirement.

For example, in this embodiment of this application, the N transmission requirements are sorted in a chronological order of time domain locations of the resources corresponding to the transmission requirements. Therefore, the preceding transmission requirement of the $n^{th}$ transmission requirement is the first transmission requirement to an $(n - 1)^{th}$

transmission requirement.

In a first design, the preceding acknowledgment response of the $n^{th}$ transmission requirement includes an acknowledgment response of the preceding transmission requirement of the $n^{th}$ transmission requirement. In this design, the preceding acknowledgment response of the $n^{th}$ transmission requirement includes acknowledgment responses of the first transmission requirement to the $(n - 1)^{th}$ transmission requirement.

In a second design, the preceding acknowledgment response of the $n^{th}$ transmission requirement includes the acknowledgment response of the preceding transmission requirement of the $n^{th}$ transmission requirement and an acknowledgment response of at least one first transmission. The first transmission is a transmission that is detected by the first terminal device and for which no acknowledgment response is received, that is, a transmission whose acknowledgment response may be subsequently received. In this design, the preceding acknowledgment response of the $n^{th}$ transmission requirement includes the acknowledgment responses of the first transmission requirement to the $(n - 1)^{th}$ transmission requirement and the acknowledgment response of the first transmission. In conclusion, the preceding acknowledgment response of the $n^{th}$ transmission requirement may include an acknowledgment response that is anticipated by the first terminal device and whose time domain location is after $t_0$ and before the resource corresponding to the $n^{th}$ transmission requirement.

Optionally, the first transmission may be a transmission that is performed by the first terminal device or another terminal device before $t_0$ but whose acknowledgment response has not been received.

Optionally, the first terminal device may listen to a channel before $t_0$. If no first transmission is detected, the first terminal device may determine that the preceding acknowledgment response of the $n^{th}$ transmission requirement includes the acknowledgment response of the preceding transmission requirement of the $n^{th}$ transmission requirement (that is, the first design). If at least one first transmission is detected, the terminal device may determine that the preceding acknowledgment response of the $n^{th}$ transmission requirement includes the acknowledgment response of the preceding transmission requirement of the $n^{th}$ transmission requirement and an acknowledgment response of the at least one first transmission (that is, the second design).

Based on the manner 3, the $n^{th}$ start time meets $t_0 + T_n$. $T_n$ meets the following formula:

$$T_n = max \left\{ \left\lceil \frac{t_{n,LBT}}{t_s} \right\rceil \times t_s + \sum_{i=1}^{n-1} t_{i,R} + t_{n,HARQ}, T_{offset} \right\};$$

or

$$T_n = max \left\{ \left\lceil \frac{t_{n,LBT}}{t_s} + \sum_{i=1}^{n-1} S_{i,R} + S_{n,HARQ} \right\rceil \times t_s, T_{offset} \right\};$$

or

$$T_n = max \left\{ \left\lceil \frac{t_{n,LBT}+t_{cpe}}{t_s} \right\rceil \times t_s + \sum_{i=1}^{n-1} t_{i,R} + t_{n,HARQ}, T_{offset} \right\};$$

or

$$T_n = max \left\{ \left\lceil \frac{t_{n,LBT}+t_{cpe}}{t_s} + \sum_{i=1}^{n-1} S_{i,R} + S_{n,HARQ} \right\rceil \times t_s, T_{offset} \right\};$$

where

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an $i^{th}$ preceding transmission requirement of the $n^{th}$ transmission requirement; $\sum_{i=1}^{n-1} t_{i,R}$ is a sum of durations of resources corresponding to $n - 1$ preceding transmission requirements of the $n^{th}$ transmission requirement; $t_{n,HARQ}$ is a total duration of the resource corresponding to the preceding acknowledgment response of the $n^{th}$ transmission requirement; $S_{i,R}$ is a quantity of time units occupied by the resource corresponding to the $i^{th}$ preceding transmission requirement of the $n^{th}$ transmission requirement; $\sum_{i=1}^{n-1} S_{i,R}$ is a sum of quantities of time units occupied by the resources corresponding to the $n - 1$ preceding transmission requirements of the $n^{th}$ transmission requirement; and $S_{n,HARQ}$ is a total quantity of time units occupied by the resource corresponding to the preceding acknowledgment response of the $n^{th}$ transmission requirement.

For descriptions of $t_0$, the time unit, $t_s$, $T_{offset}$, and $t_{cpe}$, refer to descriptions in the foregoing manner 1. Details are not described herein again.

When the first terminal device transmits the data on the resource corresponding to the preceding transmission requirement of the $n^{th}$ transmission requirement, or a terminal device (that is, a receive end of the at least one first transmission) transmits an acknowledgment response on the resource corresponding to the preceding acknowledgment response of the $n^{th}$ transmission requirement, because the channel is occupied, it can be learned from the foregoing descriptions of the LBT mechanism in the technical descriptions of the fourth point that, in a process in which the first terminal device performs LBT for the $n^{th}$ transmission requirement, an actual LBT duration of the $n^{th}$ transmission requirement may be longer. In addition, compared with the LBT duration that is determined in S301 and that corresponds to the $n^{th}$ transmission requirement, the actual LBT duration of the $n^{th}$ transmission requirement may be a second delay duration longer. The second delay duration is related to a sum of the total duration occupied by the resources corresponding to the $(n - 1)$ preceding transmission requirements and the total duration occupied by the resource corresponding to the preceding acknowledgment response of the $n^{th}$ transmission requirement.

In the manner 3, it can be ensured that a location of the $n^{th}$ start time determined by the first terminal device meets $(t_0 + T_n) \geq (t_0 + t_{n,LBT} + \sum_{i=1}^{n-1} t_{i,R} + t_{n,HARQ})$. In this way, the first terminal device may perform LBT between $t_0$ and the $n^{th}$ start time (that is, $t_0 + T_n$). In the manner 3, sufficient time is reserved for the first terminal device to perform LBT before the $n^{th}$ start time. Therefore, this manner can reduce a probability that the LBT duration of the $n^{th}$ transmission requirement has not ended when the resource corresponding to the $n^{th}$ transmission requirement arrives, thereby increasing a probability that the first terminal device can transmit the data on the resource corresponding to the $n^{th}$ transmission requirement.

Further, in the manner 3, in addition to the LBT duration corresponding to the $n^{th}$ transmission requirement, the first terminal device further considers the duration $t_{cpe}$ for sending the CPE by the first terminal device, to ensure that a location of the $n^{th}$ start time determined by the first terminal device meets $(t_0 + T_n) \geq (t_0 + t_{n,LBT} + t_{cpe} + \sum_{i=1}^{n-1} t_{i,R} + t_{n,HARQ})$. In this way, the first terminal device may perform LBT and send the CPE between $t_0$ and the $n^{th}$ start time (that is, $t_0 + T_n$). In the manner 3, sufficient time is reserved for the first terminal device to perform LBT and send the CPE before the $n^{th}$ start time. Therefore, this manner can reduce a probability that the LBT duration of the $n^{th}$ transmission requirement has not ended or sending of the CPE has not ended when the resource corresponding to the $n^{th}$ transmission requirement arrives, thereby increasing a probability that the first terminal device can transmit the data on the resource corresponding to the $n^{th}$ transmission requirement.

Compared with the manner 2, the manner 3 further considers the time domain resource occupied by the resource corresponding to the preceding acknowledgment response of the $n^{th}$ transmission requirement. Therefore, the $n^{th}$ start time obtained through calculation in the manner 3 additionally includes a second delay duration, as compared with that in the manner 2. The second delay duration is greater than or equal to the total duration occupied by the resource corresponding to the preceding acknowledgment response of the $n^{th}$ transmission requirement. Based on this, compared with the manner 2, the manner 3 can further reduce the probability that the LBT duration of the $n^{th}$ transmission requirement has not ended when the resource corresponding to the $n^{th}$ transmission requirement arrives.

Optionally, in this embodiment of this application, the first terminal device may perform step A2 in, but not limited to, the following manners. The following still uses the $n^{th}$ transmission requirement as an example for description.

Manner 1: The first terminal device determines the resource selection range of the $n^{th}$ transmission requirement based on the $n^{th}$ start time (that is, the start time of the resource selection range of the $n^{th}$ transmission requirement). Then, the first terminal device determines, within the resource selection range of the $n^{th}$ transmission requirement, the resource corresponding to the $n^{th}$ transmission requirement.

Optionally, the start time of the resource selection range of the $n^{th}$ transmission requirement is determined above, and an end time of the resource selection range of the $n^{th}$ transmission requirement is determined based on a data transmission delay PDB of the first terminal device. For example, the end time of the resource selection range is $t_0 + T_{PDB}$. $t_0$ is the time at which the transmission requirements occur on the first terminal device. $T_{PDB}$ is determined based on the data transmission delay of the first terminal device. For example, $T_{PDB}$ may be less than or equal to the data transmission delay of the first terminal device.

Manner 2: The first terminal device determines a start time unit of the resource selection range of the $n^{th}$ transmission requirement based on the $n^{th}$ start time (that is, the start time of the resource selection range of the $n^{th}$ transmission requirement). The first terminal device may further determine a candidate resource set. Finally, the first terminal device determines, in the candidate resource set based on the start time unit of the resource selection range of the $n^{th}$ transmission requirement, the resource corresponding to the $n^{th}$ transmission requirement.

Optionally, the resource corresponding to the $n^{th}$ transmission requirement is after the start time unit of the resource selection range of the $n^{th}$ transmission requirement.

Optionally, the candidate resource set may include candidate resources corresponding to the N transmission requirements. The candidate resource set may be selected by the first terminal device. For a specific process, refer to descriptions in the technical descriptions of the first point. Details are not described herein again. For example, the first terminal device may determine the candidate resource set from [$t_0 + T_{offset}$, $t_0 + T_{PDB}$] based on a sensing result in a sensing window.

Optionally, a gap between any two candidate resources in the candidate resource set is greater than or equal to the minimum gap.

Manner 3: The first terminal device determines a candidate resource set of the $n^{th}$ transmission requirement based on the $n^{th}$ start time (that is, the start time of the resource selection range of the $n^{th}$ transmission requirement). Then, the first terminal device determines, in the candidate resource set of the $n^{th}$ transmission requirement, the resource corresponding to the $n^{th}$ transmission requirement.

Optionally, in the candidate resource set, a start time of a first candidate resource (that is, a candidate resource at the first time domain location) is greater than or equal to the $n^{th}$ start time. Optionally, an end time of a second candidate resource (that is, a candidate resource at the last time domain location) is less than $t_0 + T_{PDB}$.

It should be further noted that the foregoing manner 1 to manner 3 are described by using the $n^{th}$ transmission requirement as an example for clear description. However, in an actual scenario, each step in the foregoing manner 1 to manner 3 is performed by the first terminal device for the N transmission requirements in parallel. After a current step is completed for the N transmission requirements, a next step is performed in parallel.

A resource configuration process may be related to the PHY layer and the MAC layer of the first terminal device. Therefore, the following describes a resource configuration process of steps A1 and A2 from perspectives of the PHY layer and the MAC layer as an example.

In A1, the PHY layer determines the $n^{th}$ start time based on the LBT duration corresponding to the $n^{th}$ transmission requirement.

Implementation 1: The first terminal device implements step A2 in the foregoing manner 1. The PHY layer and the MAC layer of the first terminal device perform the following steps:

> A2-1-1: The PHY layer sends the $n^{th}$ start time to the MAC layer.
> A2-1-2: The MAC layer determines the resource selection range of the $n^{th}$ transmission requirement based on the $n^{th}$ start time.
> A2-1-3: The MAC layer determines, within the resource selection range of the $n^{th}$ transmission requirement, the resource corresponding to the $n^{th}$ transmission requirement.

For the resource selection range, refer to the foregoing descriptions of the manner 1. Details are not described herein again.

Implementation 2: The first terminal device implements step A2 in the foregoing manner 1. The PHY layer and the MAC layer of the first terminal device perform the following steps:

> A2-2-1: The PHY layer determines the resource selection range of the $n^{th}$ transmission requirement based on the $n^{th}$ start time.
> A2-2-2: The PHY layer sends the resource selection range of the $n^{th}$ transmission requirement to the MAC layer.
> A2-2-3: The MAC layer determines, within the resource selection range of the $n^{th}$ transmission requirement, the resource corresponding to the $n^{th}$ transmission requirement.

For the resource selection range in the implementation 1 and the implementation 2, refer to the foregoing descriptions of the resource selection range in the manner 1. Details are not described herein again.

Implementation 3: The first terminal device implements step A2 in the foregoing manner 2. The PHY layer and the MAC layer of the first terminal device perform the following steps:

> A2-3-1: The PHY layer determines the start time unit of the resource selection range of the $n^{th}$ transmission requirement based on the $n^{th}$ start time.
> A2-3-2: The PHY layer sends the start time unit of the resource selection range of the $n^{th}$ transmission requirement and the candidate resource set to the MAC layer.

It should be noted that the candidate resource set is a set applicable to the N transmission requirements. To be specific, the MAC layer may select, from the candidate resource, a resource corresponding to each of the N transmission requirements.

A2-3-3: The MAC layer determines, in the candidate resource set based on the start time unit of the resource selection range of the $n^{th}$ transmission requirement, the resource corresponding to the $n^{th}$ transmission requirement.

For the candidate resource set in this Embodiment 3, refer to the foregoing descriptions of the candidate resource set in the manner 2. Details are not described herein again.

Implementation 4: The first terminal device implements step A2 in the foregoing manner 3. The PHY layer and the MAC layer of the first terminal device perform the following steps:

A2-4-1: The PHY layer determines the candidate resource set of the $n^{th}$ transmission requirement based on the $n^{th}$ start time.

A2-4-2: The PHY layer sends the candidate resource set of the $n^{th}$ transmission requirement to the MAC layer.

A2-4-3: The MAC layer determines, in the candidate resource set of the $n^{th}$ transmission requirement, the resource corresponding to the $n^{th}$ transmission requirement.

For the candidate resource set in this Embodiment 4, refer to the foregoing descriptions of the candidate resource set in the manner 3. Details are not described herein again.

It should be noted that the foregoing implementation 1 to implementation 4 are described by using the $n^{th}$ transmission requirement as an example for clear description. However, in an actual scenario, each step in the foregoing implementation 1 to implementation 4 is performed by the first terminal device for the N transmission requirements in parallel. After a current step is completed for the N transmission requirements, a next step is performed in parallel.

It should be noted that, in the foregoing manner 1 to manner 3, when determining, in parallel, the resource corresponding to each of the N transmission requirements, the first terminal device needs to ensure that a gap between any two determined resources is greater than or equal to the minimum gap. Similarly, in the foregoing implementation 1 to implementation 4, when determining, in parallel, the resource corresponding to each of the N transmission requirements, the MAC layer of the first terminal device also needs to ensure that a gap between any two determined resources is greater than or equal to the minimum gap.

In an implementation, the first terminal device/MAC layer may first determine, in a reverse chronological order of time domain locations, a resource corresponding to an $N^{th}$ transmission requirement, and then determine, by meeting a requirement of the minimum gap, a resource corresponding to an $(N-1)^{th}$ transmission requirement, until a resource corresponding to the first transmission requirement is determined.

In another implementation, the first terminal device/MAC layer may first determine, in ascending order of sizes of resource selection ranges, a resource corresponding to a transmission requirement with a smallest resource selection range, and then determine, by meeting a requirement of the minimum gap, a resource corresponding to a transmission requirement with a second smallest resource selection range, until a resource corresponding to a transmission requirement with a largest resource selection range is determined.

Similarly, in still another implementation, the first terminal device/MAC layer may first select, in ascending order of sizes of time domain ranges of candidate resource sets, a resource from a candidate resource set with a smallest time domain range, and then select, by meeting a requirement of the minimum gap, a next resource from a candidate resource set with a second smallest time domain range, until a resource is selected from a candidate resource set with a largest time domain range.

It should be noted that the first terminal device may simultaneously start LBT for the N transmission requirements. Optionally, the first terminal device may start to perform LBT in, but not limited to, the following manners.

Manner a: When the transmission requirements occur on the first terminal device (that is, at $t_0$), LBT starts to be performed.

Manner b: In a process of determining the N resources, LBT starts to be performed.

For example, in a process in which the first terminal device determines the N resources in the foregoing manner 1, after determining the resource selection ranges of the N transmission requirements, the first terminal device may start to perform LBT.

For example, in a process in which the first terminal device determines the N resources in the foregoing manner 2, after determining start time units of the resource selection ranges of the N transmission requirements or after determining the candidate resource set, the first terminal device may start to perform LBT.

For example, in a process in which the first terminal device determines the N resources in the foregoing manner 3, after determining candidate resource sets of the N transmission requirements, the first terminal device may start to perform LBT.

For example, in a process in which the first terminal device determines the N resources in the foregoing implementation 1, when the PHY layer sends a start time of the resource selection range of each of the N transmission requirements to the MAC layer, LBT starts to be performed.

For example, in a process in which the first terminal device determines the N resources in the foregoing implementation 2, when the PHY layer sends the resource selection range of each of the N transmission requirements to the MAC layer, LBT starts to be performed.

For example, in a process in which the first terminal device determines the N resources in the foregoing implementation 3, when the PHY layer sends a start time unit of the resource selection range of each of the N transmission requirements and the candidate resource set to the MAC layer, LBT starts to be performed.

For example, in a process in which the first terminal device determines the N resources in the foregoing implementation 4, when the PHY layer sends a candidate resource set of each of the N transmission requirements to the MAC layer, LBT starts to be performed.

Manner c: After the N resources are determined, LBT starts to be performed.

For example, when the first terminal device determines the N resources in the foregoing Embodiment 1 to Embodiment 4, after the MAC layer determines the N resources, when the MAC layer notifies the PHY layer of the N resources, LBT starts to be performed.

As shown in FIG. 3, after the first terminal device determines the N resources through S301 and S302, the first terminal device may transmit the data to the second terminal device on the N resources, that is, separately transmit the data on each resource. The second terminal device is a receive end of the N transmission requirements. In a process in which the first terminal device transmits the data on the N resources, when a resource corresponding to a transmission requirement arrives, LBT performed for the transmission requirement may have not ended (in other words, an LBT duration corresponding to the transmission requirement has not ended). In this case, the first terminal device may further reselect a resource for the transmission requirement. The following still uses the $n^{th}$ transmission requirement as an example for description.

S1: In a process of transmitting the data on the N resources, the first terminal device determines that the LBT duration corresponding to the $n^{th}$ transmission requirement has not ended.

Optionally, that the first terminal device determines that the LBT duration corresponding to the $n^{th}$ transmission requirement has not ended includes at least one of the following:

determining, at a first time, that the LBT duration corresponding to the $n^{th}$ transmission requirement has not ended; or
determining that a first duration is less than a remaining LBT duration corresponding to the $n^{th}$ transmission requirement.

The first time is located before a start time of the resource corresponding to the $n^{th}$ transmission requirement, or the first time is the start time of the resource corresponding to the $n^{th}$ transmission requirement; and the first duration is a duration between the first time and the start time of the resource corresponding to the $n^{th}$ transmission requirement. For example, when the first time is the start time of the resource corresponding to the $n^{th}$ transmission requirement, a value of the first duration is 0.

For example, when the first terminal device determines, at the first time (denoted as $t_1$ subsequently), that a remaining random number $R_{n,left}$ corresponding to the $n^{th}$ transmission requirement is greater than 0, it may be determined that the LBT duration corresponding to the $n^{th}$ transmission requirement has not ended.

For another example, when the first terminal device determines, at $t_1$, that the remaining random number $R_{n,left}$ corresponding to the $n^{th}$ transmission requirement is equal to 0, it may still be determined that the LBT duration corresponding to the $n^{th}$ transmission requirement has not ended, because the LBT duration corresponding to the $n^{th}$ transmission requirement further includes *defer*. In this case, the remaining LBT duration corresponding to the $n^{th}$ transmission requirement may be equal to *defer*.

S2: The first terminal device re-determines an $n^{th}$ start time based on the remaining LBT duration corresponding to the $n^{th}$ transmission requirement.

Optionally, the first terminal device may determine, based on the remaining random number $R_{n,left}$, the remaining LBT duration $t_{n,LBT,left}$ corresponding to the $n^{th}$ transmission requirement, that is, $t_{n,LBT,left} = t_{sensing} * R_{n,left}$ or $t_{n,LBT,left} = t_{sensing} * R_{n,left} + defer$.

Optionally, the first terminal device may still use the idea in step A1 to re-determine the $n^{th}$ start time based on the remaining LBT duration corresponding to the $n^{th}$ transmission requirement. The following describes, based on the manners in which the first terminal device determines the $n^{th}$ start time in step A1, manners of re-determining the $n^{th}$ start time.

Manner 1-1: The first terminal device performs step A1 in the manner 1. In this case, when re-determining the $n^{th}$ start time, the first terminal device may consider the remaining LBT duration corresponding to the $n^{th}$ transmission requirement, without considering another factor.

Based on the manner 1-1, the re-determined $n^{th}$ start time meets $t_0 + T_n'$. $T_n'$ meets the following formula:

$$T_n' = max\left\{(t_1 - t_0) + \left\lceil \frac{t_{n,LBT,left}}{t_s} \right\rceil \times t_s, T_{offset}\right\};$$

or

$$T_n' = max\left\{(t_1 - t_0) + \left\lceil \frac{t_{n,LBT,left}+t_{cpe}}{t_s} \right\rceil \times t_s, T_{offset}\right\}.$$

$t_1$ is the time at which it is determined that the LBT duration corresponding to the $n^{th}$ transmission requirement has not ended, that is, the first time. For other parameters in the formula, refer to descriptions in the foregoing manner 1. Details are not described herein again.

Manner 2-1: The first terminal device performs step A1 in the manner 2. In this case, when re-determining the $n^{th}$ start time, the first terminal device may consider both the remaining LBT duration corresponding to the $n^{th}$ transmission requirement and a resource corresponding to a target preceding transmission requirement of the $n^{th}$ transmission requirement (that is, a time domain resource occupied by the resource corresponding to the target preceding transmission requirement). The target preceding transmission requirement is a transmission requirement for which the first terminal device has not transmitted the data on a corresponding resource between $t_0$ and $t_1$ and whose resource is located before the resource of the $n^{th}$ transmission requirement in the N transmission requirements.

In the following, a quantity of target preceding transmission requirements of the $n^{th}$ transmission requirement is H, that is, an $(n - H)^{th}$ transmission requirement to the $(n - 1)^{th}$ transmission requirement in the N transmission requirements. H is a positive integer.

Based on the manner 2-1, the re-determined $n^{th}$ start time meets $t_0 + T_n'$. $T_n'$ meets the following formula:

$$T_n' = max\left\{(t_1 - t_0) + \left\lceil \frac{t_{n,LBT,left}}{t_s} \right\rceil \times t_s + \sum_{i=n-H}^{n-1} t_{i,R}, T_{offset}\right\};$$

or

$$T_n' = max\left\{(t_1 - t_0) + \left\lceil \frac{t_{n,LBT,left}}{t_s} + \sum_{i=n-H}^{n-1} S_{i,R} \right\rceil \times t_s, T_{offset}\right\};$$

or

$$T_n' = max\left\{(t_1 - t_0) + \left\lceil \frac{t_{n,LBT,left} + t_{cpe}}{t_s} \right\rceil \times t_s + \sum_{i=n-H}^{n-1} t_{i,R}, T_{offset}\right\};$$

or

$$T_n' = max\left\{(t_1 - t_0) + \left\lceil \frac{t_{n,LBT,left} + t_{cpe}}{t_c} + \sum_{i=n-H}^{n-1} S_{i,R} \right\rceil \times t_s, T_{offset}\right\}.$$

$t_1$ is the time at which it is determined that the LBT duration corresponding to the $n^{th}$ transmission requirement has not ended, that is, the first time, $t_{i,R}$ is a duration of a resource corresponding to an $i^{th}$ transmission requirement, $\sum_{i=n-H}^{n-1} t_{i,R}$ is a sum of durations of resources corresponding to the $H$ target preceding transmission requirements of the $n^{th}$ transmission requirement, $S_{i,R}$ is a quantity of time units occupied by the resource corresponding to the $i^{th}$ transmission requirement, and $\sum_{i=n-H}^{n-1} S_{i,R}$ is a sum of quantities of time units occupied by the resources corresponding to the $H$ target preceding transmission requirements of the $n^{th}$ transmission requirement. For other parameters in the formula, refer to descriptions in the foregoing manner 2. Details are not described herein again.

Manner 3-1: The first terminal device performs step A1 in the manner 3. In this case, when re-determining the $n^{th}$ start time, the first terminal device may consider the remaining LBT duration corresponding to the $n^{th}$ transmission requirement, a resource corresponding to a target preceding transmission requirement of the $n^{th}$ transmission requirement (that is, a time domain resource occupied by the resource corresponding to the target preceding transmission requirement), and a resource corresponding to a target preceding acknowledgment response of the $n^{th}$ transmission requirement (that is, a time domain resource occupied by the resource corresponding to the preceding acknowledgment response). The target preceding transmission requirement is a transmission requirement for which the first terminal device has not transmitted the data on a corresponding resource between $t_0$ and $t_1$ and whose resource is located before the resource of the $n^{th}$ transmission requirement in the N transmission requirements.

The target preceding acknowledgment response of the $n^{th}$ transmission requirement includes an acknowledgment response that is to be received by the first terminal device or another terminal device after $t_1$ and before the resource corresponding to the n $^{th}$ transmission requirement. Optionally, the target preceding acknowledgment response includes an acknowledgment response of the target preceding transmission requirement of the $n^{th}$ transmission requirement, and may further include an acknowledgment response of at least one second transmission. The second transmission is a transmission that is detected by the first terminal device before $t_1$ and for which no acknowledgment response is received.

Similar to the "acknowledgment response that is to be received by the another terminal device in the preceding acknowledgment response of the n $^{th}$ transmission requirement" in the foregoing manner 3, the acknowledgment response that is to be received by the another terminal device in this manner 3-1 is also determined after the first terminal device detects a transmission of the another terminal device and anticipates that a time at which the another terminal device receives an acknowledgment response of the transmission is located after $t_0$ and before the resource corresponding to the $n^{th}$ transmission requirement.

In the following, a quantity of target preceding transmission requirements of the $n^{th}$ transmission requirement is H, that is, an $(n - H)^{th}$ transmission requirement to the $(n - 1)^{th}$ transmission requirement in the N transmission requirements. H is a positive integer.

Based on the manner 3-1, the re-determined $n^{th}$ start time meets $t_0 + T_n'$. $T_n'$ meets the following formula:

$$T_n' = max\left\{(t_1 - t_0) + \left\lceil\frac{t_{n,LBT,left}}{t_s}\right\rceil \times t_s + \sum_{i=n-H}^{n-1} t_{i,R} + t'_{n,HARQ}, T_{offset}\right\};$$

or

$$T_n' = max\left\{(t_1 - t_0) + \left\lceil\frac{t_{n,LBT,left}}{t_s} + \sum_{i=n-H}^{n-1} S_{i,R} + S'_{n,HARQ}\right\rceil \times t_s, T_{offset}\right\};$$

or

$$T_n' = max\left\{(t_1 - t_0) + \left\lceil\frac{t_{n,LBT,left}+t_{cpe}}{t_s}\right\rceil \times t_s + \sum_{i=n-H}^{n-1} t_{i,R} + t'_{n,HARQ}, T_{offset}\right\};$$

or

$$T_n' = max\left\{(t_1 - t_0) + \left\lceil\frac{t_{n,LBT,left}+t_{cpe}}{t_s} + \sum_{i=n-H}^{n-1} S_{i,R} + S'_{n,HARQ}\right\rceil \times t_s, T_{offset}\right\}.$$

$t_1$ is the time at which it is determined that the LBT duration corresponding to the $n^{th}$ transmission requirement has not ended, that is, the first time, $t_{i,R}$ is a duration of a resource corresponding to an $i^{th}$ transmission requirement, $\sum_{i=n-H}^{n-1} t_{i,R}$ is a sum of durations of resources corresponding to the $H$ target preceding transmission requirements of the $n^{th}$ transmission requirement, $S_{i,R}$ is a quantity of time units occupied by the resource corresponding to the $i^{th}$ transmission requirement, $\sum_{i=n-H}^{n-1} S_{i,R}$ is a sum of quantities of time units occupied by the resources corresponding to the $H$ target preceding transmission requirements of the $n^{th}$ transmission requirement, $t'_{n,HARQ}$ is a total duration of the resource corresponding to the target preceding acknowledgment response of the $n^{th}$ transmission requirement, and $S'_{n,HARQ}$ is a total quantity of time units occupied by the resource corresponding to the target preceding acknowledgment response of the $n^{th}$ transmission requirement.

For other parameters in the formula, refer to descriptions in the foregoing manner 2. Details are not described herein again.

In the foregoing manner, sufficient time can be reserved for the remaining LBT duration corresponding to the $n^{th}$ transmission requirement of the first terminal device before the re-determined $n^{th}$ start time, so that a probability that the LBT duration of the $n^{th}$ transmission requirement has not ended when a re-determined resource corresponding to the $n^{th}$ transmission requirement arrives can be reduced, thereby improving a probability that the first terminal device can transmit the data on the resource corresponding to the $n^{th}$ transmission requirement.

S3: The first terminal device re-determines, based on the re-determined $n^{th}$ start time, a resource corresponding to the $n^{th}$ transmission requirement.

For an implementation of performing S3 by the first terminal device, refer to the foregoing specific descriptions of step A2. Details are not described herein again.

The resource corresponding to the $n^{th}$ transmission requirement may be re-determined through S1 to S3. However, when there is a subsequent transmission requirement of the $n^{th}$ transmission requirement in the N transmission requirements, the change of the resource corresponding to the $n^{th}$ transmission requirement may result in that a gap between any two resources does not meet a condition of the minimum gap or an LBT duration corresponding to the subsequent transmission requirement has not ended when a start time of the subsequent transmission requirement arrives. Based on this, in this embodiment of this application, a resource corresponding to the subsequent transmission requirement may be further re-determined in the following two implementations.

In a first implementation, after determining, through S1, that the LBT duration corresponding to the $n^{th}$ transmission requirement has not ended, the first terminal device directly perform the following steps to re-determine the resource corresponding to the subsequent transmission requirement of the $n^{th}$ transmission requirement. The following uses an example in which the subsequent transmission requirement of the $n^{th}$ transmission requirement is a

$k$th transmission requirement for description.

F1: The first terminal device re-determines a $k$th start time based on a remaining LBT duration corresponding to the $k$th transmission requirement, or re-determines a $k$th start time based on the remaining LBT duration corresponding to the $n$th transmission requirement and the minimum gap. $k$ is a positive integer, $n < k \leq N$, and the $k$th start time is a start time of a resource selection range of the $k$th transmission requirement.

In an implementation, the first terminal device may re-determine the $k$th start time based on the remaining LBT duration corresponding to the $k$th transmission requirement. For a specific process, refer to the foregoing descriptions in the manner 1-1, the manner 2-1, and the manner 3-1 in S2. Details are not described herein again.

In another implementation, the first terminal device may re-determine the $k$th start time based on the remaining LBT duration corresponding to the $n$th transmission requirement and the minimum gap. For a specific process, also refer to the foregoing descriptions in the manner 1-1, the manner 2-1, and the manner 3-1 in S2. Details are not described herein again. The following provides specific descriptions.

Manner 1-2: The re-determined $n$th start time meets $t_0 + T_k'$. $T_k'$ meets the following formula:

$$T_k' = max\left\{(t_1 - t_0) + \left\lceil \frac{t_{n,LBT,left} + t_{mingap} \times (k-n)}{t_s} \right\rceil \times t_s, T_{offset}\right\};$$

or

$$T_k' = max\left\{(t_1 - t_0) + \left\lceil \frac{t_{n,LBT,left} + t_{mingap} \times (k-n) + t_{cpe}}{t_s} \right\rceil \times t_s, T_{offset}\right\}.$$

$t_{mingap}$ is a duration of the minimum gap.

Manner 2-2: The re-determined $k$th start time meets $t_0 + T_k'$. $T_n'$ meets the following formula:

$$T_k' = max\left\{(t_1 - t_0) + \left\lceil \frac{t_{n,LBT,left} + t_{mingap} \times (k-n)}{t_s} \right\rceil \times t_s + \sum_{i=k-J}^{k-1} t_{i,R}, T_{offset}\right\};$$

or

$$T_k' = max\left\{(t_1 - t_0) + \left\lceil \frac{t_{n,LBT,left} + t_{mingap} \times (k-n)}{t_s} + \sum_{i=k-J}^{k-1} S_{i,R} \right\rceil \times t_s, T_{offset}\right\};$$

or

$$T_k' = max\left\{(t_1 - t_0) + \left\lceil \frac{t_{n,LBT,left} + t_{mingap} \times (k-n) + t_{cpe}}{t_s} \right\rceil \times t_s + \sum_{i=k-J}^{k-1} t_{i,R}, T_{offset}\right\};$$

or

$$T_k' = max\left\{(t_1 - t_0) + \left\lceil \frac{t_{n,LBT,left} + t_{mingap} \times (k-n) + t_{cpe}}{t_s} + \sum_{i=k-J}^{k-1} S_{i,R} \right\rceil \times t_s, T_{offset}\right\}.$$

A quantity of target preceding transmission requirements of the $k$th transmission requirement is J, that is, a $(k - J)$th transmission requirement to a $(k - 1)$th transmission requirement in the N transmission requirements, $\sum_{i=k-J}^{k-1} t_{i,R}$ is a sum of durations of resources corresponding to the J target preceding transmission requirements of the $k$th transmission requirement, and $\sum_{i=k-J}^{k-1} S_{i,R}$ is a sum of quantities of time units occupied by the resources corresponding to the J target preceding transmission requirements of the $k$th transmission requirement.

Manner 3-2: The re-determined $k$th start time meets $t_0 + T_k'$. $T_n'$ meets the following formula:

$$T_k' = max\left\{(t_1 - t_0) + \left\lceil \frac{t_{n,LBT,left} + t_{mingap} \times (k-n)}{t_s} \right\rceil \times t_s + \sum_{i=k-J}^{k-1} t_{i,R} + t'_{k,HARQ}, T_{offset}\right\};$$

or

$$T_k' = max\left\{(t_1 - t_0) + \left\lceil \frac{t_{n,LBT,left} + t_{mingap} \times (k-n)}{t_s} + \sum_{i=k-J}^{k-1} S_{i,R} \right\rceil \times t_s + t'_{k,HARQ}, T_{offset}\right\};$$

or

$$T_k{}' = max\left\{(t_1 - t_0) + \left\lceil \frac{t_{n,LBT,left} + t_{mingap} \times (k-n) + t_{cpe}}{t_s} \right\rceil \times t_s + \sum_{i=k-J}^{k-1} t_{i,R} + t'_{k,HARQ}, T_{offset}\right\};$$

or

$$T_k{}' = max\left\{(t_1 - t_0) + \left\lceil \frac{t_{n,LBT,left} + t_{mingap} \times (k-n) + t_{cpe}}{t_s} + \sum_{i=k-J}^{k-1} S_{i,R} \right\rceil \times t_s + t'_{k,HARQ}, T_{offset}\right\}.$$

A quantity of target preceding transmission requirements of the $k^{th}$ transmission requirement is J, that is, a $(k$ - $J)^{th}$ transmission requirement to a $(k$ - 1$)^{th}$ transmission requirement in the N transmission requirements, $\sum_{i=k-J}^{k-1} t_{i,R}$ is a sum of durations of resources corresponding to the J target preceding transmission requirements of the $k^{th}$ transmission requirement, $\sum_{i=k-J}^{k-1} S_{i,R}$ is a sum of quantities of time units occupied by the resources corresponding to the J target preceding transmission requirements of the $k^{th}$ transmission requirement, $t'_{k,HARQ}$ is a total duration of a resource corresponding to a target preceding acknowledgment response of the $k^{th}$ transmission requirement, and $S'_{k,HARQ}$ is a total quantity of time units occupied by the resource corresponding to the target preceding acknowledgment response of the $k^{th}$ transmission requirement.

In the foregoing manner, sufficient time can be reserved for the remaining LBT duration corresponding to the $k^{th}$ transmission requirement of the first terminal device before the re-determined $k^{th}$ start time, so that a probability that the LBT duration of the $k^{th}$ transmission requirement has not ended when a re-determined resource corresponding to the $k^{th}$ transmission requirement arrives can be reduced, thereby improving a probability that the first terminal device can transmit the data on the resource corresponding to the $k^{th}$ transmission requirement. In addition, in this manner, it may be further considered that a gap between any two re-determined resources is greater than or equal to the minimum gap, to reserve sufficient time for the gap between the any two resources.

F2: The first terminal device re-determines, based on the re-determined $k^{th}$ start time, a resource corresponding to the $k^{th}$ transmission requirement. A gap between any two re-determined resources in the $n^{th}$ transmission requirement and the subsequent transmission requirement of the $n^{th}$ transmission requirement is greater than or equal to the minimum gap.

For an implementation of performing F2 by the first terminal device, refer to the foregoing specific descriptions of step A2. Details are not described herein again.

In a second implementation, after determining, through S1, that the LBT duration corresponding to the $n^{th}$ transmission requirement has not ended, the first terminal device may alternatively determine, based on at least one of the following determining conditions, whether the resource corresponding to the subsequent transmission requirement of the $n^{th}$ transmission requirement needs to be re-determined. The following still uses the example in which the subsequent transmission requirement of the $n^{th}$ transmission requirement is a $k^{th}$ transmission requirement for description.

Condition 1: It is determined that a second duration is less than a remaining LBT duration corresponding to the $k^{th}$ transmission requirement.

Condition 2: It is determined that a second time after the second duration elapses since the first time is later than a start time of a resource corresponding to the $k^{th}$ transmission requirement.

The second duration is a sum of the remaining LBT duration corresponding to the $n^{th}$ transmission requirement and $(k$ - $n)$ minimum gaps, and the first time is a time at which it is determined that the LBT duration corresponding to the $n^{th}$ transmission requirement has not ended (that is, $t_1$).

Optionally, the determining conditions may further include a condition 3: A gap between a re-determined resource corresponding to a $(k$ - 1$)^{th}$ transmission requirement and a resource corresponding to the $k^{th}$ transmission requirement is less than the minimum gap. Certainly, based on that a gap between any two resources is less than the minimum gap, the following condition may be further derived from the condition 3: A gap between a re-determined resource corresponding to a $(k$ - $j)^{th}$ transmission requirement and the resource corresponding to the $k^{th}$ transmission requirement is less than a total duration of $j$ minimum gaps.

Optionally, when at least one of the foregoing conditions is met, an LBT duration corresponding to the $k^{th}$ transmission requirement may have not ended when a start time of the $k^{th}$ transmission requirement arrives. Consequently, the resource corresponding to the $k^{th}$ transmission requirement is unavailable. To improve a probability that the first terminal device can transmit the data on the resource corresponding to the $k^{th}$ transmission requirement, the first terminal device may re-determine the resource corresponding to the $k^{th}$ transmission requirement. For a specific process, refer to the foregoing steps F1 and F2. Details are not described herein again.

In conclusion, this embodiment of this application provides a resource configuration method. According to this method, the first terminal device may reserve N resources based on LBT durations corresponding to N transmission requirements. Because the LBT durations are considered, cases in which an LBT duration of a transmission requirement has not ended when a resource corresponding to the transmission requirement arrives can be reduced, so that a probability that the first terminal device can transmit the data on the resource corresponding to the transmission requirement can be increased, thereby ensuring communication efficiency of the terminal device.

Based on the resource configuration method provided in the embodiment shown in FIG. 3, embodiments of this application further provide the following Embodiment 1 to Embodiment 4. The following describes each embodiment.

**Embodiment 1**

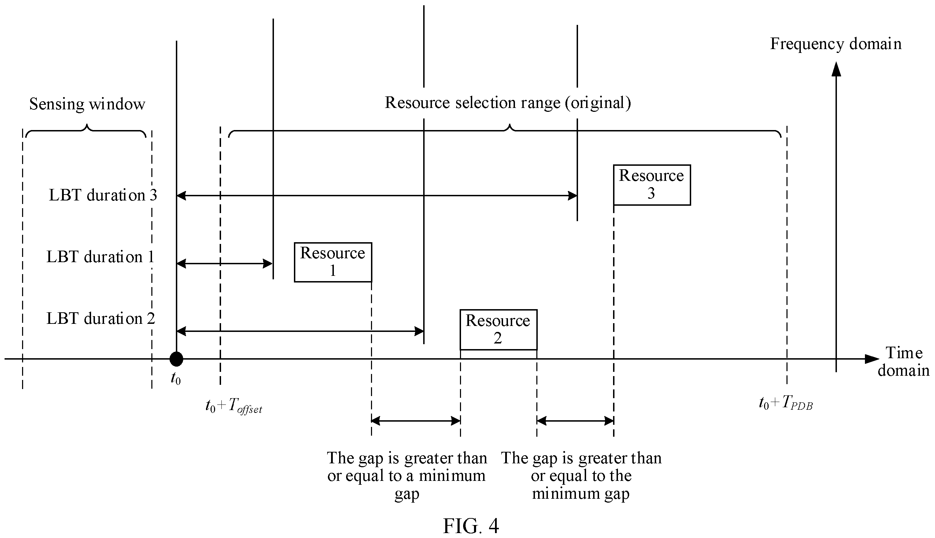

A first terminal device determines N resources based on LBT durations corresponding to N transmission requirements, as shown in FIG. 4. The N resources are in one-to-one correspondence with the N transmission requirements, and when N is an integer greater than 1, a requirement of a minimum gap needs to be met between the N resources. In FIG. 4, an LBT duration 1, an LBT duration 2, and an LBT duration 3 are respectively an LBT duration corresponding to the first transmission requirement, an LBT duration corresponding to the second transmission requirement, and an LBT duration corresponding to the third transmission requirement; and a resource 1, a resource 2, and a resource 3 are respectively a resource corresponding to the first transmission requirement, a resource corresponding to the second transmission requirement, and a resource corresponding to the third transmission requirement. A resource selection range (original) in FIG. 4 is a resource selection range in a conventional solution in which resource configuration is performed without considering an LBT duration. For details, refer to the foregoing technical descriptions of the first point, or refer to the resource selection range shown in FIG. 1.

Optionally, the minimum gap may be configured by a network device by using RRC signaling, or may be specified in a communication standard. This is not limited in this embodiment of this application.

Optionally, the first terminal device may start to determine the N resources when the transmission requirements occur (that is, at $t_0$).

Optionally, the first terminal device may determine, in the following manner, an LBT duration corresponding to each transmission requirement:

The first terminal device may generate a corresponding random number for each transmission requirement, and then the first terminal device may determine, based on the random number corresponding to each transmission requirement, the LBT duration corresponding to each transmission requirement. An $n^{th}$ transmission requirement is used as an example. A random number that is generated by the first terminal device and that corresponds to the $n^{th}$ transmission requirement is denoted as $R_n$. In this case, the first terminal device may determine, based on the random number $R_n$ corresponding to the $n^{th}$ transmission requirement, an LBT duration corresponding to the $n^{th}$ transmission requirement. For example, the LBT duration corresponding to the $n^{th}$ transmission requirement is equal to $t_{sensing} * R_n$ or $t_{sensing} * R_n + defer$. $n$ is a positive integer, $1 \leq n \leq N$, and $t_{sensing}$ is a duration of a sensing slot.

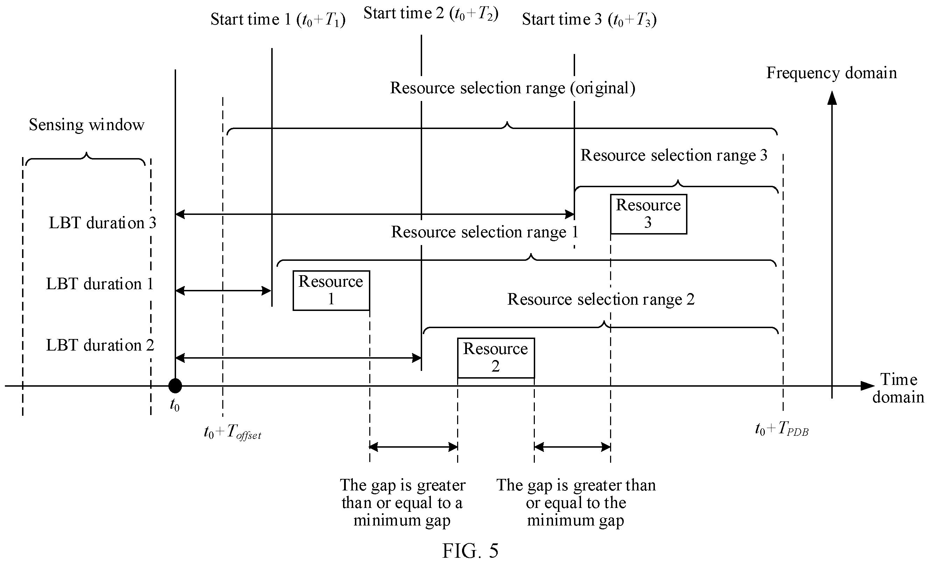

The first terminal device may determine, based on the LBT duration corresponding to each transmission requirement, a resource corresponding to the transmission requirement, as shown in FIG. 5. The $n^{th}$ transmission requirement is still used as an example. The first terminal device may determine, based on the LBT duration corresponding to the $n^{th}$ transmission requirement, a start time of a resource selection range of the $n^{th}$ transmission requirement, and then determine, based on the start time of the resource selection range of the $n^{th}$ transmission requirement, a resource corresponding to the $n^{th}$ transmission requirement. In FIG. 5, a start time 1, a start time 2, and a start time 3 are respectively a start time of a resource selection range of the first transmission requirement and a start time of a resource selection range of the second transmission requirement; and a resource selection range 1, a resource selection range 2, and a resource selection range 3 are respectively the resource selection range of the first transmission requirement, the resource selection range of the second transmission requirement, and the resource selection range of the third transmission requirement.

Optionally, the first terminal device may determine the start time of the resource selection range of the $n^{th}$ transmission requirement in the manner 1 in step A1 in the embodiment shown in FIG. 3. For a specific process, refer to the foregoing descriptions of the manner 1. Details are not described herein again. Therefore, $T_1$, $T_2$, and $T_3$ in FIG. 5 each meet the formula about $T_n$ in the manner 1.

For example, it is assumed that three transmission requirements occur on the first terminal device at $t_0$. In this case, the first terminal device generates a corresponding random number for each transmission requirement, and determines, based on the random number and the duration of the sensing slot, that LBT durations corresponding to the three transmission requirements are respectively 1 ms, 4 ms, and 7 ms. Then, the first terminal device may reserve a resource for each transmission requirement in ascending or descending order of the LBT durations.

The first terminal device determines, based on a start time of a resource selection range of each transmission requirement, the resource corresponding to each transmission requirement. For a specific implementation process, refer to any one of the manner 1 to the manner 3 in step A2 in the embodiment shown in FIG. 3, or any one of the implementation 1 to the implementation 4 in step A2. Resources corresponding to the three transmission requirements are shown in FIG. 4.

In FIG. 4, an LBT duration 1, an LBT duration 2, and an LBT duration 3 are respectively an LBT duration corresponding to the first transmission requirement, an LBT duration corresponding to the second transmission requirement, and an LBT duration corresponding to the third transmission requirement; a start time 1, a start time 2, and a start time 3 are respectively a start time of a resource selection range of the first transmission requirement, a start time of a resource selection range of the second transmission requirement, and a start time of a resource selection range of the third transmission requirement; and a resource 1, a resource 2, and a resource 3 are respectively a resource corresponding to the first transmission requirement, a resource corresponding to the second transmission requirement, and a resource corresponding to the third transmission requirement.

The following describes steps based on a PHY layer and a MAC layer of the first terminal device.

The PHY layer determines, based on an LBT duration corresponding to each of the three transmission requirements, a start time of a resource selection range of each transmission requirement.

In a first implementation, the PHY layer sends the start time of the resource selection range of each of the three transmission requirements to the MAC layer; the MAC layer determines the resource selection range of each transmission requirement based on the start time of the resource selection range of each of the three transmission requirements; and the MAC layer determines, within the resource selection range of each transmission requirement, the resource corresponding to each transmission requirement.

In a second implementation, the PHY layer determines the resource selection range of each transmission requirement based on the start time of the resource selection range of each of the three transmission requirements; the PHY layer sends the resource selection range of each transmission requirement to the MAC layer; and the MAC layer determines, within the resource selection range of each transmission requirement, the resource corresponding to each transmission requirement.

Optionally, in the first implementation and the second implementation, the MAC layer may first determine, in a reverse chronological order of time domain locations, a resource corresponding to the third transmission requirement, then determine, by meeting the requirement of the minimum gap, a resource corresponding to the second transmission requirement, and finally determine, by meeting the requirement of the minimum gap, a resource corresponding to the first transmission requirement.

Optionally, the MAC layer may first determine, in ascending order of sizes of resource selection ranges, a resource corresponding to a transmission requirement with a smallest resource selection range, and then determine, by meeting the requirement of the minimum gap, a resource corresponding to a transmission requirement with a second smallest resource selection range, until a resource corresponding to a transmission requirement with a largest resource selection range is determined.

In a third implementation, the PHY layer determines a start time unit of the resource selection range of each transmission requirement based on the start time of the resource selection range of each of the three transmission requirements. The PHY layer sends the start time unit of the resource selection range of each transmission requirement and a candidate resource set (denoted as an SA) to the MAC layer. The MAC layer determines, in the candidate resource set SA based on the start time unit of the resource selection range of each transmission requirement, the resource corresponding to each transmission requirement.

Optionally, the MAC layer may determine, from the SA in but not limited to the following manners, the resource corresponding to each transmission requirement.

Manner a: The MAC layer selects a resource combination (three resources) from the SA. If it is determined that the resource combination does not meet a requirement, the MAC layer reselects a resource combination until a resource combination meeting the requirement is selected. The requirement is as follows: A resource (denoted as a resource 1) corresponding to the first transmission requirement is not earlier than a start time unit of a resource selection range of the first transmission requirement, a resource (denoted as a resource 2) corresponding to the second transmission requirement is not earlier than a start time unit of a resource selection range of the second transmission requirement, a resource (denoted as a resource 3) corresponding to the third transmission requirement is not earlier than a start time unit of a resource selection range of the third transmission requirement, the minimum gap is ensured between the resource 1 and the resource 2, and the minimum gap is ensured between the resource 2 and the resource 3. The resources of the three transmission requirements are sorted in a chronological order of time domain locations, that is, the resource 1 is earlier than the resource 2, and the resource 2 is earlier than the resource 3.

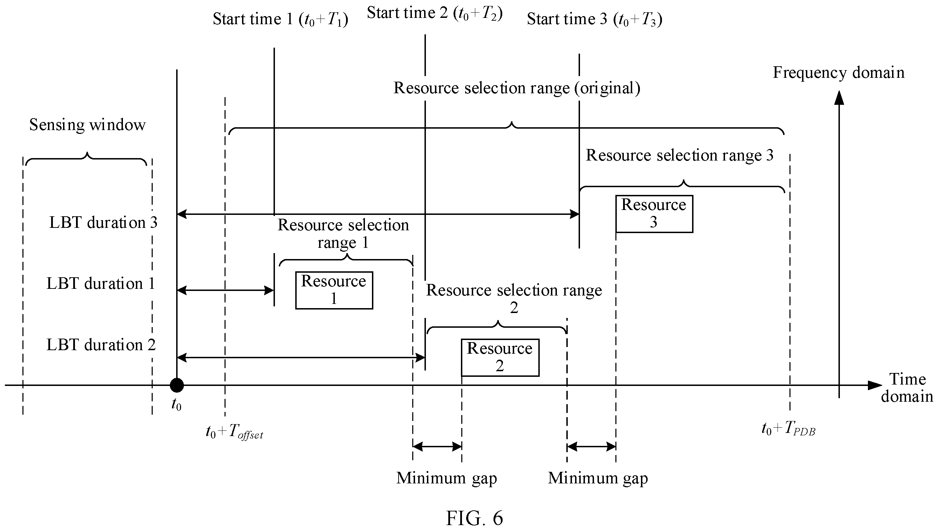

Manner b: The MAC layer selects three resources sequentially in a reverse chronological order of time domain locations, or selects three resources by starting from a resource with a smallest time domain range. As shown in FIG. 6, the MAC layer may select, from the SA, a resource 3 that is not earlier than the start time unit of the resource selection range of the third transmission requirement. After selecting the resource 3, the MAC layer selects, from the SA by meeting the requirement of the minimum gap, a resource 2 that is not earlier than the start time unit of the resource selection range of the second transmission requirement. Finally, the MAC layer selects, from the SA by meeting the requirement of the minimum gap, a resource 1 that is not earlier than the start time unit of the resource selection range of the first transmission requirement.

In other words, the MAC layer subtracts the minimum gap from a time domain location of the determined resource 3 to obtain a selection range of the resource 2, where a start time of the selection range is the start time unit of the resource selection range of the second transmission requirement, and an end time is a time domain location obtained by subtracting the minimum gap from the time domain location of the resource 3, and selects the resource 2 from the selection range within the SA; and then continues to obtain a selection range of the resource 1 in the foregoing manner, and select the resource 1 from the selection range.

In a fourth implementation, the PHY layer determines a candidate resource set of each transmission requirement based on the start time of the resource selection range of each of the three transmission requirements. A candidate resource set of the first transmission requirement is denoted as SA1, a candidate resource set of the second transmission requirement is denoted as SA2, and a candidate resource set of the third transmission requirement is denoted as SA3. The PHY layer sends the candidate resource sets {SA1, SA2, SA3} of the transmission requirements to the MAC layer. The MAC layer determines, in the candidate resource set of each transmission requirement, the resource corresponding to each transmission requirement.

In this implementation, the MAC layer may select a resource 1 from SA1, select a resource 2 from SA2, and select a resource 3 from SA3. The minimum gap is ensured between the resource 1 and the resource 2, and the minimum gap is ensured between the resource 2 and the resource 3.

In other words, the MAC layer may select the resource 3 from SA3; select candidate resources from SA2 by meeting the minimum gap, and select the resource 2 from the candidate resources selected from SA2, where at least the minimum gap is met between the resource 3 and the candidate resources; and continue to select candidate resources from SA1 by meeting the minimum gap, and select the resource 1 from the candidate resources selected from SA1, where at least the minimum gap is met between the resource 2 and the candidate resources.

**Embodiment 2**

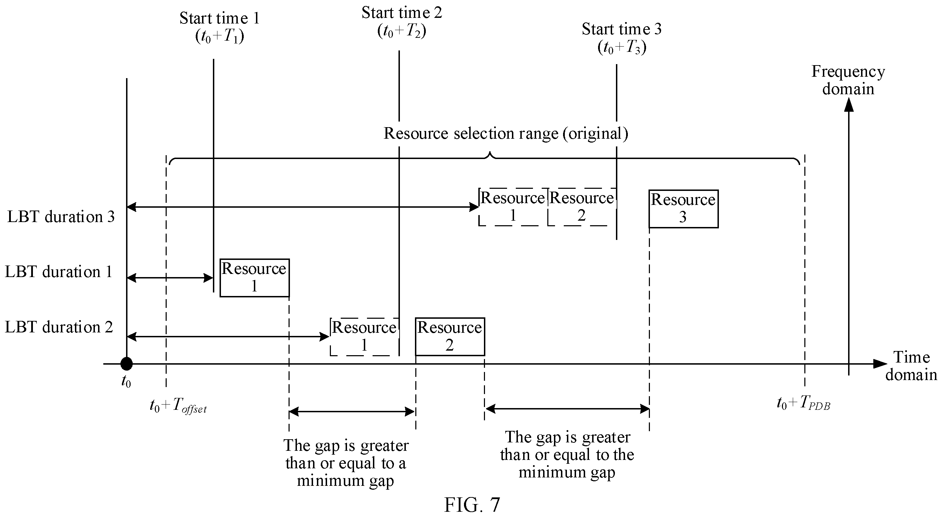

In a process of determining the resources corresponding to the N transmission requirements, the first terminal device determines, based on an LBT duration corresponding to each transmission requirement and a resource corresponding to a preceding transmission requirement of the transmission requirement, a resource corresponding to the transmission requirement, as shown in FIG. 7. The requirement of the minimum gap needs to be met between any two resources.

Optionally, the first terminal device may start to determine the N resources when the transmission requirements occur (that is, at $t_0$).

A resource selection range of each transmission requirement may be determined based on the LBT duration corresponding to the transmission requirement and the resource occupied by the preceding transmission requirement of the transmission requirement. The preceding transmission requirement may be a resource occupied by transmission of a transport block (transport block, TB) that is the same as a current resource, and/or another TB. For example, preceding transmission requirements of the third transmission requirement are the first transmission requirement and the second transmission requirement.

The following describes a principle provided in Embodiment 2. When a resource 1 arrives, because an LBT duration corresponding to the resource 1 has not ended, the first terminal device does not perform a transmission on the resource 1 because a channel is busy. In another possibility, before the resource 1 arrives, the LBT duration corresponding to the resource 1 has ended, and the first terminal device performs a transmission on the resource 1. In the second possibility, because data is transmitted on the resource 1, the channel is busy, and a counter of LBT for a resource 2 does not continue to decrease because the channel is occupied. In conclusion, for LBT processes performed by the first terminal device for the resource 2 and the resource 3, a time domain resource of the resource 1 is in a channel busy state. Therefore, when determining resource selection ranges of the second transmission requirement and the third transmission requirement, the terminal device needs to exclude a time domain location occupied by the resource 1. Similarly, a time domain location occupied by the resource 2 also affects the resource selection range of the third transmission requirement.

The $n^{th}$ transmission requirement is still used as an example. Based on the foregoing principle, the first terminal device may determine a start time of a resource selection range of the $n^{th}$ transmission requirement based on an LBT duration corresponding to the $n^{th}$ transmission requirement and a resource corresponding to a preceding transmission requirement of the $n^{th}$ transmission requirement, and then determine, based on the start time of the resource selection range of the $n^{th}$ transmission requirement, a resource corresponding to the $n^{th}$ transmission requirement.

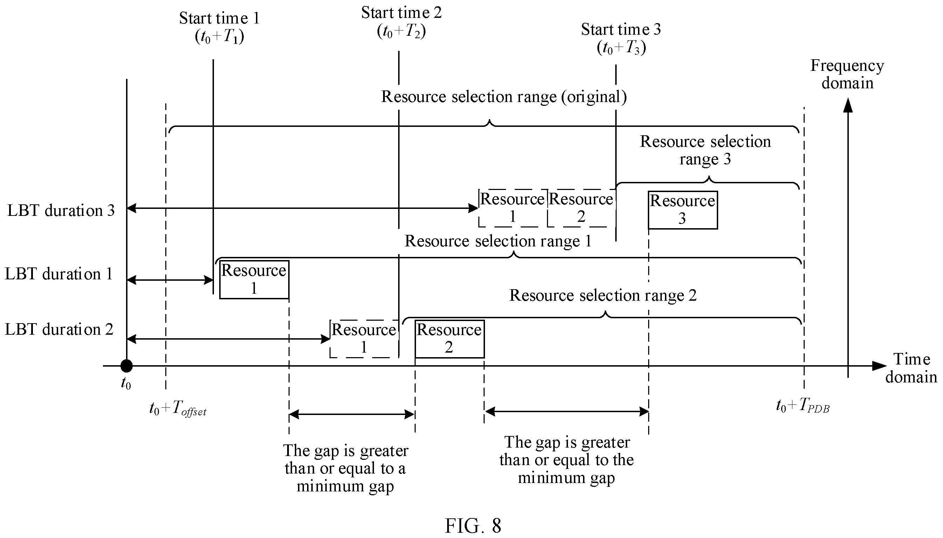

Optionally, the first terminal device may determine the start time of the resource selection range of the $n^{th}$ transmission requirement in the manner 2 in step A1 in the embodiment shown in FIG. 3. For a specific process, refer to the foregoing descriptions of the manner 2. Details are not described herein again. Three transmission requirements are still used as an example. $T_1$, $T_2$, and $T_3$ in FIG. 7 each meet the formula about $T_n$ in the manner 2. A resource selection range of each transmission requirement may be shown in FIG. 8.

In addition, the first terminal device determines, based on a start time of the resource selection range of each transmission requirement, the resource corresponding to each transmission requirement. For a specific implementation process, refer to any one of the manner 1 to the manner 3 in step A2 in the embodiment shown in FIG. 3, or any one of the implementation 1 to the implementation 4 in step A2. For the process, also refer to descriptions in Embodiment 1. Details are not described herein again.

**Embodiment 3**

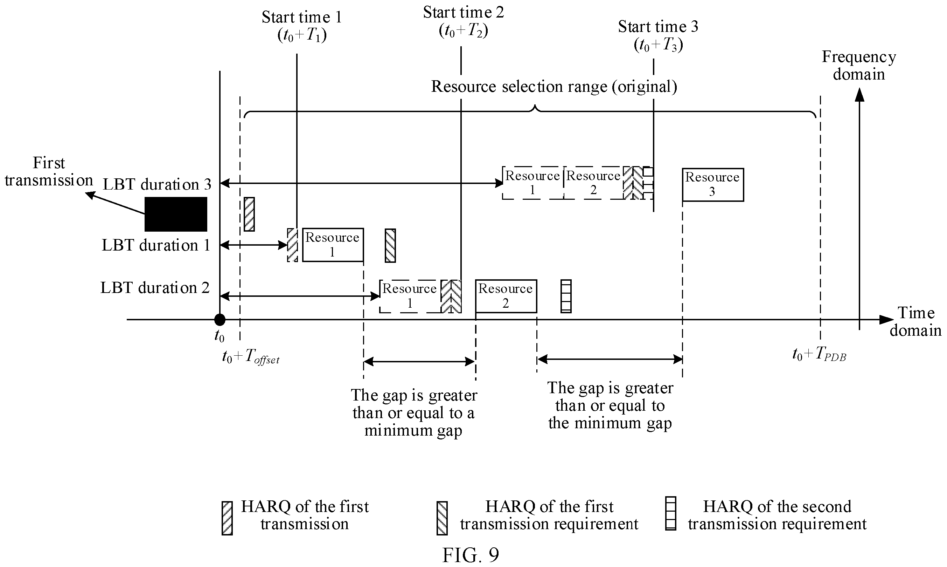

Based on Embodiment 2, in a process of determining the resources corresponding to the N transmission requirements, the first terminal device determines, based on an LBT duration corresponding to each transmission requirement, a resource corresponding to a preceding transmission requirement of the transmission requirement, and a resource corresponding to a preceding HARQ of the transmission requirement, a resource corresponding to the transmission requirement, as shown in FIG. 9. The requirement of the minimum gap needs to be met between any two resources.

Optionally, the first terminal device may start to determine the N resources when the transmission requirements occur (that is, at $t_0$).

A resource selection range of each transmission requirement may be determined based on the LBT duration corresponding to the transmission requirement, the resource occupied by the preceding transmission requirement of the transmission requirement, and the resource occupied by the preceding HARQ of the transmission requirement. The preceding transmission requirement may be a resource occupied by transmission of a transport block (transport block, TB) that is the same as a current resource, and/or another TB. For example, preceding transmission requirements of the third transmission requirement are the first transmission requirement and the second transmission requirement.

The preceding HARQ of each transmission requirement includes an acknowledgment response of the preceding transmission requirement of the transmission requirement, and may further include an acknowledgment response of at least one first transmission. The first transmission is transmission that is detected by the first terminal device and for which no acknowledgment response is received. As shown in FIG. 9, a preceding HARQ of the first transmission requirement may include a HARQ of a first transmission of another terminal device, and a preceding HARQ of the second transmission requirement includes a HARQ of the first transmission requirement and the HARQ of the first transmission of the another terminal device. Therefore, a preceding acknowledgment response of the $n^{th}$ transmission requirement includes acknowledgment responses of the first transmission requirement to the $(n - 1)^{th}$ transmission requirement and the acknowledgment response of the first transmission.

The $n^{th}$ transmission requirement is still used as an example. Based on the foregoing principle, the first terminal device may determine a start time of a resource selection range of the $n^{th}$ transmission requirement based on an LBT duration corresponding to the $n^{th}$ transmission requirement, a resource corresponding to a preceding transmission requirement of the $n^{th}$ transmission requirement, and a resource corresponding to a preceding HARQ of the $n^{th}$ transmission requirement, and then determine, based on the start time of the resource selection range of the $n^{th}$ transmission requirement, a resource corresponding to the $n^{th}$ transmission requirement.

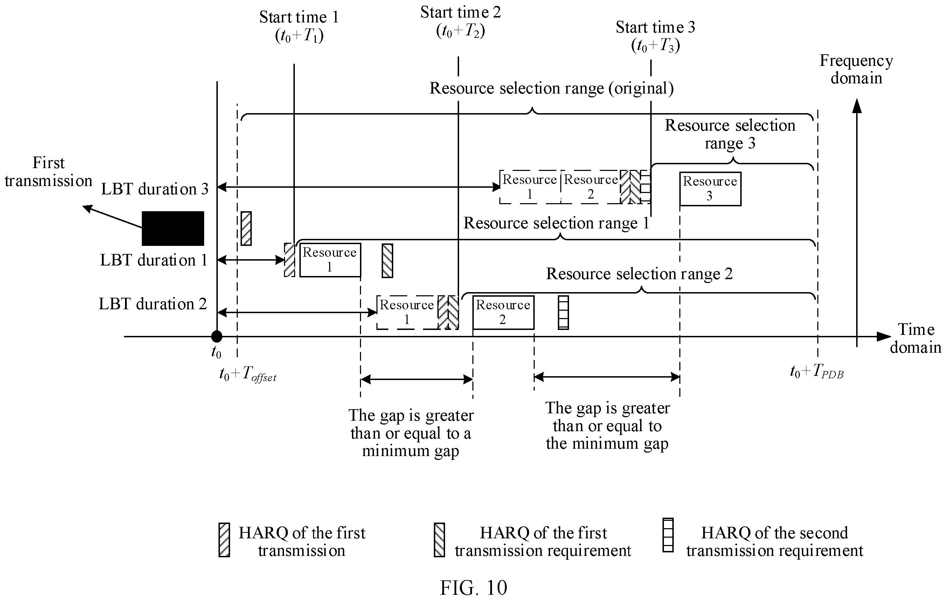

Optionally, the first terminal device may determine the start time of the resource selection range of the $n^{th}$ transmission requirement in the manner 3 in step A1 in the embodiment shown in FIG. 3. For a specific process, refer to the foregoing descriptions of the manner 3. Details are not described herein again. Three transmission requirements are still used as an example. $T_1$, $T_2$, and $T_3$ in FIG. 9 each meet the formula about $T_n$ in the manner 3. A resource selection range of each transmission requirement may be shown in FIG. 10.

As shown in FIG. 10, a resource selection range (that is, a resource selection range 1 in FIG. 10) of the first transmission requirement (corresponding to a resource 1) excludes an LBT duration 1 and an additional delay caused by a resource occupied by a preceding HARQ (that is, the HARQ of the first transmission) of the first transmission requirement, and a start time of the resource selection range 1 is a start time 1. A resource selection range (that is, a resource selection range 2 in FIG. 10) of the second transmission requirement (corresponding to a resource 2) excludes an LBT duration 2, a resource occupied by the resource 1 and a resource occupied by a HARQ of the resource 1, and the additional delay caused by the resource occupied by the HARQ of the first transmission, and a start time of the resource selection range 2 is a start time 2. A resource selection range (that is, a resource selection range 3 in FIG. 10) of the third transmission requirement (corresponding to a resource 3) excludes an LBT duration 3, the resource occupied by the resource 1 and the resource occupied by the HARQ of the resource 1, a resource occupied by the resource 2 and a resource occupied by a HARQ of the resource 2, and the additional delay caused by the resource occupied by the HARQ of the first transmission, and a start time of the resource selection range 3 is a start time 3.

In addition, the first terminal device determines, based on a start time of the resource selection range of each transmission requirement, the resource corresponding to each transmission requirement. For a specific implementation process, refer to any one of the manner 1 to the manner 3 in step A2 in the embodiment shown in FIG. 3, or any one of the implementation 1 to the implementation 4 in step A2. For the process, also refer to descriptions in Embodiment 1. Details are not described herein again.

**Embodiment 4**

After the first terminal device determines the N resources based on Embodiment 1 to Embodiment 3, the first terminal device may transmit a requirement on the N resources. When it is determined at a first time (that is, $t_1$) that the LBT duration corresponding to the $n^{th}$ transmission requirement has not ended, or it is determined that a first duration is less than a remaining LBT duration corresponding to the $n^{th}$ transmission requirement, re-determining of a resource corresponding to the $n^{th}$ transmission requirement is triggered. The first time is located before a start time of the resource corresponding to the $n^{th}$ transmission requirement, or the first time is the start time of the resource corresponding to the $n^{th}$ transmission requirement; and the first duration is a duration between the first time $t_1$ and the start time of the resource corresponding to the $n^{th}$ transmission requirement.

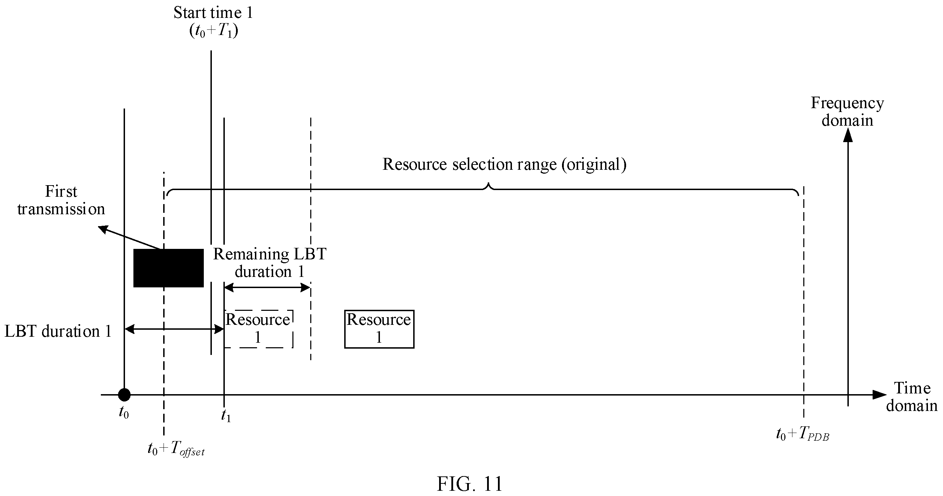

As shown in FIG. 11, when the first terminal device or another terminal device performs a first transmission before a resource 1 corresponding to the first transmission requirement arrives, because the first transmission occupies the channel, an LBT duration corresponding to the first transmission requirement may have not ended before a start time of the resource 1. In this Embodiment 4, the first terminal device may re-determine, based on the remaining LBT duration corresponding to the $n^{th}$ transmission requirement, a resource corresponding to the $n^{th}$ transmission requirement, as shown in FIG. 11.

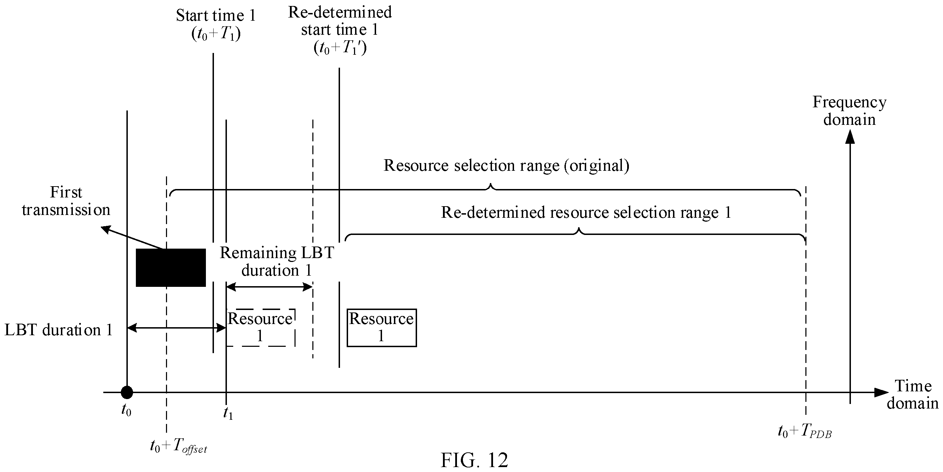

Optionally, the first terminal device may re-determine a start time of a resource selection range of the $n^{th}$ transmission requirement based on the remaining LBT duration corresponding to the $n^{th}$ transmission requirement, and then may re-determine, based on the re-determined start time of the resource selection range of the $n^{th}$ transmission requirement, a resource corresponding to the $n^{th}$ transmission requirement, as shown in FIG. 12.

Optionally, the first terminal device may determine the start time of the resource selection range of the $n^{th}$ transmission requirement in any manner recorded in step S2 in the embodiment shown in FIG. 3. For a specific process, refer to the foregoing descriptions of step S2. Details are not described herein again. Therefore, $T_1'$ in FIG. 12 meets the formula about $T_n'$ in step S2.

In addition, the first terminal device re-determines, based on the re-determined start time of the resource selection range of the $n^{th}$ transmission requirement, a resource corresponding to the $n^{th}$ transmission requirement. For a specific implementation process, refer to any one of the manner 1 to the manner 3 in step A2 in the embodiment shown in FIG. 3, or any one of the implementation 1 to the implementation 4 in step A2. For the process, also refer to descriptions in Embodiment 1. Details are not described herein again.

After the terminal device determines a plurality of resources, a gap between any two resources may be less than the minimum gap after a resource is re-determined. Considering such a problem, in an implementation, after triggering re-determining of the resource corresponding to the $n^{th}$ transmission requirement, the first terminal device may further re-determine a resource corresponding to a subsequent transmission requirement of the $n^{th}$ transmission requirement.

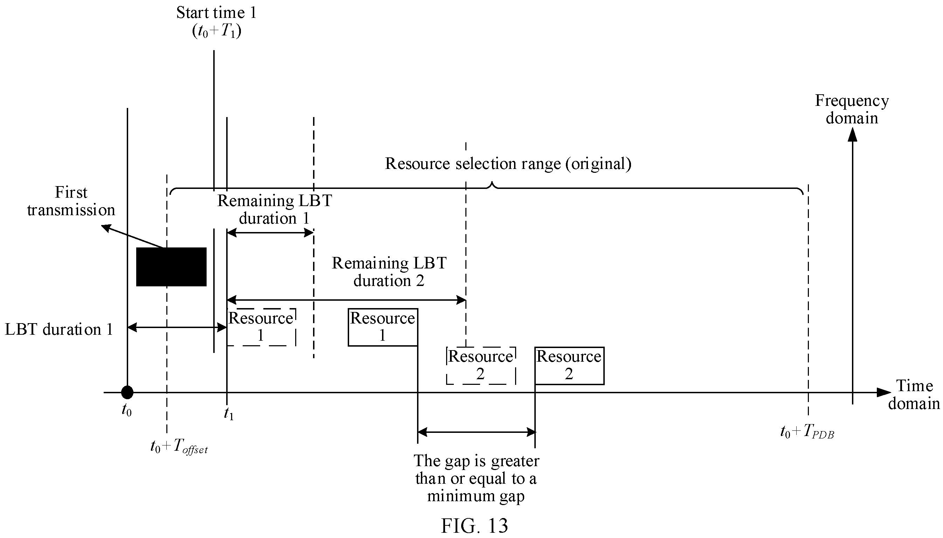

With reference to FIG. 13, optionally, when a gap between a reselected resource 1 and a resource 2 corresponding to a subsequent transmission requirement is less than the minimum gap, the first terminal device may trigger reselection of the resource 2. In other words, when a gap between the reselected resource 1 and the resource 2 still meets the requirement of the minimum gap, the resource 2 may not require reselection.

Optionally, the first terminal device may re-determine a resource selection range 1 of the first transmission requirement based on a remaining LBT duration (denoted as a remaining LBT duration 1) corresponding to the first transmission requirement and a gap between a reselected resource 1 and a resource 2 being greater than or equal to the minimum gap, and re-determine a resource 1 from the re-determined resource selection range 1. If the resource selection range re-determined by considering the remaining LBT duration 1 and the gap between the reselected resource 1 and the resource 2 being greater than or equal to the minimum gap is empty, that is, a moment obtained by adding a current moment, the remaining LBT duration 1, and the minimum gap is later than a start time of the resource 2, the first terminal device needs to perform reselection for the resource 1 and the resource 2. Optionally, the first terminal device may re-determine the resource 1 and the resource 2 by using the remaining LBT duration 1 (optionally, a remaining LBT duration (denoted as a remaining LBT duration 2) corresponding to the second transmission requirement may be further used), to ensure that the requirement of the minimum gap is met between the resource 1 and the resource 2.

Optionally, when the first terminal device triggers re-determining of the resource corresponding to the $n^{th}$ transmission requirement, the first terminal device (PHY layer) may further determine whether the resource corresponding to the subsequent transmission requirement of the $n^{th}$ transmission requirement needs to be re-determined. For a determining condition, refer to the condition 1 and the condition 2 recorded in the embodiment shown in FIG. 3. Details are not described herein again.

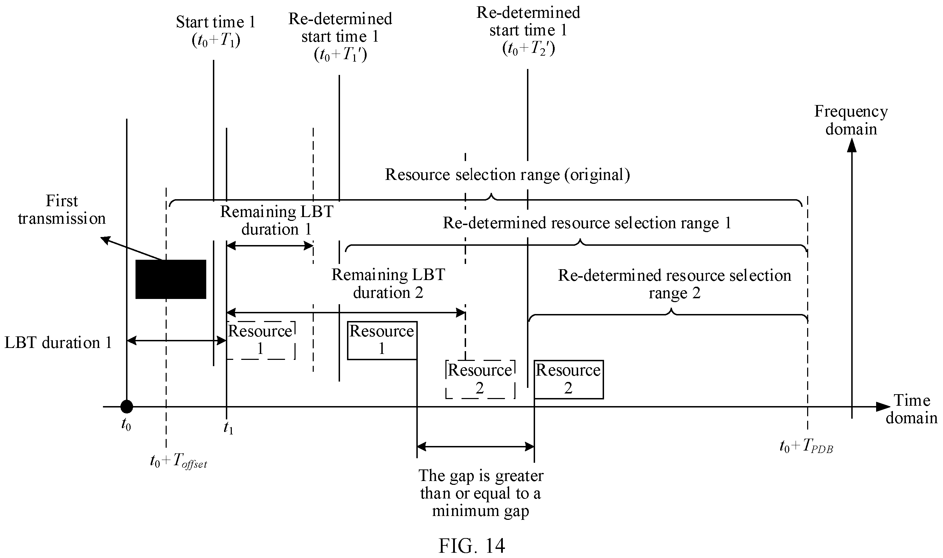

In this embodiment, for a process of re-determining, by the first terminal device, the resource corresponding to the subsequent transmission requirement of the $n^{th}$ transmission requirement, refer to descriptions of steps F1 and F2 in the embodiment shown in FIG. 3. Details are not described herein again. In FIG. 14, $T_1'$ meets the formula about $T_n'$ in step S2, and $T_2'$ meets the formula about $T_n'$ in step S2 or the formula about $T_k'$ in step F1.

Based on the resource configuration method provided in the embodiment shown in FIG. 3 and the methods provided in Embodiment 1 to Embodiment 4, this application further provides a resource configuration method.

In this method, when transmission requirements occur (that is, at $t_0$), the first terminal device may determine start times of resource selection ranges of the N transmission requirements by using the method provided in the foregoing embodiment. If a start time of a resource selection range of each transmission requirement does not exceed a third time (denoted as $t_3$), the first terminal device may continue to determine, based on the start times of the resource selection ranges of the N transmission requirements, resources corresponding to the N transmission requirements. For a process in which the first terminal device determines the resources corresponding to the N transmission requirements, refer to corresponding descriptions in the foregoing embodiment. Details are not described herein again.

The third time $t_3$ is a time after a third duration elapses since the time $t_0$ at which the transmission requirements occur on the first terminal device, and a value of the third duration is determined based on a data transmission delay of the first terminal device. The third duration may be denoted as $T_{PDB}$. Therefore, $t_3 = t_0 + T_{PDB}$. For example, $T_{PDB}$ may be equal to the data transmission delay, or may be less than the data transmission delay.

Because the start time of the resource selection range of each transmission requirement does not exceed the third time $t_3$, when the first terminal device transmits data on the N determined resources, it can be ensured that a data delay falls within a data transmission delay range of the first terminal device.

In an implementation, when there is at least one transmission requirement whose start time of a resource selection range exceeds the third time $t_3$ in the N transmission requirements, the first terminal device may stop the resource configuration process in the foregoing embodiment, and select another resource configuration manner.

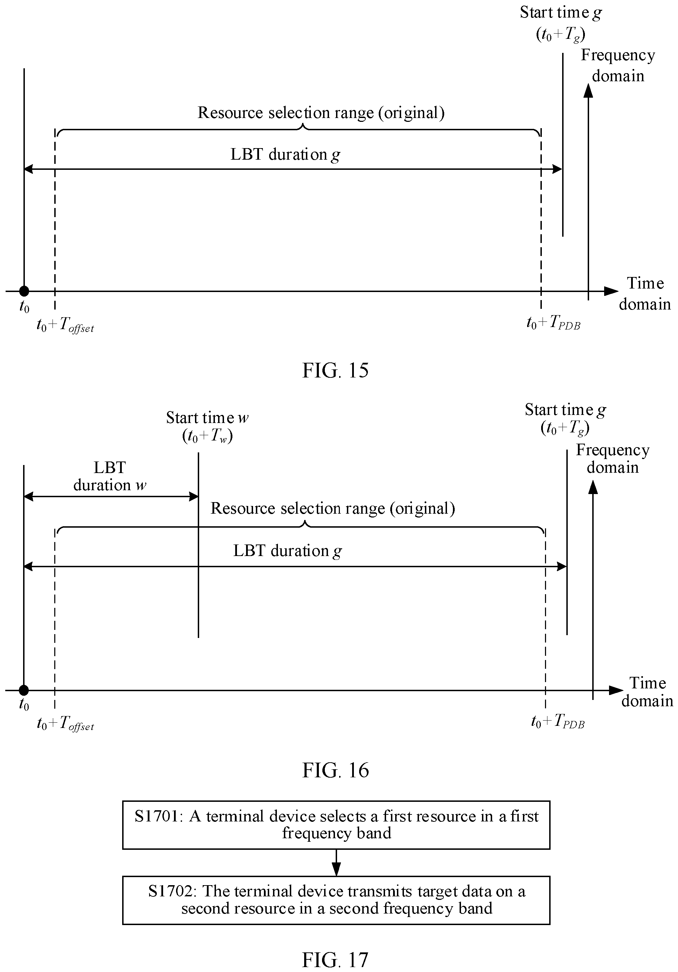

The following uses a $g^{th}$ transmission requirement in the N transmission requirements as an example for description. As shown in FIG. 15, when a start time of a resource selection range of the $g^{th}$ transmission requirement exceeds the third time $t_3$, the first terminal device may transmit data in, but not limited to, the following resource configuration manner. g is a positive integer, and $1 \leq g \leq N$. A start time g in FIG. 15 is the start time of the resource selection range of the $g^{th}$ transmission requirement.

Resource configuration manner 1: The first terminal device may send a first resource request to a second terminal device, and then receive first resource configuration information from the second terminal device. The first resource configuration information indicates a resource allocated by the second terminal device to the first terminal device, and a transmission resource occupied by the first resource request is pre-negotiated between the first terminal device and the second terminal device or agreed on in a protocol.

For example, the first resource request may be carried in a short control message (short control message). In this manner, after preempting a COT, the second terminal device may share a remaining COT with the first terminal device.

Resource configuration manner 2: The first terminal device may send a second resource request to a network device, and then receive second resource configuration information from the network device. The second resource configuration information indicates a resource allocated by the network device to the first terminal device.

Optionally, the second resource request may be a scheduling request (scheduling request, SR) or a buffer status report (buffer status report, BSR). In this manner, after preempting a COT, the network device may share a remaining COT with the first terminal device.

Resource configuration manner 3: The first terminal device may listen to a channel, and when the second terminal device sends data, actively send the data on a resource on which a remaining COT of the second terminal device is located.

The second terminal device is the receive end of the N transmission requirements of the first terminal device.

In another implementation, there are W transmission requirements whose start times of resource selection ranges do not exceed the third time in the N transmission requirements, and a start time of a resource selection range of another transmission requirement exceeds the third time, as shown in FIG. 16. Optionally, the first terminal device may continue to determine, based on the start times of the resource selection ranges of the W transmission requirements, resources corresponding to the W transmission requirements. For a process in which the first terminal device determines the resources corresponding to the W transmission requirements, refer to corresponding descriptions in the foregoing embodiment. Details are not described herein again. W is a positive integer less than N.

A start time w in FIG. 16 is a start time of a resource selection range of any one of the W transmission requirements, and a start time g is a start time of a resource selection range of any one of the N transmission requirements other than the W transmission requirements.

After transmitting the data on the resources corresponding to the W transmission requirements, the first terminal device determines, based on transmission results indicated by acknowledgment responses of the W transmission requirements, whether to continue to send the data on the resource on which the remaining COT of the second terminal device or the network device is located. When the transmission results indicated by the acknowledgment responses of the W transmission requirements indicate a data transmission success, the first terminal device does not need to seek another resource configuration manner. When the transmission results indicated by the acknowledgment responses of the W transmission requirements indicate a data transmission failure, the first terminal device may continue to transmit the data in any one of the foregoing resource configuration manners.

It should be further noted that the same or similar terms/parameters in FIG. 4 to FIG. 16 may be mutually referenced, and are not separately described in corresponding descriptions.

In the communication field, frequency bands with different bandwidths occupy different quantities of RBs, as shown in Table 1.

**Table 1 Configuration of quantities of RBs occupied by frequency bands with different bandwidths**

| SCS (kHz) | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|
| 15 | 25 | 52 | 79 | 106 | 133 | 160 | 188 | 216 | 242 | 270 | / | / | / | / | / |
| 30 | 11 | 24 | 38 | 51 | 65 | 78 | 92 | 106 | 119 | 133 | 162 | 189 | 217 | 245 | 273 |
| 60 | / | 11 | 18 | 24 | 31 | 38 | 44 | 51 | 58 | 65 | 79 | 93 | 107 | 121 | 135 |

Bandwidths of commonly used unlicensed spectrums include 20 MHz, 40 MHz, 60 MHz, and 80 MHz. As shown in Table 1, when an SCS is 30 kHz, quantities of RBs occupied by frequency bands with the bandwidths are 51, 106, 162, and 217 respectively. It is clear that, although the 40 MHz bandwidth is twice the 20 MHz bandwidth, the quantity of RBs occupied by the 40 MHz bandwidth is 106, which exceeds twice the quantity (that is, 51*2=102) of RBs occupied by the 20 MHz bandwidth. Therefore, RBs in one frequency band with the 40 MHz bandwidth cannot be directly invoked as RBs in two frequency bands with the 20 MHz bandwidth.

In addition, in unlicensed spectrums, no guard band (guard band) is required for transmission of 10 MHz and 20 MHz, but a guard band needs to be provided for transmission of a larger bandwidth. A current standard provides a solution for setting a guard band in frequency bands with different bandwidths, as shown in Table 2.

**Table 2**

| SCS (kHz) | 40 MHz | 60 MHz | 80 MHz | 1000 MHz |
|---|---|---|---|---|
| 15 | 105-6-105 (216) | / | / | / |
| 30 | 50-6-50 (106) | 50-6-50-6-50 (162) | 50-6-50-5-50-6-50 (217) | 50-6-50-6-49-6-50-6-50 (273) |
| 60 | 23-5-23 (51) | 23-5-23-5-23 (79) | 23-5-23-5-23-5-23 (107) | 23-5-23-5-23-5-23-5-23 (135) |

To resolve a problem of misalignment between quantities of RBs in frequency bands with different bandwidths, an embodiment of this application provides a communication method. According to this method, a communication device can implement resource mapping between two frequency bands with different bandwidths. The method can resolve a problem of RB number alignment between different bandwidths, and facilitate resource mapping in frequency domain. The method is applicable to an SL-U scenario. The following describes, with reference to a flowchart shown in FIG. 17, the method provided in this embodiment of this application.

S1701: A terminal device selects a first resource in a first frequency band.

S1702: The terminal device transmits target data on a second resource in a second frequency band.

A bandwidth of the first frequency band is greater than a bandwidth of the second frequency band, or the bandwidth of the first frequency band is less than the bandwidth of the second frequency band. There is a resource mapping relationship between a frequency domain location of the first resource and a frequency domain location of the second resource, and the resource mapping relationship is used to map the first resource to the second resource.

Optionally, in an SL-U system, if the terminal device reserves the first resource in the first frequency band to transmit the target data, and subsequently preempts a channel of the second frequency band through LBT, the terminal device may map the first resource into the second frequency band by using the foregoing method, to obtain the second resource, so that the target data can be transmitted on the preempted channel.

It should be noted that there is an intersection between a frequency range of the first frequency band and a frequency range of the second frequency band.

Before S1702, the terminal device may select the second resource from the second frequency band based on the resource mapping relationship and the frequency domain location of the first resource.

The first resource includes a first RB, and the second resource includes a second RB. The frequency domain location of the first resource includes an RB number of the first RB in the first frequency band, and the frequency domain location of the second resource includes an RB number of the second RB in the second frequency band. The resource mapping relationship indicates a mapping relationship between a number of an RB in the first frequency band and a number of an RB in the second frequency band.

In an implementation, the resource mapping relationship is described by using an example in which the bandwidth of the second frequency band is greater than the bandwidth of the first frequency band. The first frequency band includes L1 RBs, L1 is a positive integer, the bandwidth of the first frequency band is B1, the bandwidth of the second frequency band is B2, B2=X*B1, and X>1.

Optionally, when X is an integer, the second frequency band includes X subbands, a bandwidth of each subband is B1, the first frequency band is located in a $y^{th}$ subband in the X subbands, $1 \leq y \leq X$, and y is an integer.

In the resource mapping relationship, a number a of an RB in the first frequency band corresponds to a number (y-1)*L1+C+a of an RB in the second frequency band, where a is an integer, $0 \leq a < L1$, and C is a constant.

Alternatively, in the resource mapping relationship, a number L1-b of an RB in the first frequency band corresponds to a number y*L1+D-b of an RB in the second frequency band, where b is an integer, $0 < b \leq L1$, and D is a constant.

In another implementation, the resource mapping relationship is described by using an example in which the bandwidth of the first frequency band is greater than the bandwidth of the second frequency band. The second frequency band includes L2 RBs, L2 is a positive integer, the bandwidth of the first frequency band is B1, the bandwidth of the second frequency band is B2, B1 = X*B2, and X>1.

Optionally, when X is an integer, the first frequency band includes X subbands, a bandwidth of each subband is B2, the second frequency band is located in a $y^{th}$ subband in the X subbands, $1 \leq y \leq X$, and y is an integer.

In the resource mapping relationship, a number a of an RB in the second frequency band corresponds to a number (y-1)*L2+C+a of an RB in the first frequency band, where a is an integer, $0 \leq a < L2$, and C is a constant.

Alternatively, in the resource mapping relationship, a number L2-b of an RB in the second frequency band corresponds to a number y*L2+D-b of an RB in the first frequency band, where b is an integer, $0 < b \leq L2$, and D is a constant.

It should be noted that, in the foregoing two implementations, values of C and D are related to the bandwidth of the first frequency band and the bandwidth of the second frequency band. It can be learned from Table 1 and Table 2 that quantities of RBs included in frequency bands with different bandwidths and distribution of guard bands are fixed. Therefore, for two frequency bands with fixed bandwidths, the foregoing resource mapping relationship is also determinate, and specific values of C and D are related to quantities of RBs included in the two frequency bands and distribution of guard bands.

In this embodiment of this application, to transmit the target data, the terminal device may further perform the following steps:

P1: Determine, based on the frequency domain location of the first resource, a first target subchannel from a plurality of first subchannels corresponding to the first frequency band.

P2: Determine, based on the frequency domain location of the second resource, a second target subchannel from a plurality of second subchannels corresponding to the second frequency band.

P3: When a quantity of RBs occupied by the second target subchannel is greater than a quantity of RBs occupied by the first target subchannel, perform rate matching on an encoded signal based on the quantity of RBs occupied by the second target subchannel, to obtain a target signal; or when the quantity of RBs occupied by the second target subchannel is less than the quantity of RBs occupied by the first target subchannel, puncture the encoded signal based on the quantity of RBs occupied by the second target subchannel, to obtain a target signal.

The encoded signal is obtained by encoding the target data based on the quantity of RBs occupied by the first target subchannel.

Through the foregoing steps, the terminal device can further implement mapping between subchannels corresponding to different frequency bands.

Based on the target data obtained by the terminal device through P1 to P3, the terminal device may send the target signal on the second target subchannel, to transmit the target data.

In addition, based on the resource mapping relationship, when selecting a resource, the terminal device may further map a resource selected by another terminal device into a frequency band accessed by the terminal device, so that selection of the resource can be avoided, to avoid mutual interference between transmission of the terminal device and transmission of the another terminal device.

For example, in the SL-U system, the first terminal device performs access by using the first frequency band with the 20 MHz bandwidth and reserves 10 RBs: RBs 0 to 9. When the second terminal device performs access by using the second frequency band with the 40 MHz bandwidth and selects a resource, the second terminal device may determine, based on the resource mapping relationship between the first frequency band and the second frequency band from RBs occupied by the second frequency band, numbers of the RBs selected by the first terminal device, and avoid selecting RBs of these RB numbers.

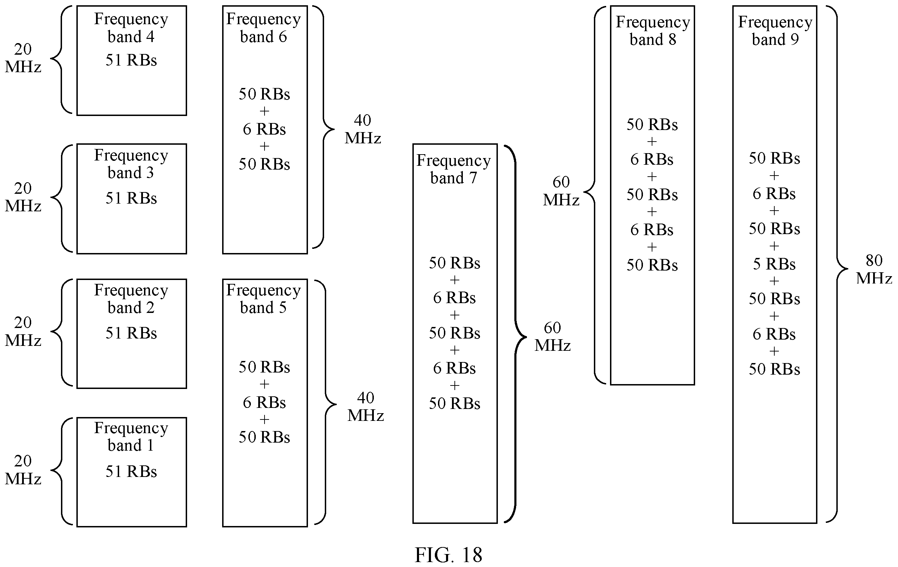

The following uses an SCS of 30 kHz as an example to describe resource mapping relationships between a frequency band with the 20 MHz bandwidth, a frequency band with the 40 MHz bandwidth, a frequency band with the 60 MHz bandwidth, and a frequency band with the 80 MHz bandwidth. FIG. 18 is a diagram of distribution of four 20 MHz frequency bands, two 40 MHz frequency bands, and two types of 60 MHz frequency bands in an 80 MHz frequency band.

Example 1: In each 20 MHz frequency band, 51 RBs are numbered from 0 to 50 in ascending order of frequencies. In each 40 MHz frequency band, 106 RBs are numbered from 0 to 105 in ascending order of frequencies.

A resource mapping relationship between 106 RBs in a 40 MHz frequency band 5 and 51 RBs in a 20 MHz frequency band 1 as well as 51 RBs in a 20 MHz frequency band 2 is as follows:

An RB 0 in the frequency band 5 corresponds to an RB 0 in the frequency band 1 (that is, lowest-numbered RBs are aligned), an RB 1 in the frequency band 5 corresponds to an RB 1 in the frequency band 1, and so on, until an RB 50 in the frequency band 5 corresponds to an RB 50 in the frequency band 1.

Four RBs (an RB 51 to an RB 54) after the RB 50 in the frequency band 5 do not correspond to any RB.

An RB 55 in the frequency band 5 corresponds to an RB 0 in the frequency band 2, an RB 56 in the frequency band 5 corresponds to an RB 1 in the frequency band 2, and so on, until an RB 105 in the frequency band 5 corresponds to an RB 50 in the frequency band 2 (that is, highest-numbered RBs are aligned).

Example 2: In each 20 MHz frequency band, 51 RBs are numbered from 0 to 50 in ascending order of frequencies. In each 60 MHz frequency band, 162 RBs are numbered from 0 to 161 in ascending order of frequencies.

A resource mapping relationship between RBs in a frequency band 7 and RBs in a frequency band 1, RBs in a frequency band 2, and RBs in a frequency band 3 is similar thereto, that is:

An RB 0 in the frequency band 7 corresponds to an RB 0 in the frequency band 1 (that is, lowest-numbered RBs are aligned), an RB 1 in the frequency band 7 corresponds to an RB 1 in the frequency band 1, and so on, until an RB 50 in the frequency band 7 corresponds to an RB 50 in the frequency band 1.

Four RBs (an RB 51 to an RB 54) after the RB 50 in the frequency band 7 do not correspond to any RB.

An RB 55 in the frequency band 7 corresponds to an RB 0 in the frequency band 2, an RB 56 in the frequency band 7 corresponds to an RB 1 in the frequency band 2, and so on, until an RB 105 in the frequency band 7 corresponds to an RB 50 in the frequency band 1.

Five RBs (an RB 106 to an RB 110) after the RB 105 in the frequency band 7 do not correspond to any RB.

An RB 111 in the frequency band 7 corresponds to an RB 0 in the frequency band 3, an RB 112 in the frequency band 7 corresponds to an RB 1 in the frequency band 3, and so on, until an RB 161 in the frequency band 7 corresponds to an RB 50 in the frequency band 3 (that is, highest-numbered RBs are aligned).

Example 3: In each 20 MHz frequency band, 51 RBs are numbered from 0 to 50 in ascending order of frequencies. In the 80 MHz frequency band, 217 RBs are numbered from 0 to 216 in ascending order of frequencies.

A resource mapping relationship between RBs in a frequency band 9 and RBs in a frequency band 1, RBs in a frequency band 2, RBs in a frequency band 3, and RBs in a frequency band 4 is similar thereto, that is:

An RB 0 in the frequency band 9 corresponds to an RB 0 in the frequency band 1 (that is, lowest-numbered RBs are aligned), an RB 1 in the frequency band 9 corresponds to an RB 1 in the frequency band 1, and so on, until an RB 50 in the frequency band 9 corresponds to an RB 50 in the frequency band 1.

Four RBs (an RB 51 to an RB 54) after the RB 50 in the frequency band 9 do not correspond to any RB.

An RB 55 in the frequency band 9 corresponds to an RB 0 in the frequency band 2, an RB 56 in the frequency band 9 corresponds to an RB 1 in the frequency band 2, and so on, until an RB 105 in the frequency band 5 corresponds to an RB 50 in the frequency band 1.

Five RBs (an RB 106 to an RB 110) after the RB 105 in the frequency band 9 do not correspond to any RB.

An RB 111 in the frequency band 9 corresponds to an RB 0 in the frequency band 3, an RB 112 in the frequency band 9 corresponds to an RB 1 in the frequency band 3, and so on, until an RB 161 in the frequency band 9 corresponds to an RB 50 in the frequency band 3.

Four RBs (an RB 162 to an RB 164) after the RB 161 in the frequency band 9 do not correspond to any RB.

An RB 165 in the frequency band 9 corresponds to an RB 0 in the frequency band 4, an RB 166 in the frequency band 9 corresponds to an RB 1 in the frequency band 4, and so on, until an RB 216 in the frequency band 9 corresponds to an RB 50 in the frequency band 4 (that is, highest-numbered RBs are aligned).

It should be further noted that, in the frequency band 1 to the frequency band 9 shown in FIG. 18, for a resource mapping relationships between RBs in different frequency bands, refer to the foregoing examples.

It should be noted that the foregoing example 1 to example 3 are examples, and do not constitute any limitation on the resource mapping relationship provided in this embodiment of this application. In addition, the foregoing examples do not limit a quantity of consecutive RBs in a frequency band with a relatively large bandwidth that do not correspond to any RB. For example, in a first resource mapping relationship, after the RB 0 to the RB 50 in the frequency band 9 correspond to the RB 0 to the RB 50 in the frequency band 1, one RB, two RBs, three RBs, four RBs, five RBs, or six RBs after the RB 50 in the frequency band 9 do not correspond to any RB, and correspondence to the RBs in the frequency band 2 starts from the RB 52, the RB 53, the RB 54, the RB 55, the RB 56, or the RB 57 in the frequency band 9. Similarly, after 51 consecutive RBs in the frequency band 9 one-to-one correspond to the 51 RBs in the frequency band 2, one RB, two RBs, three RBs, four RBs, five RBs, or six RBs in the frequency band 9 and after an RB corresponding to the RB 50 in the frequency band 2 do not correspond to any RB.

In addition, after performing resource mapping based on the resource mapping relationship, the terminal device further needs to perform mapping for transmission correspondence. For example, 10 RBs in a frequency band are used as one subchannel. In this case, 51 RBs in a 20 MHz frequency band may form five subchannels, respectively occupying an RB 0 to an RB 9, an RB 10 to an RB 19, an RB 20 to an RB 29, an RB 30 to an RB 39, and an RB 40 to an RB 50. A resource included in the 20 MHz frequency band may correspond to the following five subchannels in a 40 MHz/60 MHz/80 MHz frequency band: an RB 0 to an RB 9, an RB 10 to an RB 19, an RB 20 to an RB 29, an RB 30 to an RB 39, and an RB 40 to an RB 55 or an RB 50 to an RB 53 (a quantity of RBs occupied by a subchannel may be greater than 11).

It is clear that, because a quantity of RBs in the 40 MHz frequency band is greater than a sum of quantities of RBs included in two 20 MHz frequency bands, a quantity of RBs occupied by the fifth subchannel in the 40 MHz frequency band is different from a quantity of RBs occupied by the fifth subchannel in the 20 MHz frequency band. Therefore, when performing mapping between the fifth subchannel in the 40 MHz frequency band and the fifth subchannel in the 20 MHz frequency band, the terminal device needs to consider a problem caused by different quantities of RBs.

Example 1: An example in which the fifth subchannel of the 20 MHz frequency band (referred to as a first subchannel for short subsequently) is mapped to the fifth subchannel of the 40 MHz frequency band (referred to as a second subchannel for short subsequently) is used for description. The terminal device encodes to-be-transmitted target data based on the quantity of RBs occupied by the first subchannel, to obtain an encoded signal. Because the quantity of RBs occupied by the second subchannel is greater than the quantity of RBs occupied by the first subchannel, and the terminal device occupies more resources for transmission, rate matching needs to be performed on the encoded signal based on the quantity of RBs occupied by the second subchannel, to obtain a target signal. Finally, the terminal device sends the target signal on the second subchannel.

Example 2: An example in which the fifth subchannel of the 80 MHz frequency band (referred to as a first subchannel for short subsequently) is mapped to the fifth subchannel of the 20 MHz frequency band (referred to as a second subchannel for short subsequently) is used for description. A quantity of RBs occupied by the first subchannel may be 14, 16, or another quantity greater than 11. A quantity of RBs occupied by the second subchannel is 11. The terminal device encodes to-be-transmitted target data based on the quantity of RBs occupied by the first subchannel, to obtain an encoded signal. Because the quantity of RBs occupied by the second subchannel is less than the quantity of RBs occupied by the first subchannel, the terminal device needs to puncture the encoded signal based on the quantity of RBs occupied by the second subchannel, and discard a part of the signal to obtain a target signal. Finally, the terminal device sends the target signal on the second subchannel.

It should be further noted that each step in the foregoing embodiments may be performed by a corresponding device, or may be performed by a component such as a chip, a processor, or a chip system in the device. This is not limited in embodiments of this application. The foregoing embodiments are described only by using an example in which steps are executed by corresponding devices. In addition, specific implementations or examples in the foregoing embodiments constitute no limitation on the solutions provided in embodiments of this application.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or the two manners are combined for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, with reference to units and method steps of examples described in embodiments disclosed in this application, this application can be implemented by hardware or a combination of hardware and computer software. Whether a function is performed by hardware or hardware driven by computer software depends on particular application scenarios and design constraint conditions of the technical solutions.

It may be understood that, the network architecture and the application scenario described in embodiments of this application are intended to describe the technical solutions in embodiments of the present invention more clearly, but do not constitute a limitation on the technical solutions provided in embodiments of the present invention. A person of ordinary skill in the art may be aware that, with evolution of the network architecture and emergence of a new service, the technical solutions provided in embodiments of the present invention are also applicable to a similar technical problem.

It should be noted that the "step" in embodiments of this application is merely an example, which is a representation method used to better understand the embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, such as step sequence change, step combination, or step splitting, performed on this basis without affecting implementation of the overall solutions also falls within the scope disclosed in this application.

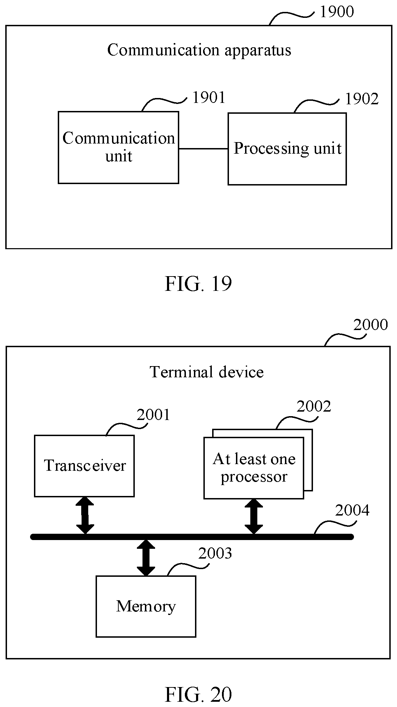

Based on a same technical concept, this application further provides a communication apparatus. The communication apparatus may be used in a terminal device in an SL-U system. The communication apparatus is configured to implement the method provided in the foregoing embodiments. With reference to FIG. 19, the communication apparatus 1900 includes a communication unit 1901 and a processing unit 1902.

The communication unit 1901 is configured to receive and send signals. Optionally, the communication unit 1901 may include a transceiver.

In an implementation, the communication apparatus 1900 is used in the first terminal device in the embodiment shown in FIG. 3 or any one of Embodiment 1 to Embodiment 4. The processing unit 1902 is configured to perform the following steps:

obtaining listen before talk LBT durations corresponding to N transmission requirements, where N is an integer greater than or equal to 1; and
determining N resources based on the LBT durations corresponding to the N transmission requirements, where the N resources are in one-to-one correspondence with the N transmission requirements, and when N is an integer greater than 1, a gap between any two resources is greater than or equal to a minimum gap.

Optionally, the processing unit 1902 is specifically configured to:

determine an $n^{th}$ start time based on an LBT duration corresponding to an $n^{th}$ transmission requirement, where n is a positive integer, $1 \leq n \leq N$, and the $n^{th}$ start time is a start time of a resource selection range of the $n^{th}$ transmission requirement; and
determine, based on the $n^{th}$ start time, a resource corresponding to the $n^{th}$ transmission requirement.

Optionally, the processing unit 1902 may include but is not limited to a PHY layer processing unit and a MAC layer processing unit.

Optionally, the PHY layer processing unit is specifically configured to determine the $n^{th}$ start time based on the LBT duration corresponding to the $n^{th}$ transmission requirement.

Optionally, the PHY layer processing unit is further configured to send the $n^{th}$ start time to the MAC layer processing unit.

The MAC layer processing unit is specifically configured to: determine the resource selection range of the $n^{th}$ transmission requirement based on the $n^{th}$ start time; and determine, within the resource selection range of the $n^{th}$ transmission requirement, the resource corresponding to the $n^{th}$ transmission requirement.

Optionally, the PHY layer processing unit is further configured to: determine the resource selection range of the $n^{th}$ transmission requirement based on the $n^{th}$ start time; and send the resource selection range of the $n^{th}$ transmission requirement to the MAC layer processing unit.

The MAC layer processing unit is specifically configured to determine, within the resource selection range of the $n^{th}$ transmission requirement, the resource corresponding to the $n^{th}$ transmission requirement.

Optionally, the PHY layer processing unit is further configured to: determine a start time unit of the resource selection range of the $n^{th}$ transmission requirement based on the $n^{th}$ start time; and send the start time unit of the resource selection range of the $n^{th}$ transmission requirement and a candidate resource set to the MAC layer processing unit.

The MAC layer processing unit is specifically configured to determine, in the candidate resource set based on the start time unit of the resource selection range of the $n^{th}$ transmission requirement, the resource corresponding to the $n^{th}$ transmission requirement.

Optionally, the PHY layer processing unit is further configured to: determine a candidate resource set of the $n^{th}$ transmission requirement based on the $n^{th}$ start time; and send the candidate resource set of the $n^{th}$ transmission requirement to the MAC layer processing unit.

The MAC layer processing unit is specifically configured to determine, in the candidate resource set of the $n^{th}$ transmission requirement, the resource corresponding to the $n^{th}$ transmission requirement.

Any candidate resource set includes at least one candidate resource.

Optionally, the $n^{th}$ start time meets $t_0 + T_n$, and $T_n$ meets the following formula:

$$T_n = max\left\{\left\lceil\frac{t_{n,LBT}}{t_s}\right\rceil \times t_s, T_{offset}\right\};$$

or

$$T_n = max\left\{\left\lceil\frac{t_{n,LBT}+t_{cpe}}{t_s}\right\rceil \times t_s, T_{offset}\right\},$$

where

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; and $t_{cpe}$ is a duration of a cyclic prefix extension.

Optionally, the processing unit 1902 is specifically configured to:

determine the $n^{th}$ start time based on the LBT duration corresponding to the $n^{th}$ transmission requirement and a resource corresponding to a preceding transmission requirement of the $n^{th}$ transmission requirement, where the preceding transmission requirement of the $n^{th}$ transmission requirement is a transmission requirement whose resource is located before the resource of the $n^{th}$ transmission requirement in the N transmission requirements.

Optionally, the $n^{th}$ start time meets $t_0 + T_n$, and $T_n$ meets the following formula:

$$T_n = max \left\{ \left\lceil \frac{t_{n,LBT}}{t_s} \right\rceil \times t_s + \sum_{i=1}^{n-1} t_{i,R}, T_{offset} \right\};$$

or

$$T_n = max \left\{ \left\lceil \frac{t_{n,LBT}}{t_s} + \sum_{i=1}^{n-1} S_{i,R} \right\rceil \times t_s, T_{offset} \right\};$$

or

$$T_n = max \left\{ \left\lceil \frac{t_{n,LBT} + t_{cpe}}{t_s} \right\rceil \times t_s + \sum_{i=1}^{n-1} t_{i,R}, T_{offset} \right\};$$

or

$$T_n = max \left\{ \left\lceil \frac{t_{n,LBT} + t_{cpe}}{t_s} + \sum_{i=1}^{n-1} S_{i,R} \right\rceil \times t_s, T_{offset} \right\}.$$

, where

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an $i^{th}$ preceding transmission requirement of the $n^{th}$ transmission requirement; $\sum_{i=1}^{n-1} t_{i,R}$ is a sum of durations of resources corresponding to n - 1 preceding transmission requirements of the $n^{th}$ transmission requirement; $S_{i,R}$ is a quantity of time units occupied by the resource corresponding to the $i^{th}$ preceding transmission requirement of the $n^{th}$ transmission requirement; and $\sum_{i=1}^{n-1} S_{i,R}$ is a sum of quantities of time units occupied by the resources corresponding to the n - 1 preceding transmission requirements of the $n^{th}$ transmission requirement.

Optionally, the processing unit 1902 is specifically configured to:

determine the $n^{th}$ start time based on the LBT duration corresponding to the $n^{th}$ transmission requirement, a resource corresponding to a preceding transmission requirement of the $n^{th}$ transmission requirement, and a resource corresponding to a preceding acknowledgment response of the $n^{th}$ transmission requirement.

The preceding transmission requirement of the n ' transmission requirement is a transmission requirement whose resource is located before the resource of the $n^{th}$ transmission requirement in the N transmission requirements, and the preceding acknowledgment response of the $n^{th}$ transmission requirement includes an acknowledgment response that is to be received by the first terminal device or another terminal device before the resource corresponding to the $n^{th}$ transmission requirement.

Optionally, the preceding acknowledgment response of the $n^{th}$ transmission requirement includes an acknowledgment response of the preceding transmission requirement of the $n^{th}$ transmission requirement; or

the preceding acknowledgment response of the n $^{th}$ transmission requirement includes the acknowledgment response of the preceding transmission requirement of the $n^{th}$ transmission requirement and an acknowledgment response of at least one first transmission, where the first transmission is a transmission that is detected by the first terminal device and for which no acknowledgment response is received.

Optionally, the $n^{th}$ start time meets $t_0 + T_n$, and $T_n$ meets the following formula:

$$T_n = max \left\{ \left\lceil \frac{t_{n,LBT}}{t_s} \right\rceil \times t_s + \sum_{i=1}^{n-1} t_{i,R} + t_{n,HARQ}, T_{offset} \right\};$$

; or

$$T_n = max\left\{\left\lceil\frac{t_{n,LBT}}{t_s} + \sum_{i=1}^{n-1} S_{i,R} + S_{n,HARQ}\right\rceil \times t_s, T_{offset}\right\};$$

or

$$T_n = max\left\{\left\lceil\frac{t_{n,LBT}+t_{cpe}}{t_s}\right\rceil \times t_s + \sum_{i=1}^{n-1} t_{i,R} + t_{n,HARQ}, T_{offset}\right\};$$

; or

$$T_n = max\left\{\left\lceil\frac{t_{n,LBT}+t_{cpe}}{t_s} + \sum_{i=1}^{n-1} S_{i,R} + S_{n,HARQ}\right\rceil \times t_s, T_{offset}\right\},$$

where
$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an $i^{th}$ preceding transmission requirement of the $n^{th}$ transmission requirement; $\sum_{i=1}^{n-1} t_{i,R}$ is a sum of durations of resources corresponding to n - 1 preceding transmission requirements of the $n^{th}$ transmission requirement; $t_{n,HARQ}$ is a total duration of the resource corresponding to the preceding acknowledgment response of the $n^{th}$ transmission requirement; $S_{i,R}$ is a quantity of time units occupied by the resource corresponding to the $i^{th}$ preceding transmission requirement of the $n^{th}$ transmission requirement; $\sum_{i=1}^{n-1} S_{i,R}$ is a sum of quantities of time units occupied by the resources corresponding to the n - 1 preceding transmission requirements of the $n^{th}$ transmission requirement; and $S_{n,HARQ}$ is a total quantity of time units occupied by the resource corresponding to the preceding acknowledgment response of the $n^{th}$ transmission requirement.

Optionally, the processing unit 1902 is further configured to:

in a process of transmitting data on the N resources by using the communication unit 1901, determine that the LBT duration corresponding to the $n^{th}$ transmission requirement has not ended;
re-determine an $n^{th}$ start time based on a remaining LBT duration corresponding to the $n^{th}$ transmission requirement; and
re-determine, based on the re-determined $n^{th}$ start time, a resource corresponding to the $n^{th}$ transmission requirement.

Optionally, the determining that the LBT duration corresponding to the $n^{th}$ transmission requirement has not ended includes at least one of the following:

determining, at a first time, that the LBT duration corresponding to the $n^{th}$ transmission requirement has not ended; or
determining that a first duration is less than the remaining LBT duration corresponding to the $n^{th}$ transmission requirement.

The first time is located before a start time of the resource corresponding to the $n^{th}$ transmission requirement, or the first time is the start time of the resource corresponding to the $n^{th}$ transmission requirement; and the first duration is a duration between the first time and the start time of the resource corresponding to the $n^{th}$ transmission requirement.

Optionally, the processing unit 1902 is further configured to:

before transmitting the data on the N resources by using the communication unit 1901, determine a $k^{th}$ start time based on an LBT duration corresponding to a $k^{th}$ transmission requirement, where the $k^{th}$ transmission requirement is a subsequent transmission requirement of the $n^{th}$ transmission requirement, k is a positive integer, n < $k \le$ N, and the $k^{th}$ start time is a start time of a resource selection range of the $k^{th}$ transmission requirement; and determine, based on the $k^{th}$ start time, a resource corresponding to the $k^{th}$ transmission requirement;
after determining that the LBT duration corresponding to the $n^{th}$ transmission requirement has not ended, re-determine a $k^{th}$ start time based on a remaining LBT duration corresponding to the $k^{th}$ transmission requirement, or re-determine a $k^{th}$ start time based on the remaining LBT duration corresponding to the $n^{th}$ transmission requirement and the minimum gap; and
re-determine, based on the re-determined $k^{th}$ start time, a resource corresponding to the $k^{th}$ transmission requirement, where a gap between any two re-determined resources is greater than or equal to the minimum gap.

Optionally, the processing unit 1902 is further configured to:

before transmitting the data on the N resources by using the communication unit 1901, determine a $k^{th}$ start time based on an LBT duration corresponding to a $k^{th}$ transmission requirement, where the $k^{th}$ transmission requirement is a subsequent transmission requirement of the $n^{th}$ transmission requirement, k is a positive integer, $n < k \leq N$, and the $k^{th}$ start time is a start time of a resource selection range of the $k^{th}$ transmission requirement; and determine, based on the $k^{th}$ start time, a resource corresponding to the $k^{th}$ transmission requirement;

after determining that the LBT duration corresponding to the $n^{th}$ transmission requirement has not ended, determine that a second duration is less than a remaining LBT duration corresponding to the $k^{th}$ transmission requirement, or determine that a second time after the second duration elapses since the first time is later than the start time of the resource corresponding to the $k^{th}$ transmission requirement, where the second duration is a sum of the remaining LBT duration corresponding to the $n^{th}$ transmission requirement and (k - n) minimum gaps, and the first time is a time at which it is determined that the LBT duration corresponding to the $n^{th}$ transmission requirement has not ended;

re-determine a $k^{th}$ start time based on the remaining LBT duration corresponding to the $k^{th}$ transmission requirement, or re-determine a $k^{th}$ start time based on the remaining LBT duration corresponding to the $n^{th}$ transmission requirement and the minimum gap; and

re-determine, based on the re-determined $k^{th}$ start time, a resource corresponding to the $k^{th}$ transmission requirement, where a gap between any two re-determined resources is greater than or equal to the minimum gap.

Optionally, the processing unit 1902 is specifically configured to:

determine N start times based on the LBT durations corresponding to the N transmission requirements, where a $j^{th}$ start time in the N start times is a start time of a resource selection range of a $j^{th}$ transmission requirement in the N transmission requirements; and

when none of the N start times exceeds a third time, determine, based on the $n^{th}$ start time, the resource corresponding to the $n^{th}$ transmission requirement.

The third time is a time after a third duration elapses since the time at which the transmission requirements occur on the first terminal device, and a value of the third duration is determined based on a data transmission delay of the first terminal device.

Optionally, the processing unit 1902 is further configured to:

when a $g^{th}$ start time exceeds the third time, send a first resource request to a second terminal device by using the communication unit 1901; and receive first resource configuration information from the second terminal device by using the communication unit 1901, where the first resource configuration information indicates a resource allocated by the second terminal device to the first terminal device, the second terminal device is a receive end of the N transmission requirements, and a transmission resource occupied by the first resource request is pre-negotiated between the first terminal device and the second terminal device or agreed on in a protocol; or

when the $g^{th}$ start time exceeds the third time, send a second resource request to a network device by using the communication unit 1901; and receive second resource configuration information from the network device by using the communication unit 1901, where the second resource configuration information indicates a resource allocated by the network device to the first terminal device; or

when the $g^{th}$ start time exceeds the third time, send the data on a resource on which a remaining channel occupancy time COT of the second terminal device is located, where the second terminal device is the receive end of the N transmission requirements.

$g$ is a positive integer, and $1 \leq g \leq N$.

Optionally, the processing unit 1902 is specifically configured to:

obtain LBT durations corresponding to M transmission requirements, where the M transmission requirements include the N transmission requirements, and M is an integer greater than N; and

determine M start times based on the LBT durations corresponding to the M transmission requirements, where an $m^{th}$ start time in the M start times is a start time of a resource selection range of an $m^{th}$ transmission requirement in the M transmission requirements, m is a positive integer, and $1 \leq m \leq M$.

In the M transmission requirements, start times of resource selection ranges of the N transmission requirements do not exceed a third time, and a start time of a resource selection range of a transmission requirement other than the N transmission requirements exceeds the third time, where the third time is a time after a third duration elapses since a time at which the transmission requirements occur on the first terminal device, and a value of the third duration is determined based on a data transmission delay of the first terminal device.

The processing unit 1902 is further configured to:

after transmitting the data on the N resources by using the communication unit 1901, determine, based on transmission results indicated by acknowledgment responses of the N resources, whether to continue to send the data on a resource on which a remaining COT of a second terminal device or a network device is located, where the second terminal device is a receive end of the N transmission requirements.

Optionally, the processing unit 1902 is further configured to:

when the transmission requirements occur on the first terminal device, start to perform LBT; or
in a process of determining the N resources, start to perform LBT; or
after the N resources are determined, start to perform LBT.

Optionally, the PHY layer processing unit is further configured to:

when the PHY layer processing unit sends the $n^{th}$ start time to the MAC layer processing unit, start to perform LBT; or
when the PHY layer processing unit sends the resource selection range of the $n^{th}$ transmission requirement to the MAC layer processing unit, start to perform LBT; or
when the PHY layer processing unit sends the start time unit of the resource selection range of the $n^{th}$ transmission requirement and the candidate resource set to the MAC layer processing unit, start to perform LBT; or
when the PHY layer processing unit sends the candidate resource set of the $n^{th}$ transmission requirement to the MAC layer processing unit, start to perform LBT; or
when the MAC layer processing unit notifies the PHY layer processing unit of the resource corresponding to the $n^{th}$ transmission requirement, start to perform LBT.

In an implementation, the communication apparatus 1900 is used in the terminal device in the embodiment shown in FIG. 17. The processing unit 1902 is configured to perform the following steps:

selecting a first resource from a first frequency band; and
transmitting target data on a second resource in a second frequency band by using the communication unit 1901.

A bandwidth of the first frequency band is greater than a bandwidth of the second frequency band, or the bandwidth of the first frequency band is less than the bandwidth of the second frequency band. There is a resource mapping relationship between a frequency domain location of the first resource and a frequency domain location of the second resource, and the resource mapping relationship is used to map the first resource to the second resource.

Optionally, the processing unit 1902 is further configured to:

select the second resource from the second frequency band based on the resource mapping relationship and the frequency domain location of the first resource.

The first resource includes a first resource block RB, and the second resource includes a second RB.

The frequency domain location of the first resource includes an RB number of the first RB in the first frequency band, and the frequency domain location of the second resource includes an RB number of the second RB in the second frequency band.

The resource mapping relationship indicates a mapping relationship between a number of an RB in the first frequency band and a number of an RB in the second frequency band.

Optionally, the first frequency band includes L1 RBs, L1 is a positive integer, the bandwidth of the first frequency band is B1, the bandwidth of the second frequency band is B2, $B2=X*B1$, and $X>1$.

The second frequency band includes X subbands, a bandwidth of each subband is B1, the first frequency band is located in a $y^{th}$ subband in the X subbands, $1 \leq y \leq X$, and y is an integer.

In the resource mapping relationship, a number a of an RB in the first frequency band corresponds to a number $(y-1)*L1+C+a$ of an RB in the second frequency band, where a is an integer, $0 \leq a < L1$, and C is a constant.

Alternatively, in the resource mapping relationship, a number L1-b of an RB in the first frequency band corresponds to a number $y*L1+D-b$ of an RB in the second frequency band, where b is an integer, $0 < b \leq L1$, and D is a constant.

Optionally, the second frequency band includes L2 RBs, L2 is a positive integer, the bandwidth of the first frequency band is B1, the bandwidth of the second frequency band is B2, $B1 = X*B2$, and $X>1$.

The first frequency band includes X subbands, a bandwidth of each subband is B2, the second frequency band is located in a $y^{th}$ subband in the X subbands, $1 \leq y \leq X$, and y is an integer.

In the resource mapping relationship, a number a of an RB in the second frequency band corresponds to a number (y-1)*L2+C+a of an RB in the first frequency band, where a is an integer, $0 \leq a < L2$, and C is a constant.

Alternatively, in the resource mapping relationship, a number L2-b of an RB in the second frequency band corresponds to a number y*L2+D-b of an RB in the first frequency band, where b is an integer, $0 < b \leq L2$, and D is a constant.

Optionally, the processing unit 1902 is further configured to:

determine, based on the frequency domain location of the first resource, a first target subchannel from a plurality of first subchannels corresponding to the first frequency band;

determine, based on the frequency domain location of the second resource, a second target subchannel from a plurality of second subchannels corresponding to the second frequency band; and

when a quantity of RBs occupied by the second target subchannel is greater than a quantity of RBs occupied by the first target subchannel, perform rate matching on an encoded signal based on the quantity of RBs occupied by the second target subchannel, to obtain a target signal; or

when the quantity of RBs occupied by the second target subchannel is less than the quantity of RBs occupied by the first target subchannel, puncture the encoded signal based on the quantity of RBs occupied by the second target subchannel, to obtain a target signal.

The encoded signal is obtained by encoding the target data based on the quantity of RBs occupied by the first target subchannel.

The processing unit 1902 is specifically configured to:

send the target signal on the second target subchannel by using the communication unit 1901.

Based on the foregoing embodiments, an embodiment of this application further provides a terminal device. The terminal device may be used in an SL-U system, may implement the method in the foregoing embodiments, and has a function of the communication apparatus 1900. With reference to FIG. 20, the terminal device 2000 includes: a transceiver 2001, at least one processor 2002, and a memory 2003. The transceiver 2001, the processor 2002, and the memory 2003 are connected to each other.

Optionally, the transceiver 2001, the at least one processor 2002, and the memory 2003 are connected to each other by using a bus 2004. The bus 2004 may be a peripheral component interconnect (peripheral component interconnect, PCI) bus, an extended industry standard architecture (extended industry standard architecture, EISA) bus, and or the like. The bus may be classified into an address bus, a data bus, a control bus, or the like. For ease of representation, only one bold line is used to represent the bus in FIG. 20, but this does not mean that there is only one bus or only one type of bus.

The transceiver 2001 is configured to receive and send signals, to implement communication with another terminal device or a network device. Optionally, the transceiver 2001 may be implemented by using a radio frequency apparatus and an antenna.

The at least one processor 2002 includes at least an RRC layer processing unit and a MAC layer processing unit. The RRC layer processing unit is configured to perform a step of an RRC layer to implement a function of the RRC layer. The MAC layer processing unit is configured to perform a step of a MAC layer to implement a function of the MAC layer.

For a function of the processor 2002 and specific functions of the RRC layer processing unit and the MAC layer processing unit, refer to descriptions in the foregoing embodiments. Details are not described herein again.

The processor 2002 may be a central processing unit (central processing unit, CPU), a network processor (network processor, NP), a combination of a CPU and an NP, or the like. The processor 2002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 2002 may implement the foregoing functions by using hardware or certainly by using hardware executing corresponding software.

The memory 2003 is configured to store program instructions and the like. Specifically, the program instructions may include program code, and the program code includes computer operation instructions. The memory 2003 may include a random access memory (random access memory, RAM), and may further include a non-volatile memory (non-volatile memory), for example, at least one magnetic disk memory. The processor 2002 executes the program instructions stored in the memory 2003, to implement the foregoing functions, thereby implementing the method provided in the foregoing embodiments.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

Optionally, the computer may include but is not limited to a terminal device.

The storage medium may be any usable medium that can be accessed by the computer. For example but not for limitation, the computer-readable medium may include a RAM, a ROM, an EEPROM, a CD-ROM, or another optical disc storage or disk storage medium, or another magnetic storage device, or any other medium that can carry or store expected program code in a form of instructions or a data structure and that can be accessed by the computer.

Based on the foregoing embodiments, an embodiment of this application further provides a chip. The chip is configured to read a computer program stored in a memory, to implement the method provided in the foregoing embodiments. Optionally, the chip may include a processor and a memory. The processor is coupled to the memory, and configured to read the computer program stored in the memory, to implement the method provided in the foregoing embodiments.

Based on the foregoing embodiments, an embodiment of this application provides a chip system. The chip system includes a processor, configured to support a computer apparatus in implementing a function related to the terminal device in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a resource configuration method and a device. According to this method, a first terminal device may reserve N resources based on LBT durations corresponding to N transmission requirements. Because the LBT durations are considered, cases in which an LBT duration of a transmission requirement has not ended when a resource corresponding to the transmission requirement arrives can be reduced, so that a probability that the first terminal device can transmit data on the resource corresponding to the transmission requirement can be increased, thereby ensuring communication efficiency of the terminal device.

A person skilled in the art should understand that an embodiment of this application may be provided as a method, a system, or a computer program product. Therefore, this application may be implemented in a form of a hardware only embodiment, a software only embodiment, or an embodiment with a combination of software and hardware. In addition, this application may be implemented in a form of a computer program product that is implemented on one or more computer-usable storage media (including but not limited to a magnetic disk memory, a CD-ROM, an optical memory, and the like) including computer-usable program code.

This application is described with reference to flowcharts and/or block diagrams of the method, the device (system), and the computer program product according to this application. It should be understood that computer program instructions may be used to implement each process and/or block in the flowcharts and/or block diagrams and a combination of processes and/or blocks in the flowcharts and/or block diagrams. These computer program instructions may be provided for a general-purpose computer, a special-purpose computer, an embedded processor, or a processor of another programmable data processing device to generate a machine, so that instructions executed by the computer or the processor of the another programmable data processing device generate an apparatus for implementing a specific function in one or more processes in the flowcharts and/or one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or one or more blocks in the block diagrams.

The computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or one or more blocks in the block diagrams.

It is clear that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A resource configuration method, applied to a first terminal device, wherein the method comprises:

obtaining listen before talk LBT durations corresponding to N transmission requirements, wherein N is an integer greater than or equal to 1; and

determining N resources based on the LBT durations corresponding to the N transmission requirements, wherein the N resources are in one-to-one correspondence with the N transmission requirements, and when N is an integer greater than 1, a gap between any two resources is greater than or equal to a minimum gap.

2. The method according to claim 1, wherein the determining N resources based on the LBT durations corresponding to the N transmission requirements comprises:

determining an $n^{th}$ start time based on an LBT duration corresponding to an $n^{th}$ transmission requirement, wherein n is a positive integer, $1 \le n \le N$, and the $n^{th}$ start time is a start time of a resource selection range of the $n^{th}$ transmission requirement; and

determining, based on the $n^{th}$ start time, a resource corresponding to the $n^{th}$ transmission requirement.

3. The method according to claim 2, wherein the first terminal device comprises a physical PHY layer and a medium access control MAC layer;

the determining an $n^{th}$ start time based on an LBT duration corresponding to an $n^{th}$ transmission requirement comprises:

determining, by the PHY layer, the $n^{th}$ start time based on the LBT duration corresponding to the $n^{th}$ transmission requirement; and

the determining, based on the $n^{th}$ start time, a resource corresponding to the $n^{th}$ transmission requirement comprises:

sending, by the PHY layer, the $n^{th}$ start time to the MAC layer; determining, by the MAC layer, the resource selection range of the $n^{th}$ transmission requirement based on the $n^{th}$ start time; and determining, by the MAC layer within the resource selection range of the $n^{th}$ transmission requirement, the resource corresponding to the $n^{th}$ transmission requirement; or

determining, by the PHY layer, the resource selection range of the $n^{th}$ transmission requirement based on the $n^{th}$ start time; sending, by the PHY layer, the resource selection range of the $n^{th}$ transmission requirement to the MAC layer; and determining, by the MAC layer within the resource selection range of the $n^{th}$ transmission requirement, the resource corresponding to the $n^{th}$ transmission requirement; or

determining, by the PHY layer, a start time unit of the resource selection range of the $n^{th}$ transmission requirement based on the $n^{th}$ start time; sending, by the PHY layer, the start time unit of the resource selection range of the $n^{th}$ transmission requirement and a candidate resource set to the MAC layer; and determining, by the MAC layer in the candidate resource set based on the start time unit of the resource selection range of the $n^{th}$ transmission requirement, the resource corresponding to the $n^{th}$ transmission requirement; or

determining, by the PHY layer, a candidate resource set of the $n^{th}$ transmission requirement based on the $n^{th}$ start time; sending, by the PHY layer, the candidate resource set of the $n^{th}$ transmission requirement to the MAC layer; and determining, by the MAC layer in the candidate resource set of the $n^{th}$ transmission requirement, the resource corresponding to the $n^{th}$ transmission requirement, wherein

any candidate resource set comprises at least one candidate resource.

4. The method according to claim 2 or 3, wherein the $n^{th}$ start time meets $t_0 + T_n$, and $T_n$ meets the following formula:

$$T_n = max\left\{\left\lceil\frac{t_{n,LBT}}{t_s}\right\rceil \times t_s, T_{offset}\right\};$$

or

$$T_n = max\left\{\left\lceil\frac{t_{n,LBT}+t_{cpe}}{t_s}\right\rceil \times t_s, T_{offset}\right\},$$

wherein

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; and $t_{cpe}$ is a duration of a cyclic prefix extension.

5. The method according to claim 2 or 3, wherein the determining an $n^{th}$ start time based on an LBT duration corresponding to an $n^{th}$ transmission requirement comprises:
determining the $n^{th}$ start time based on the LBT duration corresponding to the $n^{th}$ transmission requirement and a resource corresponding to a preceding transmission requirement of the $n^{th}$ transmission requirement, wherein the preceding transmission requirement of the $n^{th}$ transmission requirement is a transmission requirement whose resource is located before the resource of the $n^{th}$ transmission requirement in the N transmission requirements.

6. The method according to claim 5, wherein the $n^{th}$ start time meets $t_0 + T_n$, and $T_n$ meets the following formula:

$$T_n = max\left\{\left\lceil\frac{t_{n,LBT}}{t_s}\right\rceil \times t_s + \sum_{i=1}^{n-1} t_{i,R}, T_{offset}\right\};$$

or

$$T_n = max\left\{\left\lceil\frac{t_{n,LBT}}{t_s} + \sum_{i=1}^{n-1} S_{i,R}\right\rceil \times t_s, T_{offset}\right\};$$

or

$$T_n = max\left\{\left\lceil\frac{t_{n,LBT}+t_{cpe}}{t_s}\right\rceil \times t_s + \sum_{i=1}^{n-1} t_{i,R}, T_{offset}\right\};$$

; or

$$T_n = max\left\{\left\lceil\frac{t_{n,LBT}+t_{cpe}}{t_s} + \sum_{i=1}^{n-1} S_{i,R}\right\rceil \times t_s, T_{offset}\right\},$$

wherein
$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an $i^{th}$ preceding transmission requirement of the $n^{th}$ transmission requirement; $\sum_{i=1}^{n-1} t_{i,R}$ is a sum of durations of resources corresponding to n - 1 preceding transmission requirements of the $n^{th}$ transmission requirement; $S_{i,R}$ is a quantity of time units occupied by the resource corresponding to the $i^{th}$ preceding transmission requirement of the $n^{th}$ transmission requirement; and $\sum_{i=1}^{n-1} S_{i,R}$ is a sum of quantities of time units occupied by the resources corresponding to the n - 1 preceding transmission requirements of the $n^{th}$ transmission requirement.

7. The method according to claim 2 or 3, wherein the determining an $n^{th}$ start time based on an LBT duration corresponding to an $n^{th}$ transmission requirement comprises:

determining the $n^{th}$ start time based on the LBT duration corresponding to the $n^{th}$ transmission requirement, a resource corresponding to a preceding transmission requirement of the $n^{th}$ transmission requirement, and a resource corresponding to a preceding acknowledgment response of the $n^{th}$ transmission requirement, wherein the preceding transmission requirement of the $n^{th}$ transmission requirement is a transmission requirement whose resource is located before the resource of the $n^{th}$ transmission requirement in the N transmission requirements, and the preceding acknowledgment response of the $n^{th}$ transmission requirement comprises an acknowledgment response that is to be received by the first terminal device or another terminal device before the resource corresponding to the $n^{th}$ transmission requirement.

8. The method according to claim 7, wherein

the preceding acknowledgment response of the $n^{th}$ transmission requirement comprises an acknowledgment response of the preceding transmission requirement of the $n^{th}$ transmission requirement; or
the preceding acknowledgment response of the $n^{th}$ transmission requirement comprises the acknowledgment response of the preceding transmission requirement of the $n^{th}$ transmission requirement and an acknowledgment response of at least one first transmission, wherein the first transmission is a transmission that is detected by the first terminal device and for which no acknowledgment response is received.

9. The method according to claim 7 or 8, wherein the $n^{th}$ start time meets $t_0 + T_n$, and $T_n$ meets the following formula:

$$T_n = max\left\{\left\lceil\frac{t_{n,LBT}}{t_s}\right\rceil \times t_s + \sum_{i=1}^{n-1} t_{i,R} + t_{n,HARQ}, T_{offset}\right\};$$

or

$$T_n = max\left\{\left\lceil\frac{t_{n,LBT}}{t_s} + \sum_{i=1}^{n-1} S_{i,R} + S_{n,HARQ}\right\rceil \times t_s, T_{offset}\right\};$$

or

$$T_n = max\left\{\left\lceil\frac{t_{n,LBT}+t_{cpe}}{t_s}\right\rceil \times t_s + \sum_{i=1}^{n-1} t_{i,R} + t_{n,HARQ}, T_{offset}\right\};$$

; or

$$T_n = max\left\{\left\lceil\frac{t_{n,LBT}+t_{cpe}}{t_s} + \sum_{i=1}^{n-1} S_{i,R} + S_{n,HARQ}\right\rceil \times t_s, T_{offset}\right\},$$

wherein

$t_0$ is a time at which the transmission requirements occur on the first terminal device; $t_{n,LBT}$ is the LBT duration corresponding to the $n^{th}$ transmission requirement; $t_s$ is a length of a time unit for scheduling a data transmission resource; $T_{offset}$ is an offset; $t_{cpe}$ is a duration of a cyclic prefix extension; $t_{i,R}$ is a duration of a resource corresponding to an $i^{th}$ preceding transmission requirement of the $n^{th}$ transmission requirement; $\sum_{i=1}^{n-1} t_{i,R}$ is a sum of durations of resources corresponding to n - 1 preceding transmission requirements of the $n^{th}$ transmission requirement; $t_{n,HARQ}$ is a total duration of the resource corresponding to the preceding acknowledgment response of the $n^{th}$ transmission requirement; $S_{i,R}$ is a quantity of time units occupied by the resource corresponding to the $i^{th}$ preceding transmission requirement of the $n^{th}$ transmission requirement; $\sum_{i=1}^{n-1} S_{i,R}$ is a sum of quantities of time units occupied by the resources corresponding to the n - 1 preceding transmission requirements of the $n^{th}$ transmission requirement; and $S_{n,HARQ}$ is a total quantity of time units occupied by the resource corresponding to the preceding acknowledgment response of the $n^{th}$ transmission requirement.

10. The method according to any one of claims 2 to 9, wherein the method further comprises:

in a process of transmitting data on the N resources, determining that the LBT duration corresponding to the $n^{th}$ transmission requirement has not ended;
re-determining an $n^{th}$ start time based on a remaining LBT duration corresponding to the $n^{th}$ transmission requirement; and
re-determining, based on the re-determined $n^{th}$ start time, a resource corresponding to the $n^{th}$ transmission requirement.

11. The method according to claim 10, wherein the determining that the LBT duration corresponding to the $n^{th}$ transmission requirement has not ended comprises at least one of the following:

determining, at a first time, that the LBT duration corresponding to the $n^{th}$ transmission requirement has not ended; or
determining that a first duration is less than the remaining LBT duration corresponding to the $n^{th}$ transmission requirement, wherein
the first time is located before a start time of the resource corresponding to the $n^{th}$ transmission requirement, or the first time is the start time of the resource corresponding to the $n^{th}$ transmission requirement; and the first duration is a duration between the first time and the start time of the resource corresponding to the $n^{th}$ transmission requirement.

**12.** The method according to claim 10 or 11, wherein
before the transmitting data on the N resources, the method further comprises:

determining a $k^{th}$ start time based on an LBT duration corresponding to a $k^{th}$ transmission requirement, wherein the $k^{th}$ transmission requirement is a subsequent transmission requirement of the $n^{th}$ transmission requirement, k is a positive integer, $n < k \leq N$, and the $k^{th}$ start time is a start time of a resource selection range of the $k^{th}$ transmission requirement; and
determining, based on the $k^{th}$ start time, a resource corresponding to the $k^{th}$ transmission requirement; and
after the determining that the LBT duration corresponding to the $n^{th}$ transmission requirement has not ended, the method further comprises:

re-determining a $k^{th}$ start time based on a remaining LBT duration corresponding to the $k^{th}$ transmission requirement, or re-determining a $k^{th}$ start time based on the remaining LBT duration corresponding to the $n^{th}$ transmission requirement and the minimum gap; and
re-determining, based on the re-determined $k^{th}$ start time, a resource corresponding to the $k^{th}$ transmission requirement, wherein a gap between any two re-determined resources is greater than or equal to the minimum gap.

**13.** The method according to claim 10 or 11, wherein
before the transmitting data on the N resources, the method further comprises:

determining a $k^{th}$ start time based on an LBT duration corresponding to a $k^{th}$ transmission requirement, wherein the $k^{th}$ transmission requirement is a subsequent transmission requirement of the $n^{th}$ transmission requirement, k is a positive integer, $n < k \leq N$, and the $k^{th}$ start time is a start time of a resource selection range of the $k^{th}$ transmission requirement; and
determining, based on the $k^{th}$ start time, a resource corresponding to the $k^{th}$ transmission requirement; and
after the determining that the LBT duration corresponding to the $n^{th}$ transmission requirement has not ended, the method further comprises:

determining that a second duration is less than a remaining LBT duration corresponding to the $k^{th}$ transmission requirement, or determining that a second time after the second duration elapses since the first time is later than the start time of the resource corresponding to the $k^{th}$ transmission requirement, wherein the second duration is a sum of the remaining LBT duration corresponding to the $n^{th}$ transmission requirement and (k - n) minimum gaps, and the first time is a time at which it is determined that the LBT duration corresponding to the $n^{th}$ transmission requirement has not ended;
re-determining a $k^{th}$ start time based on the remaining LBT duration corresponding to the $k^{th}$ transmission requirement, or re-determining a $k^{th}$ start time based on the remaining LBT duration corresponding to the $n^{th}$ transmission requirement and the minimum gap; and
re-determining, based on the re-determined $k^{th}$ start time, a resource corresponding to the $k^{th}$ transmission requirement, wherein a gap between any two re-determined resources is greater than or equal to the minimum gap.

**14.** The method according to any one of claims 2 to 13, wherein
the determining an $n^{th}$ start time based on an LBT duration corresponding to an $n^{th}$ transmission requirement comprises:

determining N start times based on the LBT durations corresponding to the N transmission requirements, wherein a $j^{th}$ start time in the N start times is a start time of a resource selection range of a $j^{th}$ transmission requirement in the N transmission requirements; and
the determining, based on the $n^{th}$ start time, a resource corresponding to the $n^{th}$ transmission requirement comprises:

when none of the N start times exceeds a third time, determining, based on the $n^{th}$ start time, the resource corresponding to the $n^{th}$ transmission requirement, wherein
the third time is a time after a third duration elapses since the time at which the transmission requirements occur on the first terminal device, and a value of the third duration is determined based on a data transmission delay of the first terminal device.

**15.** The method according to claim 14, wherein the method further comprises:

when a $g^{th}$ start time exceeds the third time, sending a first resource request to a second terminal device; and receiving first resource configuration information from the second terminal device, wherein the first resource configuration information indicates a resource allocated by the second terminal device to the first terminal device, the second terminal device is a receive end of the N transmission requirements, and a transmission resource occupied by the first resource request is pre-negotiated between the first terminal device and the second terminal device or agreed on in a protocol; or

when the $g^{th}$ start time exceeds the third time, sending a second resource request to a network device; and receiving second resource configuration information from the network device, wherein the second resource configuration information indicates a resource allocated by the network device to the first terminal device; or

when the $g^{th}$ start time exceeds the third time, sending the data on a resource on which a remaining channel occupancy time COT of the second terminal device is located, wherein the second terminal device is the receive end of the N transmission requirements, wherein

$g$ is a positive integer, and $1 \leq g \leq N$.

**16.** The method according to claim 2, wherein the obtaining LBT durations corresponding to N transmission requirements comprises:

obtaining LBT durations corresponding to M transmission requirements, wherein the M transmission requirements comprise the N transmission requirements, and M is an integer greater than N;

the determining an $n^{th}$ start time based on an LBT duration corresponding to an $n^{th}$ transmission requirement comprises:

determining M start times based on the LBT durations corresponding to the M transmission requirements, wherein an $m^{th}$ start time in the M start times is a start time of a resource selection range of an $m^{th}$ transmission requirement in the M transmission requirements, m is a positive integer, and $1 \leq m \leq M$;

in the M transmission requirements, start times of resource selection ranges of the N transmission requirements do not exceed a third time, and a start time of a resource selection range of a transmission requirement other than the N transmission requirements exceeds the third time, wherein the third time is a time after a third duration elapses since a time at which the transmission requirements occur on the first terminal device, and a value of the third duration is determined based on a data transmission delay of the first terminal device; and the method further comprises:

after transmitting data on the N resources, determining, based on transmission results indicated by acknowledgment responses of the N resources, whether to continue to send the data on a resource on which a remaining COT of a second terminal device or a network device is located, wherein the second terminal device is a receive end of the N transmission requirements.

**17.** The method according to any one of claims 1 to 16, wherein the method further comprises:

when the transmission requirements occur on the first terminal device, starting to perform LBT; or

in a process of determining the N resources, starting to perform LBT; or

after the N resources are determined, starting to perform LBT.

**18.** The method according to claim 3, wherein the method further comprises:

when the PHY layer sends the $n^{th}$ start time to the MAC layer, starting to perform LBT; or

when the PHY layer sends the resource selection range of the $n^{th}$ transmission requirement to the MAC layer, starting to perform LBT; or

when the PHY layer sends the start time unit of the resource selection range of the $n^{th}$ transmission requirement and the candidate resource set to the MAC layer, starting to perform LBT; or

when the PHY layer sends the candidate resource set of the $n^{th}$ transmission requirement to the MAC layer, starting to perform LBT; or

when the MAC layer notifies the PHY layer of the resource corresponding to the $n^{th}$ transmission requirement, starting to perform LBT.

**19.** A communication apparatus, comprising:

a communication unit, configured to receive and send signals; and
a processing unit, configured to perform the method according to any one of claims 1 to 18.

20. A terminal device, comprising:

a transceiver, configured to receive and send signals;
a memory, configured to store program instructions and data; and
a processor, configured to read the program instructions and the data in the memory, to implement the method according to any one of claims 1 to 18.

21. A computer-readable storage medium, wherein the computer-readable storage medium stores a computer program, and when the computer program is run on a computer, the computer is enabled to perform the method according to any one of claims 1 to 18.

22. A chip, wherein the chip comprises a processor and a memory, and the processor is coupled to the memory, and configured to read a computer program stored in the memory, to perform the method according to any one of claims 1 to 18.

EP 4 543 119 A1

Sensing window

Resource selection range

Frequency domain

$t_0$

$t_0 + T_{offset}$

Resource 1

Resource 2

Resource 3

$t_0 + T_{PDB}$

Time domain

The gap is greater than or equal to a minimum gap

The gap is greater than or equal to the minimum gap

FIG. 1

FIG. 2

First terminal device

Second terminal device

S301: Obtain LBT durations corresponding to N transmission requirements

S302: Determine N resources based on the LBT durations corresponding to the N transmission requirements

Transmit data on the N resources

FIG. 3

EP 4 543 119 A1

Sensing window

Resource selection range (original)

Frequency domain

LBT duration 3

Resource 3

LBT duration 1

Resource 1

LBT duration 2

Resource 2

Time domain

$t_0$

$t_0 + T_{offset}$

$t_0 + T_{PDB}$

The gap is greater than or equal to a minimum gap

The gap is greater than or equal to the minimum gap

FIG. 4

Start time 1 $(t_0+T_1)$    Start time 2 $(t_0+T_2)$    Start time 3 $(t_0+T_3)$

Frequency domain

Sensing window

Resource selection range (original)

Resource selection range 3

LBT duration 3

Resource 3

Resource selection range 1

LBT duration 1

Resource 1

Resource selection range 2

LBT duration 2

Resource 2

$t_0$

$t_0+T_{offset}$

$t_0+T_{PDB}$

Time domain

The gap is greater than or equal to a minimum gap

The gap is greater than or equal to the minimum gap

FIG. 5

Frequency domain

Time domain

Start time 1 ($t_0+T_1$)  Start time 2 ($t_0+T_2$)  Start time 3 ($t_0+T_3$)

Resource selection range (original)

Resource selection range 3

Resource 3

Resource selection range 2

Resource 2

Resource selection range 1

Resource 1

Sensing window

LBT duration 3

LBT duration 1

LBT duration 2

$t_0$

$t_0+T_{offset}$

$t_0+T_{PDB}$

Minimum gap

Minimum gap

FIG. 6

FIG. 7

EP 4 543 119 A1

FIG. 8

FIG. 9

Start time 1
$(t_0+T_1)$

Start time 2
$(t_0+T_2)$

Start time 3
$(t_0+T_3)$

Frequency
domain

Resource selection range (original)

Resource selection
range 3

First
transmission

LBT duration 3

Resource
1

Resource
2

Resource
3

Resource selection range 1

LBT duration 1

Resource
1

LBT duration 2

Resource
1

Resource
2

Resource selection range 2

Time
domain

$t_0$

$t_0+T_{offset}$

$t_0+T_{PDB}$

The gap is greater
than or equal to a
minimum gap

The gap is greater
than or equal to
the minimum gap

HARQ of the first
transmission

HARQ of the first
transmission requirement

HARQ of the second
transmission requirement

FIG. 10

FIG. 11

FIG. 12

EP 4 543 119 A1

Start time 1
$(t_0 + T_1)$

Frequency
domain

Resource selection range (original)

First
transmission

Remaining LBT
duration 1

Remaining LBT
duration 2

LBT duration 1

Resource
1

Resource
1

Resource
2

Resource
2

Time
domain

$t_0$

$t_1$

$t_0 + T_{offset}$

The gap is greater
than or equal to a
minimum gap

$t_0 + T_{PDB}$

FIG. 13

FIG. 14

Start time $g$
$(t_0 + T_g)$

Frequency
domain

Resource selection range (original)

LBT duration $g$

$t_0$

$t_0 + T_{offset}$

$t_0 + T_{PDB}$

Time
domain

## FIG. 15

Start time $w$
$(t_0 + T_w)$

Start time $g$
$(t_0 + T_g)$

Frequency
domain

LBT
duration $w$

Resource selection range (original)

LBT duration $g$

$t_0$

$t_0 + T_{offset}$

$t_0 + T_{PDB}$

Time
domain

## FIG. 16

S1701: A terminal device selects a first resource in a first
frequency band

S1702: The terminal device transmits target data on a
second resource in a second frequency band

## FIG. 17

20
MHz { Frequency
band 4
51 RBs

Frequency
band 6

50 RBs
+
6 RBs
+
50 RBs
} 40
MHz

20
MHz { Frequency
band 3
51 RBs

20
MHz { Frequency
band 2
51 RBs

Frequency
band 5

50 RBs
+
6 RBs
+
50 RBs
} 40
MHz

20
MHz { Frequency
band 1
51 RBs

Frequency
band 7

50 RBs
+
6 RBs
+
50 RBs
+
6 RBs
+
50 RBs
} 60
MHz

Frequency
band 8

50 RBs
+
6 RBs
+
50 RBs
+
6 RBs
+
50 RBs
} 60
MHz

Frequency
band 9

50 RBs
+
6 RBs
+
50 RBs
+
5 RBs
+
50 RBs
+
6 RBs
+
50 RBs
} 80
MHz

FIG. 18

1900

Communication apparatus

1901

Communication unit

1902

Processing unit

FIG. 19

2000

Terminal device

2001

Transceiver

2002

At least one processor

2004

2003

Memory

FIG. 20

## INTERNATIONAL SEARCH REPORT

| | International application No. |
|---|---|
| | **PCT/CN2023/106363** |

### A. CLASSIFICATION OF SUBJECT MATTER

H04W 72/0446(2023.01)i

According to International Patent Classification (IPC) or to both national classification and IPC

### B. FIELDS SEARCHED

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 侧链路, 侧行, 长, 时, 时长, 初传, 重传, 多, 个, 确定, 选择, 资源, 预留, lbt, sidelink, multiple, n, resource, some, time, minimum gap, reserv+, retransmit+, determin+, select+

### C. DOCUMENTS CONSIDERED TO BE RELEVANT

| Category* | Citation of document, with indication, where appropriate, of the relevant passages | Relevant to claim No. |
|---|---|---|
| A | WO 2021217438 A1 (GUANGDONG OPPO MOBILE TELECOMMUNICATIONS CORP., LTD.) 04 November 2021 (2021-11-04) <br> description, p. 9, and figure 8 | 1-22 |
| A | CN 110324910 A (HUAWEI TECHNOLOGIES CO., LTD.) 11 October 2019 (2019-10-11) <br> entire document | 1-22 |
| A | WO 2021126402 A1 (QUALCOMM INC.) 24 June 2021 (2021-06-24) <br> entire document | 1-22 |
| A | INTERDIGITAL, INC. "SL Channel Access in Unlicensed Spectrum" <br> *3GPP TSG RAN WG1 #109-e R1-2203645*, 20 May 2022 (2022-05-20), <br> entire document | 1-22 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 September 2023** | **27 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

<table>
<tr><th colspan="2">INTERNATIONAL SEARCH REPORT<br>Information on patent family members</th><th colspan="2">International application No.<br><br>**PCT/CN2023/106363**</th></tr>
<tr><th>Patent document<br>cited in search report</th><th>Publication date<br>(day/month/year)</th><th>Patent family member(s)</th><th>Publication date<br>(day/month/year)</th></tr>
<tr><td>WO 2021217438 A1</td><td>04 November 2021</td><td>EP 4145927 A1</td><td>08 March 2023</td></tr>
<tr><td></td><td></td><td>US 2023047819 A1</td><td>16 February 2023</td></tr>
<tr><td></td><td></td><td>CN 115399027 A</td><td>25 November 2022</td></tr>
<tr><td>CN 110324910 A</td><td>11 October 2019</td><td>WO 2019185010 A1</td><td>03 October 2019</td></tr>
<tr><td>WO 2021126402 A1</td><td>24 June 2021</td><td>US 2021195649 A1</td><td>24 June 2021</td></tr>
<tr><td></td><td></td><td>TW 202127951 A</td><td>16 July 2021</td></tr>
<tr><td></td><td></td><td>CN 114788377 A</td><td>22 July 2022</td></tr>
<tr><td></td><td></td><td>KR 20220117870 A</td><td>24 August 2022</td></tr>
<tr><td></td><td></td><td>BR 112022011302 A2</td><td>06 September 2022</td></tr>
<tr><td></td><td></td><td>IN 202227030473 A</td><td>30 September 2022</td></tr>
<tr><td></td><td></td><td>EP 4079065 A1</td><td>26 October 2022</td></tr>
</table>

Form PCT/ISA/210 (patent family annex) (July 2022)

**EP 4 543 119 A1**

**REFERENCES CITED IN THE DESCRIPTION**

**Patent documents cited in the description**

- CN 202210824434
- CN 202210963173